(19) **Europäisches Patentamt**

**European Patent Office**

**Office européen des brevets**

(11) **EP 1 398 952 A2**

(12) # EUROPEAN PATENT APPLICATION

(43) Date of publication:
**17.03.2004 Bulletin 2004/12**

(51) Int Cl.[7]: **H04N 1/409**

(21) Application number: **03255554.2**

(22) Date of filing: **05.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **12.09.2002 JP 2002266889**

(71) Applicant: **KONICA CORPORATION**
**Tokyo (JP)**

(72) Inventors:
• **Ikeda, Chizuko**
  **Hino-shi, Tokyo 191-8511 (JP)**
• **Ito, Tsukasa**
  **Hino-shi, Tokyo 191-8511 (JP)**
• **Takano, Hiroaki**
  **Hino-shi, Tokyo 191-8511 (JP)**

(74) Representative: **Nicholls, Michael John**
**J.A. KEMP & CO.**
**14, South Square**
**Gray's Inn**
**London WC1R 5JJ (GB)**

(54) **Method and apparatus for image processing**

(57)   An image processing method of producing visual image-referred data, comprising a large region and detail signal producing step of producing large region signals and detail signals by processing inputted-image data; a storing step of storing at least the large region signals and the detail signals in a memory medium; and an image processing step of obtaining the large region signals and the detail signals from the memory medium and producing visual image-referred data by applying an image processing process for the obtained large region and detail signals in order to optimize an visual image formation on an output medium.

FIG. 5

EP 1 398 952 A2

**Description**

**BACKGROUND OF THE INVENTION**

The present invention relates to an image recording method and image recording apparatus by which an image data is recorded to form an optimum viewing image on an output medium, and to an image processing method which is conducted for forming an optimum viewing image on an output medium and an image processing apparatus, and to a recording medium in which each program of its image recording or image processing is recorded, and its program.

Nowadays, a display and print method of a digital image data photographed by a photographing device are diversified in such a manner that it is distributed via a recording device such as a CD-R, floppy disk, or memory card, or the internet, and displayed on a display monitor such as a CRT, liquid crystal display, plasma display, or on a display device such as a small sized liquid crystal monitor of a carrying phone, or printed as a hard copy image by using an output device such as a digital printer, inkjet printer, or thermal printer.

Further, when a digital image data is displayed and outputted for the purpose of viewing, various image processing represented by a gradation adjustment, luminance adjustment, color balance adjustment, and sharpness emphasis are commonly conducted so that a desired image can be obtained on the display monitor or hard copy used for the viewing, and the development of the image processing technology opens ones eyes wide with wonder.

Under a background of the diversity of such an image display and print method, and the development of an image processing method, particularly, recently, an image processing is conducted on a digital image data, in which a digital image which is photographed by a general personal user by using a digital camera, or a film image which is photographed by a silver halide camera, is obtained as a digital image by an image pick-up equipment such as a scanner, and it becomes common that a processed image is outputted and viewed, or presented on a home page on the internet, or printed as a post card and enjoyed in such a manner that it is used for the greeting in the new year, and it strikes root as a culture.

As a result of the study of such a recent cultural background, and the content of image processing conducted by a general user, dealers to whom the image processing is required (actually, operators who conduct the processing) can not finely presume the condition of the finishing for which the customer desires, but it becomes clear that, when the general user conducts the processing by himself, because the target image which coincides with his taste is clear, the degree of the image processing is frequently changed until it reaches the target image, and the image processing is repeatedly conducted again. Further, it becomes clear that, in the image processing conducted by a general user, there are many cases of gradation conversion processing (tone rendering) including the local printing which controls the impression of the whole image at the time of viewing.

Further, when the image processing is conducted again in such a manner that the degree of the image processing is changed, because a plurality of similar image data files in which the processing content or the degree of processing is different although the scene is the same, are generated, it becomes clear that the consideration is necessary also on the recording method of the image data, simultaneously with the effect of the image processing. However, the conventional already existing technology does not pay the consideration on such a recent circumstance, conditions, and the usability of the general user.

Recently, in the image processing engineering relating to a gradation conversion processing, an engineering by which an input image is separated into a low frequency component and high frequency component by a low pass filter, and the control signal in the same pixel is calculated from the slope of the low frequency component of each pixel position, and the high frequency component of the same pixel position is multiplied by the control signal, and is separated into a texture signal in which the high frequency component is the main, and a pedestal signal in which the low frequency component, formed of difference of the original value of the same pixel position and the texture signal value, is the main, and after the tone compression processing is conducted on the pedestal signal, it is added to the texture signal, is disclosed (for example, refer to the patent references 1 - 7).

Although, in the engineering disclosed in the patent, in order to suppress the ringing generated when the tone compression processing is conducted, a separation process by which the input image is separated into 2 kinds of signals, is included, in the case where re-doing of the processing in which the general user is assumed, is conducted each time, the separation process should be repeated every re-doing, and the processing load until it reaches the target image is large, and the consideration for the general user is not paid.

[Patent reference 1]

Japanese Tokkai No. 2000-75852

[Patent reference 2]

Japanese Tokkai No. 2000-187728

[Patent reference 3]

Japanese Tokkai No. 2000-207546

[Patent reference 4]

Japanese Tokkai No. 2000-261824

[Patent reference 5]

Japanese Tokkai No. 2001-216511

[Patent reference 6]

Japanese Tokkai No. 2001-216512

[Patent reference 7]

Japanese Tokkai No. 2001-229377

## SUMMARY OF THE INVENTION

The object of the present invention is to provide an image recording method, image recording apparatus, image processing method, image processing apparatus, recording medium and program, in which, when a general user conducts an image processing on an input image by user himself, for example, a correction processing relating to the gradation by which the impression of the whole viewing image is controlled at the time of the viewing is conducted, while the effective processing effects are maintained, and the change of the degree of processing or the change to the processing method of the different processing content although the same effect is an object, is made easy, and the re-structure of an input image or the image in which the processing is on the half way is easily possible.
The above object can be attained by the following method.

(1) An image processing method of producing visual image-referred data, comprisises:

a large region and detail signal producing step of producing large region signals and detail signals by processing inputted-image data;
a recording step of recording at least the large region signals and the detail signals in a recording medium; and
an image processing step of obtaining the large region signals and the detail signals from the recording medium and producing visual image-referred data by applying an image processing process for the obtained large region and detail signals in order to optimize an visual image formation on an output medium.

(2) In the image processing method of (1), the image processing step obtains the large region signals and the detail signals and produces revised-visual image-referred data by applying another image processing process for the obtained large region and detail signals.
(3) In the image processing method of (1), the image processing step obtains the large region signals and the detail signals, produces another large region signals and another detail signals from the obtained large region and detail signals and produces revised-visual image-referred data from the another large region signals and the another detail signals.
(4) In the image processing method of (1), the large region and detail signal producing step produces input luminance signals and input color signals by processing the inputted-image data and produces large region luminance signals and detail luminance signals instead of the large region signals and the detail signals, the recording step records at least the large region luminance signals, the detail luminance signals and the input color signals in the recording medium, and the image processing step obtains the large region luminance signals, the detail luminance signals and the input color signals from the recording medium and produces visual image-referred data from the large region luminance signals, the detail luminance signals and the input color signals.

(5) In the image processing method of (1), the large region and detail signal producing step produces color-converted input luminance signals and color-converted input color signals by conducting a color gamut converting process for the inputted-image data and produces color-converted large region luminance signals and color-converted detail luminance signals instead of the large region signals and the detail signals, the recording step records at least the color-converted large region luminance signals, the color-converted detail luminance signals and the color-converted input color signals in the recording medium, and the image processing step obtains the color-converted large region luminance signals, the color-converted detail luminance signals and the color-converted input color signals from the recording medium and produces visual image-referred data from the color-converted large region luminance signals, the color-converted detail luminance signals and the color-converted input color signals.

**BRIEF DESCRIPTION OF THE DRAWINGS**

Fig. 1 is an external appearance perspective view of an image recording apparatus 1 in an embodiment to which the present invention is applied.
Fig. 2 is an outline structural view showing a function of the image recording apparatus 1 in Fig. 1.
Fig. 3 is a view showing an outline structure inside an image processing section 70 in Fig. 2.
Fig. 4 is a flowchart showing the image recording processing conducted by an image adjustment processing section 70b in Fig. 3 in the first embodiment.
Fig. 5 is a flowchart showing the image processing conducted by the image adjustment processing section 70b in Fig. 3 in the first embodiment.
Fig. 6 is a flowchart showing the image re-structuring processing conducted by the image adjustment processing section 70b in Fig. 3 in the first embodiment.
Fig. 7 is a flowchart showing the image recording processing conducted by the image adjustment processing section 70b in Fig. 3 in the second embodiment.
Fig. 8 is a flowchart showing the image processing conducted by the image adjustment processing section 70b in Fig. 3 in the second embodiment.
Fig. 9 is a flowchart showing the image re-structuring processing conducted by the image adjustment processing section 70b in Fig. 3 in the second embodiment.
Fig. 10 is a flowchart showing the image recording processing conducted by the image adjustment processing section 70b in Fig. 3 in the third embodiment.
Fig. 11 is a flowchart showing the image processing conducted by the image adjustment processing section 70b in Fig. 3 in the third embodiment.
Fig. 12 is a flowchart showing the image re-structuring processing conducted by the image adjustment processing section 70b in Fig. 3 in the third embodiment.
Fig. 13 is a flowchart showing the image recording processing conducted by the image adjustment processing section 70b in Fig. 3 in the fourth embodiment.
Fig. 14 is a flowchart showing the image processing conducted by the image adjustment processing section 70b in Fig. 3 in the fourth embodiment.
Fig. 15 is a flowchart showing the image re-structuring processing conducted by the image adjustment processing section 70b in Fig. 3 in the fourth embodiment.
Fig. 16 is a flowchart showing the image recording processing conducted by the image adjustment processing section 70b in Fig. 3 in the fifth embodiment.
Fig. 17 is a flowchart showing the image processing conducted by the image adjustment processing section 70b in Fig. 3 in the fifth embodiment.
Fig. 18 is a flowchart showing the image re-structuring processing conducted by the image adjustment processing section 70b in Fig. 3 in the fifth embodiment.
Fig. 19 is a flowchart showing the image recording processing conducted by the image adjustment processing section 70b in Fig. 3 in the sixth embodiment.
Fig. 20 is a flowchart showing the image processing conducted by the image adjustment processing section 70b in Fig. 3 in the sixth embodiment.
Fig. 21 is a flowchart showing the image re-structuring processing conducted by the image adjustment processing section 70b in Fig. 3 in the sixth embodiment.
Fig. 22 is a flowchart showing a processing in the seventh embodiment.
Fig. 23 is a flowchart showing another processing in the seventh embodiment.

**DETAIL DESCRIPTION OF THE PREFERRED EMBODIMENT**

Hereinafter, the preferred embodiment of the present invention will be described.

The method described in Item 1 is that an image recording method to conduct, on inputted-image data, the image processing to optimize formation of a visual image on an output medium, and thereby to record on a recording medium the image data for producing visual image-referred data, wherein a process to produce large region signals and detail signals from the inputted-image data and a process to record at least the large region signals and detail signals on the recording medium are provided.

The method described in Item 2 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a detail converting processing on at least the detail signals to make them to be converted-detail signals, a process to produce difference-detail signals by using the detail signals and the converted-detail signals, and a process to record at least the large region signals, the converted-detail signals and the difference-detail signals on the recording medium.

The method described in Item 3 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to produce visual image-referred data from the large region signals and the detail signals and a process to record at least the large region signals, the detail signals and the visual image-referred data on the recording medium.

The method described in Item 4 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a detail converting processing on at least the detail signals to make them to be converted-detail signals, a process to produce difference-detail signals by using the detail signals and the converted-detail signals, a process to produce visual image-referred data from the large region signals and the converted-detail signals and a process to record at least the large region signals, the converted and detail signals, the difference-detail signals and the visual image-referred data on the recording medium.

The apparatus described in Item 59 is that an image recording apparatus to conduct, on inputted-image data, the image processing to optimize formation of a visual image on an output medium, and thereby to record on a recording medium the image data for producing visual image-referred data, wherein a device to produce large region signals and detail signals from the inputted-image data and a device to record at least the large region signals and detail signals on the recording medium are provided.

The apparatus described in Item 60 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a detail converting processing on at least the detail signals to make them to be converted-detail signals, a device to produce difference-detail signals by using the detail signals and the converted-detail signals, and a device to record at least the large region signals, the converted-detail signals and the difference-detail signals on the recording medium.

The apparatus described in Item 61 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to produce visual image-referred data from the large region signals and the detail signals and a device to record at least the large region signals, the detail signals and the visual image-referred data on the recording medium.

The apparatus described in Item 62 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a detail converting processing on at least the detail signals to make them to be converted-detail signals, a device to produce difference-detail signals by using the detail signals and the converted-detail signals, a device to produce visual image-referred data from the large region signals and the converted-detail signals and a device to record at least the large region signals, the converted and detail signals, the difference-detail signals and the visual image-referred data on the recording medium.

The method described in Item 117 is that an image processing method to conduct, on inputted-image data, the image processing to optimize formation of a visual image on an output medium, and thereby producing visual image-referred data, wherein the image processing method comprises a process to obtain at least large region signals and detail signals from the inputted-image data and a process to produce the visual image-referred data by using at least the obtained large region signals and detail signals.

The method described in Item 118 is that an image processing method to conduct, on inputted-image data, the image processing to optimize formation of a visual image on an output medium, and thereby producing visual image-referred data, wherein the image processing method comprises a process to obtain at least large region signals, converted-detail signals and difference-detail signals from the inputted-image data and a process to produce the visual image-referred data by using at least the obtained large region signals, converted-detail signals and difference-detail signals.

The method described in Item 119 is that an image processing method to conduct, on inputted-image data, the image processing to optimize formation of a visual image on an output medium, and thereby producing visual image-referred data, wherein the image processing method comprises a process to obtain at least visual image-referred data, large region signals and detail signals from the inputted-image data and a process to produce revised-visual image-referred data by using at least the obtained visual image-referred data, large region signals and detail signals.

The method described in Item 120 is that an image processing method to conduct, on inputted-image data, the image processing to optimize formation of a visual image on an output medium, and thereby producing visual image-referred data, wherein the image processing method comprises a process to obtain at least the visual image-referred data, large region signals, converted-detail signals and difference-detail signal from the inputted-image data and a process to produce revised-visual image-referred data by using at least the visual image-referred data, large region signals, converted-detail signals and difference-detail signal.

The structure described in Item 150 is that an image processing apparatus to conduct, on inputted-image data, the image processing to optimize formation of a visual image on an output medium, and thereby producing visual image-referred data, wherein the image processing apparatus comprises a device to obtain at least large region signals and detail signals from the inputted-image data and a device to produce the visual image-referred data by using at least the obtained large region signals and detail signals.

The structure described in Item 151 is that an image processing apparatus to conduct, on inputted-image data, the image processing to optimize formation of a visual image on an output medium, and thereby producing visual image-referred data, wherein the image processing apparatus comprises a device to obtain at least large region signals, converted-detail signals and difference-detail signals from the inputted-image data and a device to produce the visual image-referred data by using at least the obtained large region signals, converted-detail signals and difference-detail signals.

The structure described in Item 152 is that an image processing apparatus to conduct, on inputted-image data, the image processing to optimize formation of a visual image on an output medium, and thereby producing visual image-referred data, wherein the image processing apparatus comprises a device to obtain at least the visual image-referred data, large region signals and detail signals from the inputted-image data and a device to produce revised-visual image-referred data by using at least the obtained visual image-referred data, large region signals and detail signals.

The structure described in Item 153 is that an image processing apparatus to conduct, on inputted-image data, the image processing to optimize formation of a visual image on an output medium, and thereby producing visual image-referred data, wherein the image processing apparatus comprises a device to obtain at least the visual image-referred data, large region signals, converted-detail signals and difference-detail signal from the inputted-image data and a device to produce revised-visual image-referred data by using at least the visual image-referred data, large region signals, converted-detail signals and difference-detail signal.

The media described in Item 183 is that an recording media capable of being read by a computer and to record a program to conduct, on inputted-image data, the image processing to optimize formation of a visual image on an output medium, and thereby to record on a recording medium the image data for producing visual image-referred data, wherein a function to produce large region signals and detail signals from the inputted-image data and a function to record at least the large region signals and detail signals on the recording medium are provided.

The media described in Item 184 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a detail converting processing on at least the detail signals to make them to be converted-detail signals, a function to produce difference-detail signals by using the detail signals and the converted-detail signals, and a function to record at least the large region signals, the converted-detail signals and the difference-detail signals on the recording medium.

The media described in Item 185 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to produce visual image-referred data from the large region signals and the detail signals and a function to record at least the large region signals, the detail signals and the visual image-referred data on the recording medium.

The media described in Item 186 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a detail converting processing on at least the detail signals to make them to be converted-detail signals, a function to produce difference-detail signals by using the detail signals and the converted-detail signals, a function to produce visual image-referred data from the large region signals and the converted-detail signals and a function to record at least the large region signals, the converted and detail signals, the difference-detail signals and the visual image-referred data on the recording medium.

The media described in Item 241 is that a recording media capable of being read by a computer and to record a program to conduct, on inputted-image data, the image processing to optimize formation of a visual image on an output medium, and thereby producing visual image-referred data, wherein the recording media comprises a function to obtain at least large region signals and detail signals from the inputted-image data and a function to produce the visual image-referred data by using at least the obtained large region signals and detail signals.

The media described in Item 242 is that a recording media capable of being read by a computer and to record a program to conduct, on inputted-image data, the image processing to optimize formation of a visual image on an output medium, and thereby producing visual image-referred data, wherein the recording media comprises a function to obtain at least large region signals, converted-detail signals and difference-detail signals from the inputted-image data and a function to produce the visual image-referred data by using at least the obtained large region signals, converted-detail signals and difference-detail signals.

The media described in Item 243 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region signals and detail signals from the inputted-image data and a function to produce revised-visual image-referred data by using at least the obtained visual image-referred data, large region signals and detail signals.

The media described in Item 244 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region signals, converted-detail signals and difference-detail signal from the inputted-image data and a function to produce revised-visual image-referred data by using at least the visual image-referred data, large region signals, converted-detail signals and difference-detail signal.

The program described in Item 274 is that a program to make a computer to conduct, on inputted-image data, the image processing to optimize formation of a visual image on an output medium, and thereby to record on a recording medium the image data for producing visual image-referred data, wherein a function to produce large region signals and detail signals from the inputted-image data and a function to record at least the large region signals and detail signals on the recording medium are provided.

The program described in Item 275 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a detail converting processing on at least the detail signals to make them to be converted-detail signals, a function to produce difference-detail signals by using the detail signals and the converted-detail signals, and a function to record at least the large region signals, the converted-detail signals and the difference-detail signals on the recording medium.

The program described in Item 276 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to produce visual image-referred data from the large region signals and the detail signals and a function to record at least the large region signals, the detail signals and the visual image-referred data on the recording medium.

The program described in Item 277 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a detail converting processing on at least the detail signals to make them to be converted-detail signals, a function to produce difference-detail signals by using the detail signals and the converted-detail signals, a function to produce visual image-referred data from the large region signals and the converted-detail signals and a function to record at least the large region signals, the converted and detail signals, the difference-detail signals and the visual image-referred data on the recording medium.

The program described in Item 332 is that a recording media capable of being read by a computer and to record a program to conduct, on inputted-image data, the image processing to optimize formation of a visual image on an output medium, and thereby producing visual image-referred data, wherein the recording media comprises a function to obtain at least large region signals and detail signals from the inputted-image data and a function to produce the visual image-referred data by using at least the obtained large region signals and detail signals.

The program described in Item 333 is that a recording media capable of being read by a computer and to record a program to conduct, on inputted-image data, the image processing to optimize formation of a visual image on an output medium, and thereby producing visual image-referred data, wherein the recording media comprises a function to obtain at least large region signals, converted-detail signals and difference-detail signals from the inputted-image data and a function to produce the visual image-referred data by using at least the obtained large region signals, converted-detail signals and difference-detail signals.

The program described in Item 334 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region signals and detail signals from the inputted-image data and a function to produce revised-visual image-referred data by using at least the obtained visual image-referred data, large region signals and detail signals.

The program described in Item 335 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region signals, converted-detail signals and difference-detail signal from the inputted-image data and a function to produce revised-visual image-referred data by using at least the visual image-referred data, large region signals, converted-detail signals and difference-detail signal.

In the first group of the image recording method described in Items 1-4, the image recording apparatus described in Items 59-62, the image processing method described in Items 117-120, the image processing apparatus described in Items 150-153, the recording medium described in Items 183-186, the program described in Items 241-244, the first feature is that the recording medium described in Items 274-277, the program described in Items 332-335, at lest the large region signals are recorded in the recording medium among the produced signals.

In the first group of the image recording method described in Items 1-4, the image recording apparatus described in Items 59-62, the image processing method described in Items 117-120, the image processing apparatus described in Items 150-153, the recording medium described in Items 183-186, the program described in Items 241-244, the recording medium described in Items 274-277, the program described in Items 332-335, it may be preferable that at lest the large region signals and the detail signals are recorded in the recording medium among the produced signals.

Further, together with at least large region signal, instead of the detail signal, a mode in which the converted-detail signal and the difference-detail signal are recorded, is preferable. Further, together with at least a large region signal and a detail signal, it is also preferable that the visual image-referred data generated from the large region signal and the detail signal is recorded, and together with at least the large region signal, converted-detail signal and difference-detail signal, it is also preferable that the visual image-referred data generated from the large region signal and converted-detail signal is recorded.

Further, the second characteristic of the first invention group is to obtain at least the large region signal and detail signal which are recorded in the recording medium, and at least by using them, to generate the visual image-referred data. Further, together with the large region signal, the converted-detail signal and difference-detail signal are obtained, and by using them, a mode is also preferable in which the visual image-referred data is generated.

Further, together with the large region signal and detail signal, the visual image-referred data is obtained, and by using them, a mode in which the visual image-referred data is generated, is also preferable, and together with the large region signal, converted-detail signal and difference-detail signal, the visual image-referred data is obtained, and the image processing is conducted on them, and a mode is also preferable in which the revised-visual image-referred data whose condition of the image is different from the obtained visual image-referred data is generated.

Further, as a generation method of the visual image-referred data using the obtained signals in the first invention group, a predetermined image processing along user's intention is conducted on the obtained large region signal and detail signal, and a method in which they are added and the visual image-referred data is generated, is preferable. It is needless to say that, not only the image processing is conducted on each of the large region signal and detail signal, and processed signal is added, but also the image processing can be conducted on only either one of the large region signal or detail signal corresponding to the intention, and it can be added.

Because this method can conduct the image processing on the base of the already separated signal, a simple processing whose processing load is low for the user is realized, and also as to the separated signal, because it respectively has a nature to easily directly connect to the image processing to which the user intends, when the user conducts the image processing, it has an advantage in which the processing method is easily selected. Further, also when the user redoes the repeated processing until the image data coincides with user's intention, at every re-doing, because there is no trouble to newly separate signals, there is a large advantage that the processing load is low.

Further, the image processing conducted on the large region signal has a high utilization value when the user desires the correction processing which controls the impression of the whole image, and for example, the gradation conversion processing is preferable, and particularly, the application of the local printing processing which will be described next is preferable.

For example, as a case where the general user frequently photographs, and the change is desired, there is a portrait photographing in the back light at the outside of room. In this case, although the background of the building is very bright, the person reflected in the foreground is dark. When the gradation is adjusted so that the person is adequate bright, the background is too bright, and the detail structure can not be confirmed, and reversely, when the gradation is adjusted so that the background is adequate bright, the person becomes dark, and it is not preferable.

In such a case, it is preferable that the processing called the local printing processing is applied. The local printing processing is the technology by which, while the detail structure (the density difference) is remained, the large brightness and darkness, that is, the gradation is corrected. The present invention is a mode in which it is appropriate that the local printing processing is adopted, and the brightness and darkness of the whole image are included in the large region signal, and the fine structure such as the eyes and a mouse of the person and a pattern of the wall of the background is previously separated into the detail signal. When the user desires the application of the local printing processing, by adding the processing in which the large region signal is multiplied by a predetermined coefficient, the local printing processing is conducted.

Hereupon, it is needless to say that the processing conducted on the large region signal is not limited to the local printing processing, and various conversion processing such as the linear conversion processing, non-linear type conversion processing, contrast correction, exposure compensation, and change of the dynamic range, can be applied, but it is not limited to them. Further, as these specific technologies, for example, Japanese Tokkaihei No. 11-684860, Tokkaihei No. 8-294006, and Tokkai 2000-78852 are listed, but it is not limited to them.

The image processing conducted on the detail signal is, because the detail signal is a signal in which the high frequency component of the image is main, it is of high utility value when the user desires that the detail structure of the image such as the hair or eyes of the person or the woven pattern of the monochrome clothes is emphasized, or desires the correction processing to reduce noises. For example, the application of the noise removal processing, or sharpness emphasis processing is preferable. Further, in the process in which the detail signal is generated, when the frequency range of high frequency component which is a main component of the detail signal is adjusted, the detail structure or noise expressed by the frequency range for which the user desires can be emphasized or removed. However, it is not limited to these processing.

Hereupon, the technology to adjust the high frequency component is well known to those skilled in the art, and specifically, for example, the technology described on pages 172 - 180 of "Practical digital image processing studied by C-language" (OHM co. collaboration of Nobuyuki Yagi and others) is listed, but it is not limited to this.

Further, when the separation condition of the obtained large region signal and detail signal does not coincide with user's intention, the obtained large region signal and detail signal are added and the input image data is re-structured, and the large region signal and the detail signal are newly re-generated by a means which is different from the generation method of the recorded large region signal and the detail signal, and a predetermined image processing is respectively conducted in the same manner as above and added, and a method by which the visual image-referred data is generated can also be selected.

Further, together with the large region signal, the converted-detail signal and difference-detail signal are obtained, and it is also preferable that a predetermined image processing which is along user's intention, is conducted on the obtained Large region signal, converted-detail signal and difference-detail signal, and they are added and the visual image-referred data is generated. In this mode, in the obtained converted-detail signal, the change is added to the detail signal of the input image data in a stage which is recorded in the recording medium before obtaining. Therefore, the visual image-referred data generated by adding the obtained large region signal and converted-detail signal is the data in which the fine structure or condition of noise is changed from the input image data.

When the user accedes to the intention of the change as it is, and the visual image-referred data is generated, the large region signal and converted-detail signal are added, and the visual image-referred data may be generated. When the visual image-referred data generated in this manner, does not coincide with user's taste, and the user desires the change of the fine structure or the noise condition, particularly, the effect of this mode appears, and when the processing is re-done, the re-separation does not take much time, and the visual image-referred data of different condition can be generated by using the generated visual image-referred data and difference-detail signal.

For example, when to the visual image-referred data which does not suit user's taste, the difference-detail signal multiplied by a predetermined coefficient is added, the degree of the change of the fine structure or the condition of noise can be easily adjusted until it coincides with user's taste.

Further, when the separation condition of the obtained large region signal and detail signal or the method itself of the change of the detail signal (not the degree), does not coincide with user's intention, the obtained large region signal, converted-detail signal and difference-detail signal are added and the input image data is r-structured, and by a means different from the generation method of the recorded large region signal and detail signal are newly re-generated, and a predetermined image processing is conducted on each of the large region signal and detail signal and they are added, and the method by which the visual image-referred data is generated can also be selected.

Further, a mode in which the recorded visual image-referred data is obtained together with various signals described above, and the revised-visual image-referred data is generated, is also preferable. In this mode, because there is one viewing image as a starting point, there is an advantage in which the content to which the user want to add correction is easily grasped, and the processing can be easily advanced.

Further, the obtained visual image-referred data is made a starting point, and by using the large region signal, detail signal which is obtained with together, or the converted-detail signal or difference-detail signal, the change can be added until the data coincides with user's taste. For example, when it is desired that the degree of the emphasis of the fine structure or the noise removal is changed in the visual image-referred data, by a very easy operation in which the difference-detail signal multiplied by a predetermined coefficient is added to the visual image-referred data, the emphasis of the fine structure or the degree of the noise removal can be changed.

Also in this mode, when the separation condition of the obtained large region signal and the detail signal or the method itself of the change (not the degree) of the detail signal does not coincide with user's intention, by using the obtained various signals, the input image data is re-structured, and the imge processing can be conducted by the different processing method, and the width of the processing content selected by the user can be widened as described before.

The method described in Item 5 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals and a process to record at least the large region luminance signals, the detail luminance signals and the input color signals on the recording medium.

The method described in Item 6 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a detail converting processing on at least detail luminance signals to make them to be converted-detail luminance signals, a process to produce difference-detail luminance signals by using the detail luminance signals and the converted-detail luminance signals and a process to record at least the large region luminance signals, the converted-detail luminance signals, the difference-detail luminance signals and the input color signals on the recording medium.

The method described in Item 7 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a color converting processing on at least input color signals and thereby to produce converted-input color signals, a process to produce difference-input color signals from the input color signals and the converted-input color signals and a process to record at least the large region luminance signals, the detail luminance signals, the converted-input color signals, the difference-input color signals on the recording medium.

The method described in Item 8 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to produce visual image-referred data from the large region luminance signals, the detail luminance signals and the input color signals and a process to record at least the visual image-referred data, the large region luminance signals, the detail luminance signals and the input color signals on the recording medium.

The method described in Item 9 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a detail converting processing on at least the detail luminance signals to make them to be converted-detail luminance signals, a process to produce difference-detail luminance signals by using the detail luminance signals and the converted-detail luminance signals, a process to produce visual image-referred data from the large region luminance signals, the converted-detail luminance signals and the input color signals and a process to record at least the visual image-referred data, the large region luminance signals, the converted-detail luminance signals, the difference-detail luminance and the input color signals on the recording medium.

The method described in Item 10 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a color converting processing on at least the input color signals and thereby to produce converted-input color signals, a process to produce difference-input color signals from the input color signals and the converted-input color signals, a process to produce visual image-referred data from the large region luminance signals, the detail luminance signals and the converted-input color signals and a process to record at least the visual image-referred data, the large region luminance signals, the detail luminance signals, the converted-input color signals and the difference-input color signals on the recording medium.

The apparatus described in Item 63 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals and a device to record at least the large region luminance signals, the detail luminance signals and the input color signals on the recording medium.

The apparatus described in Item 64 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a detail converting processing on at least detail luminance signals to make them to be converted-detail luminance signals, a device to produce difference-detail luminance signals by using the detail luminance signals and the converted-detail luminance signals and a device to record at least the large region luminance signals, the converted-detail luminance signals, the difference-detail luminance signals and the input color signals on the recording medium.

The apparatus described in Item 65 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a color converting processing on at least input color signals and thereby to produce converted-input color signals, a device to produce difference-input color signals from the input color signals and the converted-input color signals and a device to record at least the large region luminance signals, the detail luminance signals, the converted-input color signals, the difference-input color signals on the recording medium.

The apparatus described in Item 66 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to produce visual image-referred data from the large region luminance signals, the detail luminance signals and the input color signals and a device to record at least the visual image-referred data, the large region luminance signals, the detail luminance signals and the input color signals on the recording medium.

The apparatus described in Item 67 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a detail converting processing on at least the detail luminance signals to make them to be converted-detail luminance signals, a device to produce difference-detail luminance signals by using the detail luminance signals and the converted-detail luminance signals, a device to produce visual image-referred data from the large region luminance signals, the converted-detail luminance signals and the input color signals and a device to record at least the visual image-referred data, the large region luminance signals, the converted-detail luminance signals, the difference-detail luminance and the input color signals on the recording medium.

The apparatus described in Item 68 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a color converting processing on at least the input color signals and thereby to produce converted-input color signals, a device to produce difference-input color signals from the input color signals and the converted-input color signals, a device to produce visual image-referred data from the large region luminance signals, the detail luminance signals and the converted-input color signals and a device to record at least the visual image-referred data, the large region luminance signals, the detail luminance signals, the converted-input color signals and the difference-input color signals on the recording medium.

The method described in Item 121 is that an image processing method to conduct, on inputted-image data, the image processing to optimize formation of a visual image on an output medium, and thereby producing visual image-referred data, wherein the image processing method comprises a process to obtain at least large region luminance signals, detail luminance signals and input color signals from the inputted-image data and a process to produce the visual image-referred data by using at least the obtained large region luminance signals, detail luminance signals and input color signals.

The method described in Item 122 is that an image processing method to conduct, on inputted-image data, the image processing to optimize formation of a visual image on an output medium, and thereby producing visual image-referred data, wherein the image processing method comprises a process to obtain at least large region luminance signals, converted-detail luminance signals, difference-detail luminance signals, and input color signals from the inputted-image data and a process to produce the visual image-referred data by using at least the obtained large region luminance signals, converted-detail luminance signals, difference-detail luminance signals, and input color signals.

The method described in Item 123 is that an image processing method to conduct, on inputted-image data, the image processing to optimize formation of a visual image on an output medium, and thereby producing visual image-referred data, wherein the image processing method comprises a process to obtain at least large region luminance signals, detail luminance signals, converted-input color signals, and difference-input color signals from the inputted-image data and a process to produce the visual image-referred data by using at least the obtained large region luminance signals, detail luminance signals, converted-input color signals, and difference-input color signals.

The method described in Item 124 is that an image processing method to conduct, on inputted-image data, the image processing to optimize formation of a visual image on an output medium, and thereby producing visual image-referred data, wherein the image processing method comprises a process to obtain at least the visual image-referred data, large region luminance signals, detail luminance signals and input color signals from the inputted-image data and a process to produce revised-visual image-referred data by using at least the obtained large region luminance signals, detail luminance signals and input color signals.

The method described in Item 125 is that an image processing method to conduct, on inputted-image data, the image processing to optimize formation of a visual image on an output medium, and thereby producing visual image-referred data, wherein the image processing method comprises a process to obtain at least the visual image-referred data, large region luminance signals, converted-detail luminance signals, difference-detail luminance signals and input color signals from the inputted-image data and a process to produce revised-visual image-referred data by using at least the obtained large region luminance signals, converted-detail luminance signals, difference-detail luminance signals and input color signals.

The method described in Item 126 is that an image processing method to conduct, on inputted-image data, the image processing to optimize formation of a visual image on an output medium, and thereby producing visual image-referred data, wherein the image processing method comprises a process to obtain at least the visual image-referred data, large region luminance signals, detail luminance signals, converted-input color signals and difference-input color signals from the inputted-image data and a process to produce revised-visual image-referred data by using at least the obtained large region luminance signals, detail luminance signals, converted-input color signals and difference-input color signals.

The structure described in Item 154 is that an image processing apparatus to conduct, on inputted-image data, the image processing to optimize formation of a visual image on an output medium, and thereby producing visual image-referred data, wherein the image processing apparatus comprises a device to obtain at least large region luminance signals, detail luminance signals and input color signals from the inputted-image data and a device to produce the visual image-referred data by using at least the obtained large region luminance signals, detail luminance signals

and input color signals.

The structure described in Item 155 is that an image processing apparatus to conduct, on inputted-image data, the image processing to optimize formation of a visual image on an output medium, and thereby producing visual image-referred data, wherein the image processing apparatus comprises a device to obtain at least large region luminance signals, converted-detail luminance signals, difference-detail luminance signals, and input color signals from the inputted-image data and a device to produce the visual image-referred data by using at least the obtained large region luminance signals, converted-detail luminance signals, difference-detail luminance signals, and input color signals.

The structure described in Item 156 is that an image processing apparatus to conduct, on inputted-image data, the image processing to optimize formation of a visual image on an output medium, and thereby producing visual image-referred data, wherein the image processing apparatus comprises a device to obtain at least large region luminance signals, detail luminance signals, converted-input color signals, and difference-input color signals from the inputted-image data and a device to produce the visual image-referred data by using at least the obtained large region luminance signals, detail luminance signals, converted-input color signals, and difference-input color signals.

The structure described in Item 157 is that an image processing apparatus to conduct, on inputted-image data, the image processing to optimize formation of a visual image on an output medium, and thereby producing visual image-referred data, wherein the image processing apparatus comprises a device to obtain at least the visual image-referred data, large region luminance signals, detail luminance signals and input color signals from the inputted-image data and a device to produce revised-visual image-referred data by using at least the obtained large region luminance signals, detail luminance signals and input color signals.

The structure described in Item 158 is that an image processing apparatus to conduct, on inputted-image data, the image processing to optimize formation of a visual image on an output medium, and thereby producing visual image-referred data, wherein the image processing apparatus comprises a device to obtain at least the visual image-referred data, large region luminance signals, converted-detail luminance signals, difference-detail luminance signals and input color signals from the inputted-image data and a device to produce revised-visual image-referred data by using at least the obtained large region luminance signals, converted-detail luminance signals, difference-detail luminance signals and input color signals.

The structure described in Item 159 is that an image processing apparatus to conduct, on inputted-image data, the image processing to optimize formation of a visual image on an output medium, and thereby producing visual image-referred data, wherein the image processing apparatus comprises a device to obtain at least the visual image-referred data, large region luminance signals, detail luminance signals, converted-input color signals and difference-input color signals from the inputted-image data and a device to produce revised-visual image-referred data by using at least the obtained large region luminance signals, detail luminance signals, converted-input color signals and difference-input color signals.

The media described in Item 187 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals and a function to record at least the large region luminance signals, the detail luminance signals and the input color signals on the recording medium.

The media described in Item 188 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a detail converting processing on at least detail luminance signals to make them to be converted-detail luminance signals, a function to produce difference-detail luminance signals by using the detail luminance signals and the converted-detail luminance signals and a function to record at least the large region luminance signals, the detail luminance signals, the difference-detail luminance signals and the input color signals on the recording medium.

The media described in Item 189 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a color converting processing on at least input color signals and thereby to produce converted-input color signals, a function to produce difference-input color signals from the input color signals and the converted-input color signals and a function to record at least the large region luminance signals, the detail luminance signals, the converted-input color signals, the difference-input color signals on the recording medium.

The media described in Item 190 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to produce visual image-referred data from the large region luminance signals, the detail luminance signals and the input color signals and a function to record at least the visual image-referred data, the large region luminance signals, the detail luminance signals and the input color signals on the recording medium.

The media described in Item 191 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a detail converting processing on at least the detail luminance signals to make them to be converted-detail luminance signals, a function to produce difference-detail luminance signals by using the detail luminance signals and the converted-detail luminance signals, a function to produce visual image-referred data from the large region luminance signals, the converted-detail luminance signals and the input color signals and a function to record at least the visual image-referred data, the large region luminance signals, the converted-detail luminance signals, the difference-detail luminance and the input color signals on the recording medium.

The media described in Item 192 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a color converting processing on at least the input color signals and thereby to produce converted-input color signals, a function to produce difference-input color signals from the input color signals and the converted-input color signals, a function to produce visual image-referred data from the large region luminance signals, the detail luminance signals and the converted-input color signals and a function to record at least the visual image-referred data, the large region luminance signals, the detail luminance signals, the converted-input color signals and the difference-input color signals on the recording medium.

The media described in Item 245 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, detail luminance signals and input color signals from the inputted-image data and a function to produce the visual image-referred data by using at least the obtained large region luminance signals, detail luminance signals and input color signals.

The media described in Item 246 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, converted-detail luminance signals, difference-detail luminance signals, and input color signals from the inputted-image data and a function to produce the visual image-referred data by using at least the obtained large region luminance signals, converted-detail luminance signals, difference-detail luminance signals, and input color signals.

The media described in Item 247 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, detail luminance signals, converted-input color signals, and difference-input color signals from the inputted-image data and a function to produce the visual image-referred data by using at least the obtained large region luminance signals, detail luminance signals, converted-input color signals, and difference-input color signals.

The media described in Item 248 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, detail luminance signals and input color signals from the inputted-image data and a function to produce revised-visual image-referred data by using at least the obtained large region luminance signals, detail luminance signals and input color signals.

The media described in Item 249 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, converted-detail luminance signals, difference-detail luminance signals and input color signals from the inputted-image data and a function to produce revised-visual image-referred data by using at least the obtained large region luminance signals, converted-detail luminance signals, difference-detail luminance signals and input color signals.

The media described in Item 250 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, detail luminance signals, converted-input color signals and difference-input color signals from the inputted-image data and a function to produce revised-visual image-referred data by using at least the obtained large region luminance signals, detail luminance signals, converted-input color signals and difference-input color signals.

The program described in Item 278 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals and a function to record at least the large region luminance signals, the detail luminance signals and the input color signals on the recording medium.

The program described in Item 279 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a detail converting processing on at least detail luminance signals to make them to be converted-detail luminance signals, a function to produce difference-detail luminance signals by using the detail luminance signals and the converted-detail luminance signals and a function to record at least the large region luminance signals, the detail luminance signals, the difference-detail luminance signals and the input color signals on the recording medium.

The program described in Item 280 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a color converting processing on at least input color signals and thereby to produce converted-input color signals, a function to produce difference-input color signals from the input color signals and the converted-input color signals and a function to record at least the large region luminance signals, the detail luminance signals, the converted-input color signals, the difference-input color signals on the recording medium.

The program described in Item 281 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to produce visual image-referred data from the large region luminance signals, the detail luminance signals and the input color signals and a function to record at least the visual image-referred data, the large region luminance signals, the detail luminance signals and the input color signals on the recording medium.

The program described in Item 282 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a detail converting processing on at least the detail luminance signals to make them to be converted-detail luminance signals, a function to produce difference-detail luminance signals by using the detail luminance signals and the converted-detail luminance signals, a function to produce visual image-referred data from the large region luminance signals, the converted-detail luminance signals and the input color signals and a function to record at least the visual image-referred data, the large region luminance signals, the converted-detail luminance signals, the difference-detail luminance and the input color signals on the recording medium.

The program described in Item 283 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a color converting processing on at least the input color signals and thereby to produce converted-input color signals, a function to produce difference-input color signals from the input color signals and the converted-input color signals, a function to produce visual image-referred data from the large region luminance signals, the detail luminance signals and the converted-input color signals and a function to record at least the visual image-referred data, the large region luminance signals, the detail luminance signals, the converted-input color signals and the difference-input color signals on the recording medium.

The program described in Item 336 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, detail luminance signals and input color signals from the inputted-image data and a function to produce the visual image-referred data by using at least the obtained large region luminance signals, detail luminance signals and input color signals.

The program described in Item 337 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, converted-detail luminance signals, difference-detail luminance signals, and input color signals from the inputted-image data and a function to produce the visual image-referred data by using at least the obtained large region luminance signals, converted-detail luminance signals, difference-detail luminance signals, and input color signals.

The program described in Item 338 is that a recording media capable of being read by a computer and to record a program to conduct, on inputted-image data, the image processing to optimize formation of a visual image on an output medium, and thereby producing visual image-referred data, wherein the recording media comprises a function to obtain at least large region luminance signals, detail luminance signals, converted-input color signals, and difference-input color signals from the inputted-image data and a function to produce the visual image-referred data by using at least the obtained large region luminance signals, detail luminance signals, converted-input color signals, and difference-input color signals.

The program described in Item 339 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, detail luminance signals and input color signals from the inputted-image data and a function to produce revised-visual image-referred data by using at least the obtained large region luminance signals, detail luminance signals and input color signals.

The program described in Item 340 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, converted-detail luminance signals, difference-detail luminance signals and input color signals from the inputted-image data and a function to produce revised-visual image-referred data by using at least the obtained large region luminance signals, converted-detail luminance signals, difference-detail luminance signals and input color signals.

The program described in Item 341 is that a recording media capable of being read by a computer and to record a program to conduct, on inputted-image data, the image processing to optimize formation of a visual image on an output medium, and thereby producing visual image-referred data, wherein the recording media comprises a function to obtain at least the visual image-referred data, large region luminance signals, detail luminance signals, converted-input color signals and difference-input color signals from the inputted-image data and a function to produce revised-visual image-referred data by using at least the obtained large region luminance signals, detail luminance signals, converted-input color signals and difference-input color signals.

In the first group of the image recording method described in Items 5-10, the image recording apparatus described in Items 63-68, the image processing method described in Items 121-126, the image processing apparatus described in Items 154-159, the recording medium described in Items 187-192, the program described in Items 245-250, the recording medium described in Items 278-283, the program described in Items 336-341, the first feature is to produce the input luminance signals and the input color signals from the inputted-image data, to produce large region luminance signals and detail luminance signals, and to record at least the large region luminance signals, the detail luminance signals and the input color signals in the medium among the produced signals.

The large region luminance signal and detail luminance signal which are important matters of the second invention group, are the same intention of generation as the large region signal and detail signal which are the important matters of the first invention group. Because the large region luminance component and detail luminance component are signals corresponding to the luminance component of the large region component and detail component, when the conversion processing of gradation which controls the impression of the whole image, the correction processing such as emphasis of the detail structure such as the pattern of the cloths or lashes of the person, or at the time of the noise removal processing, rather than a case where the large region component and detail component are used, the effect corresponding to the processing adequately appears and it is effective.

Further, in the first invention group, the luminance component is extracted from each component of B, G, R, and they are respectively separated into the large region component and detail component, and it is necessary that the processing is conducted on each component, further, even when the processing is conducted, it is necessary that the processing condition is determined while the color balance of BGR is considered, and there is a draw-back that the color easily changes into others. In contrast to this, in the second invention group, because, after the input image data is previously separated into the luminance component and color component, the luminance component is separated into the large region signal and detail signal and the processing is conducted on it, the man-hour is enough to be 1/3 of the first invention group, and the processing load is low, and because the attention is not paid to the color balance and the processing can be advanced, it has an advantage that the simplicity is high.

In the present second invention group, it is preferable that at least together with input color signal, the large region luminance signal and detail luminance signal are recorded. Further, instead of the above detail luminance signal, it is also preferable that the converted-detail luminance signal and difference-detail luminance signal are recorded, and further, it is also preferable that, instead of the above input color signal, the converted-input color signal and difference-input color signal are recorded.

Further, a mode is also preferable in which at least together with the input color signal, large region luminance signal and detail luminance signal, the visual image-referred data generated by using the input color signal, large region luminance signal and detail luminance signal, is recorded, and it is also preferable that, together with the input color signal, large region luminance signal, converted-detail luminance signal and difference-detail luminance signal, the visual image-referred data generated by using the input color signal, large region luminance signal and converted-detail luminance signal, is recorded, and it is also preferable that, together with the converted-input color signal, difference-input color signal, large region luminance signal, and detail luminance signal, the visual image-referred data generated by using the converted-input color signal, large region luminance signal and detail luminance signal, is recorded, and it is also preferable that, together with the converted-input color signal, difference-input color signal, large region luminance signal, converted-detail luminance signal and difference-detail luminance signal, the visual image-referred data generated by using the converted-input color signal, large region luminance signal and converted-detail luminance signal, is recorded.

"Large region luminance signal" and "detail luminance signal" are the same intention of generation as the above described "large region signal" and "detail signal". "Large region luminance signal" is structured by the luminance component included in the signal component which bears the expression of whole brightness and darkness in the scene expressed by the input image data, and "detail luminance signal" is relative to "large region luminance signal" and is structured by the luminance component included in the signal component which bears the expression of the fine structure (for example, woven pattern of the monochrome cloths, or hair of the person, lashes of face) in the scene expressed in the input image.

In order to generate the "large region luminance signal" and "detail luminance signal", the "input luminance signal" and "input color signal" are generated from the input image data, and by the same method as the above-described method by which the "large region signal" and "detail signal" are generated from the input image data, they can be generated from the input luminance signal, however, it is not limited to this method, but various methods can be used by which, after the large region signal and detail signal are generated from the input image data, the luminance component of the large region signal and detail signal is extracted, and it is made the large region luminance signal and detail luminance signal.

The "input luminance signal" and "input color signal" are signals corresponding to the luminance component and color component of the input image data, and when the luminance component and color component are extracted from the input image data, commonly known various methods or various methods known between skilled persons are applied, and they are obtained.

For example, the three-color intensity signal of B, G, R of the input image data is converted into YIQ base, HSV base, YUV base which are publicly known between skilled persons, or according to the regulation such as sRGB or NTSC, an operation by which it is converted into XYZ base of CIE 1931 color specification system, and L * a* b* base and L* u* v* base recommended by CIE 1976, may be conducted.

Even when the separation of the luminance signal and color signal in the present invention is not perfectly exact conversion in the color science, because enough effect is exerted, the conversion in which the averaged value of BGR shown in the example of application of, for example, Japanese Tokkaisho No. 63-26783 is made the luminance signal, and two axes perpendicular to this, are made the color information signal, is also included as the mode. Inversely, in order to generate the image data such as the visual image-referred data by composing the "input luminance signal" and "input color signal", the inverse conversion of the above conversion is conducted on the luminance signal and color signal, and for example, the three-color intensity signal of B, G, R may be generated.

"Difference-detail luminance signal" is the same intention of the generation as the difference-detail signal in the first invention group, and is generated by the detail luminance signal and converted-detail luminance signal generated by conducting the detail conversion processing on the detail luminance signal, and means the processing content of the detail conversion luminance processing or the degree of processing. Relating to the generation of the difference-detail luminance signal, it may be the difference value of the detail luminance signal and converted-detail luminance signal, and the ratio of the detail luminance signal to the converted-detail luminance signal may be calculated, but it is not limited to this method.

The "difference-input color signal" is generated from the input color signal and the converted-input color signal generated by conducting the processing on the input color signal, and means the processing content of the processing or the degree of the processing. Relating to the generation of the difference-input color signal, the difference vale between the input color signal and converted-input color signal may also be allowed, and the ratio of the input color signal to the converted-input color signal may also be calculated, but it is not limited to this method.

Further, the second feature of the second invention group is that at least large region luminance signal, detail luminance signal and input color signal are obtained, and by using them, the visual image-referred data is generated. In the above mode, it is also preferable that instead of the detail luminance signal, the converted-detail luminance signal and difference-detail luminance signal are obtained, and the visual image-referred data is generated, and it is also preferable that, instead of the input color signal, the converted-input color signal and the difference-input color signal are obtained, and the visual image-referred data is generated.

Further, in each of above modes, further, it is also preferable that the visual image-referred data is obtained together, and by using them, the revised-visual image-referred data in which the condition of the image is different from the obtained visual image-referred data is generated.

In the second invention group, in the same manner as the first invention group, because the image processing can be conducted on the base of the already separated signal, the simple processing whose processing load is low for the user is realized, and when the processing is conducted again, because there is no trouble to newly separate, there is an advantage that the processing load is low, and because, in addition to that, instead of the large region signal or detail signal, by using the large region luminance signal and detail luminance signal which are structured by the luminance component of the large signal or detail signal, the visual image-referred data is generated, the user's intention is more easily reflected on the image processing, and there is an advantage that the user can also easily select the processing method.

As the generation method of the visual image-referred data using the obtained signal in the second invention group, a method is preferable in which a predetermined image processing along the user's intention is conducted on the obtained large region luminance signal, detail luminance signal and input color signal, and they are added and generated. It is of cause that the image processing is conducted on each of the large region luminance signal, detail luminance signal and input color signal, and processed signals are added, and it is needless to say that, corresponding to the intention, the image processing is conducted on only some of them, and they can be added.

Because this method can conduct the image processing on the base of the already separated signals, the simple processing whose processing load is low for the user is realized, and also for the separated signals, because they have respectively the character which is directly connected to the image processing to which the user intends, when the user conducts the image processing, they have an advantage that the user can easily select the processing method. Further, when the user conducts again the re-doing processing until they coincide with the taste, at every re-doing, because there is no trouble to newly separate them, it is the same as the first invention group that there is a large advantage that the processing load is low.

Further, when the separation condition of the obtained large region luminance signal and the detail luminance signal do not coincide with the user's intention, it is also possible that the obtained large region signal and the detail signal are added and the input luminance signal is re-structured in the same manner as a case where the separation condition of the obtained large region luminance signal and the detail luminance signal do not coincide with the user's intention, and by the different means from the generation method of the recorded large region luminance signal and the detail luminance signal, the large region luminance signal and the detail luminance signal are generated again, and respectively a predetermined image processing is conducted in the same manner as described above, and they are added, and a method by which the visual image-referred data is generated, is selected.

Further, when the separation condition of the input luminance signal and the input color signal do not coincide with the user's intention, it is also possible that the obtained input color signal and the re-structured input luminance signal are added, and the input image data is re-structured, and the input color signal and input luminance signal are newly generated again, and respectively a predetermined image processing is conducted in the same manner as described above, and they are added, and a method by which the visual image-referred data is generated, is selected.

Further, in the generation of the above visual image-referred data, a method is also effective by which the converted-detail luminance signal and the difference-detail luminance signal are obtained instead of the detail luminance signal, and the visual image-referred data is generated. Specifically, for example, the visual image-referred data as the starting point, (even when being obtained, the obtained large region luminance signal, converted-detail luminance signal and input color signal are added and it may be generated) and the difference-detail luminance signal are used, and further, the emphasis of the fine structure or the degree of noise is changed, and it is possible that the visual image-referred data which further coincides with user's taste is generated.

For example, when the difference-detail luminance signal in which the visual image-referred data as the start point is multiplied by a predetermined coefficient is added, the visual image-referred data in which the emphasis or the degree of noise removal is changed can be easily generated.

This method is a concept which approximates to a concept in which, when the large region signal and the detail signal are obtained and the visual image-referred data is generated, instead of the detail signal, the changed detail signal and the difference-detail signal are obtained, and the visual image-referred data is generated.

Further, when the condition of the separation of the obtained large region luminance signal and the detail luminance signal or the method itself of the change (not the degree) of the detail luminance signal does not coincide with the user's intention, the obtained large region luminance signal, converted-detail luminance signal, difference luminance signal, and input color signal are added and the input image data can be re-structured.

Further, in the generation of the above visual image-referred data, a method is also effective by which, instead of the input color signal, the converted-input color signal and difference-input color signal are obtained, and visual image-referred data is generated. Specifically, the visual image-referred data which is a start point (it may be obtained or may be generated by adding the obtained large region luminance signal, converted-detail luminance signal and input color signal), and the difference-input color signal are used, the color is changed, and the visual image-referred data which further coincides with user's taste can be generated.

For example, when the difference-input color signal which is multiplied by a predetermined coefficient is added to the visual image-referred data which is a start point, the visual image-referred data in which the chroma or lightness is changed can be easily generated.

Further, when the condition of the separation of the obtained input luminance signal and the input color signal, or the method itself of the change (not the degree) of the converted-input color signal does not coincide with user's intention, the obtained input luminance signal and input color signal are added and the input image data can be re-structured.

Hereupon, in the image processing using the large region luminance signal, it is preferable that the same processing method as the image processing using the large region signal described in the characteristic of the first invention group is applied, and in the image processing using the detail luminance signal, it is preferable that the same processing method as the image processing using the detail signal described in the characteristic of the first invention group is applied.

In the color-converted processing conducted on the input color signal, various processing by which the color is corrected and changed can be applied, for example, the color balance correction processing, specific color emphasis processing, chroma emphasis processing, changing processing of the color space, fade correction processing operation, color tone rotation processing, color gamma value changing processing can be listed, but it is not limited to this.

The method described in Item 11 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals and a process to record at least the color-converted large region luminance signals, the color-converted detail luminance signals and the color-converted input color signals on the image recording medium.

The method described in Item 12 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals, a process to conduct a conversion processing on at least the color-converted detail luminance signals and thereby to produce color-converted converted-detail luminance signals, a process to produce color-converted difference-detail luminance signals from the color-converted detail luminance signals and the color-converted converted-detail luminance signals and a process to record at least the color-converted large region luminance signals, the color-converted converted-detail luminance signals, the color-converted difference-detail luminance signals and the color-converted input color signals on the image recording medium.

The method described in Item 13 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals, a process to conduct a conversion processing on the color-converted input color signal and thereby to produce color-converted converted-input color signals, a process to produce color-converted difference-input color signals from the color-converted input color signals and the color-converted converted-input color signals and a process to record at least the color-converted large region luminance signals, the color-converted detail luminance signals, the color-converted converted-input color signals and the color-converted difference-input color signals on the image recording medium.

The method described in Item 14 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals, a process to produce visual image-referred data from the color-converted large region luminance data, the color-converted detail luminance signals and the color-converted input color signals and a process to record at least the visual image-referred data, the color-converted large region luminance signals, the color-converted detail luminance signals and the color-converted input color signals on the image recording medium.

The method described in Item 15 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals, a process to conduct a conversion processing at least on the color-converted detail luminance signals and thereby to produce color-converted converted-detail luminance signals, a process to produce color-converted difference-detail luminance signals from the color-converted detail luminance signals and the color-converted converted-detail luminance signals, a process to produce visual image-referred data from the color-converted large region luminance signals, the color-converted converted-detail luminance signals and the color-converted input color signals and a process to record at least the visual image-referred data, the color-converted large region luminance signals, the color-converted converted-detail luminance signals, the color-converted difference-detail luminance signals and the color-converted input color signals on the image recording medium.

The method described in Item 16 is that an image recording method to conduct, on inputted-image data, the image processing to optimize formation of a visual image on an output medium, and thereby to record on a recording medium the image data for producing visual image-referred data, wherein there are provided a process to produce color-converted input luminance signals and color-converted input color signals after conducting color gamut converting processing on the input image data, a process to produce color-converted large region luminance signals and color-converted detail luminance signals from the color-converted input luminance signals, a process to conduct a conversion processing on the color-converted input color signals and thereby to produce color-converted converted-input color signals, a process to produce color-converted difference-input color signals from the color-converted input color signals and the color-converted converted-input color signals, a process to produce visual image-referred data from the color-converted large region luminance signals, the color-converted detail luminance signals and the color-converted converted-input color signals and a process to record at least the visual image-referred data, the color-converted large region luminance signals, the color-converted detail luminance signals, the color-converted converted-input color signals and the color-converted difference-input color signals on the image recording medium.

The apparatus described in Item 69 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals and a device to record at least the color-converted large region luminance signals, the color-converted detail luminance signals and the color-converted input color signals on the image recording medium.

The apparatus described in Item 70 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals, a device to conduct a conversion processing on at least the color-converted detail luminance signals and thereby to produce color-converted converted-detail luminance signals, a device to produce color-converted difference-detail luminance signals from the color-converted detail luminance signals and the color-converted input color signals and a device to record at least the color-converted large region luminance signals, the color-converted converted-detail luminance signals, the color-converted difference-detail luminance signals and the color-converted input color signals on the image recording medium.

The apparatus described in Item 71 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals, a device to conduct a conversion processing on the color-converted input color signal and thereby to produce color-converted converted-input color signals, a device to produce color-converted difference-input color signals from the color-converted input color signals and the color-converted converted-input color signals and a device to record at least the color-converted large region luminance signals, the color-converted detail luminance signals, the color-converted converted-input color signals and the color-converted difference-input color signals on the image recording medium.

The apparatus described in Item 72 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals, a device to produce visual image-referred data from the color-converted large region luminance data, the color-converted detail luminance signals and the color-converted input color signals and a device to record at least the visual image-referred data, the color-converted large region luminance signals, the color-converted detail luminance signals and the color-converted input color signals on the image recording medium.

The apparatus described in Item 73 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals, a device to conduct a conversion processing at least on the color-converted detail luminance signals and thereby to produce color-converted converted-detail luminance signals, a device to produce color-converted difference-detail luminance signals from the color-converted detail luminance signals and the color-converted converted-detail luminance signals, a device to produce visual image-referred data from the color-converted large region luminance signals, the color-converted converted-detail luminance signals and the color-converted input color signals and a device to record at least the visual image-referred data, the color-converted large region luminance signals, the color-converted converted-detail luminance signals, the color-converted difference-detail luminance signals and the color-converted input color signals on the image recording medium.

The apparatus described in Item 74 is that an image recording apparatus to conduct, on inputted-image data, the image processing to optimize formation of a visual image on an output medium, and thereby to record on a recording medium the image data for producing visual image-referred data, wherein there are provided a device to produce color-converted input luminance signals and color-converted input color signals after conducting color gamut converting processing on the input image data, a device to produce color-converted large region luminance signals and color-converted detail luminance signals from the color-converted input luminance signals, a device to conduct a conversion processing on the color-converted input color signals and thereby to produce color-converted converted-input color signals, a device to produce color-converted difference-input color signals from the color-converted input color signals and the color-converted converted-input color signals, a device to produce visual image-referred data from the color-converted large region luminance signals, the color-converted detail luminance signals and the color-converted converted-input color signals and a device to record at least the visual image-referred data, the color-converted large region luminance signals, the color-converted detail luminance signals, the color-converted converted-input color signals and the color-converted difference-input color signals on the image recording medium.

The method described in Item 127 is that an image processing method to conduct, on inputted-image data, the image processing to optimize formation of a visual image on an output medium, and thereby producing visual image-referred data, wherein the image processing method comprises a process to obtain at least color-converted large region luminance signals, color-converted detail luminance signals and color-converted input color signals from the inputted-image data and a process to produce the visual image-referred data by using at least the obtained color-converted large region luminance signals, color-converted detail luminance signals and color-converted input color signals.

The method described in Item 128 is that an image processing method to conduct, on inputted-image data, the image processing to optimize formation of a visual image on an output medium, and thereby producing visual image-referred data, wherein the image processing method comprises a process to obtain at least color-converted large region luminance signals, color-converted converted-detail luminance signals, color-converted difference-detail luminance signals and color-converted input color signals from the inputted-image data and a process to produce the visual image-referred data by using at least the obtained color-converted large region luminance signals, color-converted converted-detail luminance signals, color-converted difference-detail luminance signals and color-converted input color signals.

The method described in Item 129 is that an image processing method to conduct, on inputted-image data, the image processing to optimize formation of a visual image on an output medium, and thereby producing visual image-referred data, wherein the image processing method comprises a process to obtain at least color-converted large region luminance signals, color-converted detail luminance signals, color-converted converted-input color signals, and color-converted difference-input color signals from the inputted-image data and a process to produce the visual image-referred data by using at least the obtained color-converted large region luminance signals, color-converted detail luminance signals, color-converted converted-input color signals, and color-converted difference-input color signals from the inputted-image data.

The method described in Item 130 is that an image processing method to conduct, on inputted-image data, the image processing to optimize formation of a visual image on an output medium, and thereby producing visual image-referred data, wherein the image processing method comprises a process to obtain at least visual image-referred data, color-converted large region luminance signals, color-converted detail luminance signals, and color-converted input color signals from the inputted-image data and a process to produce revised-visual image-referred data by using at least the obtained visual image-referred data, color-converted large region luminance signals, color-converted converted-detail luminance signals, color-converted difference-detail luminance signals and color-converted input color signals.

The method described in Item 131 is that an image processing method to conduct, on inputted-image data, the image processing to optimize formation of a visual image on an output medium, and thereby producing visual image-referred data, wherein the image processing method comprises a process to obtain at least visual image-referred data, color-converted large region luminance signals, color-converted converted-detail luminance signals, color-converted difference-detail luminance signals, and color-converted input color signals from the inputted-image data and a process to produce revised-visual image-referred data by using at least the obtained visual image-referred data, color-converted large region luminance signals, color-converted converted-detail luminance signals, color-converted difference-detail luminance signals, and color-converted input color signals.

The method described in Item 132 is that an image processing method to conduct, on inputted-image data, the image processing to optimize formation of a visual image on an output medium, and thereby producing visual image-referred data, wherein the image processing method comprises a process to obtain at least visual image-referred data, color-converted large region luminance signals, color-converted detail luminance signals, color-converted converted-input color signals, and color-converted difference-input color signals from the inputted-image data and a process to produce revised-visual image-referred data by using at least the obtained visual image-referred data, color-converted large region luminance signals, color-converted detail luminance signals, color-converted converted-input color signals, and color-converted difference-input color signals.

The structure described in Item 160 is that an image processing apparatus to conduct, on inputted-image data, the image processing to optimize formation of a visual image on an output medium, and thereby producing visual image-referred data, wherein the image processing apparatus comprises a device to obtain at least color-converted large region luminance signals, color-converted detail luminance signals and color-converted input color signals from the inputted-image data and a device to produce the visual image-referred data by using at least the obtained color-converted large region luminance signals, color-converted detail luminance signals and color-converted input color signals.

The structure described in Item 161 is that an image processing apparatus to conduct, on inputted-image data, the image processing to optimize formation of a visual image on an output medium, and thereby producing visual image-referred data, wherein the image processing apparatus comprises a device to obtain at least color-converted large region luminance signals, color-converted converted-detail luminance signals, color-converted difference-detail luminance signals and color-converted input color signals from the inputted-image data and a device to produce the visual image-referred data by using at least the obtained color-converted large region luminance signals, color-converted converted-detail luminance signals, color-converted difference-detail luminance signals and color-converted input color signals.

The structure described in Item 162 is that an image processing apparatus to conduct, on inputted-image data, the image processing to optimize formation of a visual image on an output medium, and thereby producing visual image-referred data, wherein the image processing apparatus comprises a device to obtain at least color-converted large region luminance signals, color-converted detail luminance signals, color-converted converted-input color signals, and color-converted difference-input color signals from the inputted-image data and a device to produce the visual image-referred data by using at least the obtained color-converted large region luminance signals, color-converted detail luminance signals, color-converted converted-input color signals, and color-converted difference-input color signals from the inputted-image data.

The structure described in Item 163 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted large region luminance signals, color-converted detail luminance signals, and color-converted input color signals from the inputted-image data and a device to produce the visual image-referred data by using at least the obtained color-converted large region luminance signals, color-converted converted-detail luminance signals, color-converted difference-detail luminance signals and color-converted input color signals.

The structure described in Item 164 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted large region luminance signals, color-converted converted-detail luminance signals, color-converted difference-detail luminance signals, and color-converted input color signals from the inputted-image data and a device to produce revised-visual image-referred data by using at least the obtained visual image-referred data, color-converted large region luminance signals, color-converted converted-detail luminance signals, color-converted difference-detail luminance signals, and color-converted input color signals.

The structure described in Item 165 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted large region luminance signals, color-converted detail luminance signals, color-converted converted-input color signals, and color-converted difference-input color signals from the inputted-image data and a device to produce revised-visual image-referred data by using at least the obtained visual image-referred data, color-converted large region luminance signals, color-converted detail luminance signals, color-converted converted-input color signals, and color-converted difference-input color signals.

The media described in Item 193 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals and a function to record at least the color-converted large region luminance signals, the color-converted detail luminance signals and the color-converted input color signals on the image recording medium.

The media described in Item 194 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on at least the color-converted detail luminance signals and thereby to produce color-converted converted-detail luminance signals, a function to produce color-converted difference-detail luminance signals from the color-converted detail luminance signals and the color-converted input color signals and a function to record at least the color-converted large region luminance signals, the color-converted converted-detail luminance signals, the color-converted difference-detail luminance signals and the color-converted input color signals on the image recording medium.

The media described in Item 195 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on the color-converted input color signal and thereby to produce color-converted converted-input color signals, a function to produce color-converted difference-input color signals from the color-converted input color signals and the color-converted converted-input color signals and a function to record at least the color-converted large region luminance signals, the color-converted detail luminance signals, the color-converted converted-input color signals and the color-converted difference-input color signals on the image recording medium.

The media described in Item 196 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to produce visual image-referred data from the color-converted large region luminance data, the color-converted detail luminance signals and the color-converted input color signals and a function to record at least the visual image-referred data, the color-converted large region luminance signals, the color-converted detail luminance signals and the color-converted input color signals on the image recording medium.

The media described in Item 197 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing at least on the color-converted detail luminance signals and thereby to produce color-converted converted-detail luminance signals, a function to produce color-converted difference-detail luminance signals from the color-converted detail luminance signals and the color-converted converted-detail luminance signals, a function to produce visual image-referred data from the color-converted large region luminance signals, the color-converted converted-detail luminance signals and the color-converted input color signals and a function to record at least the visual image-referred data, the color-converted large region luminance signals, the color-converted converted-detail luminance signals, the color-converted difference-detail luminance signals and the color-converted input color signals on the image recording medium.

The media described in Item 198 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on the color-converted input color signals and thereby to produce color-converted converted-input color signals, a function to produce color-converted difference-input color signals from the color-converted input color signals and the color-converted converted-input color signals, a function to produce visual image-referred data from the color-converted large region luminance signals, the color-converted detail luminance signals and the color-converted converted-input color signals and a function to record at least the visual image-referred data, the color-converted large region luminance signals, the color-converted detail luminance signals, the color-converted converted-input color signals and the color-converted difference-input color signals on the image recording medium.

The media described in Item 251 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted detail luminance signals and color-converted input color signals from the inputted-image data and a function to produce the visual image-referred data by using at least the obtained color-converted large region luminance signals, color-converted detail luminance signals and color-converted input color signals.

The media described in Item 252 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted converted-detail luminance signals, color-converted difference-detail luminance signals and color-converted input color signals from the inputted-image data and a function to produce the visual image-referred data by using at least the obtained color-converted large region luminance signals, color-converted converted-detail luminance signals, color-converted difference-detail luminance signals and color-converted input color signals.

The media described in Item 253 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted detail luminance signals, color-converted converted-input color signals, and color-converted difference-input color signals from the inputted-image data and a function to produce the visual image-referred data by using at least the obtained color-converted large region luminance signals, color-converted detail luminance signals, color-converted converted-input color signals, and color-converted difference-input color signals from the inputted-image data.

The media described in Item 254 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted detail luminance signals, and color-converted input color signals from the inputted-image data and a function to produce the visual image-referred data by using at least the obtained color-converted large region luminance signals, color-converted converted-detail luminance signals, color-converted difference-detail luminance signals and color-converted input color signals.

The media described in Item 255 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted converted-detail luminance signals, color-converted difference-detail luminance signals, and color-converted input color signals from the inputted-image data and a function to produce revised-visual image-referred data by using at least the obtained visual image-referred data, color-converted large region luminance signals, color-converted converted-detail luminance signals, color-converted difference-detail luminance signals, and color-converted input color signals.

The media described in Item 256 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted detail luminance signals, color-converted converted-input color signals, and color-converted difference-input color signals from the inputted-image data and a function to produce revised-visual image-referred data by using at least the obtained visual image-referred data, color-converted large region luminance signals, color-converted detail luminance signals, color-converted converted-input color signals, and color-converted difference-input color signals.

The program described in Item 284 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals and a function to record at least the color-converted large region luminance signals, the color-converted detail luminance signals and the color-converted input color signals on the image recording medium.

The program described in Item 285 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on at least the color-converted detail luminance signals and thereby to produce color-converted converted-detail luminance signals, a function to produce color-converted difference-detail luminance signals from the color-converted detail luminance signals and the color-converted input color signals and a function to record at least the color-converted large region luminance signals, the color-converted converted-detail luminance signals, the color-converted difference-detail luminance signals and the color-converted input color signals on the image recording medium.

The program described in Item 286 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on the color-converted input color signal and thereby to produce color-converted converted-input color signals, a function to produce color-converted difference-input color signals from the color-converted input color signals and the color-converted converted-input color signals and a function to record at least the color-converted large region luminance signals, the color-converted detail luminance signals, the color-converted converted-input color signals and the color-converted difference-input color signals on the image recording medium.

The program described in Item 287 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to produce visual image-referred data from the color-converted large region luminance data, the color-converted detail luminance signals and the color-converted input color signals and a function to record at least the visual image-referred data, the color-converted large region luminance signals, the color-converted detail luminance signals and the color-converted input color signals on the image recording medium.

The program described in Item 288 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing at least on the color-converted detail luminance signals and thereby to produce color-converted converted-detail luminance signals, a function to produce color-converted difference-detail luminance signals from the color-converted detail luminance signals and the color-converted converted-detail luminance signals, a function to produce visual image-referred data from the color-converted large region luminance signals, the color-converted converted-detail luminance signals and the color-converted input color signals and a function to record at least the visual image-referred data, the color-converted large region luminance signals, the color-converted converted-detail luminance signals, the color-converted difference-detail luminance signals and the color-converted input color signals on the image recording medium.

The program described in Item 289 is that a program to make a computer to conduct, on inputted-image data, the image processing to optimize formation of a visual image on an output medium, and thereby to record on a recording medium the image data for producing visual image-referred data, wherein there are provided a function to produce color-converted input luminance signals and color-converted input color signals after conducting color gamut converting processing on the input image data, a function to produce color-converted large region luminance signals and color-converted detail luminance signals from the color-converted input luminance signals, a function to conduct a conversion processing on the color-converted input color signals and thereby to produce color-converted converted-input color signals, a function to produce color-converted difference-input color signals from the color-converted input color signals and the color-converted converted-input color signals, a function to produce visual image-referred data from the color-converted large region luminance signals, the color-converted detail luminance signals and the color-converted converted-input color signals and a function to record at least the visual image-referred data, the color-converted large region luminance signals, the color-converted detail luminance signals, the color-converted converted-input color signals and the color-converted difference-input color signals on the image recording medium.

The program described in Item 342 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted detail luminance signals and color-converted input color signals from the inputted-image data and a function to produce the visual image-referred data by using at least the obtained color-converted large region luminance signals, color-converted detail luminance signals and color-converted input color signals.

The program described in Item 343 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted converted-detail luminance signals, color-converted difference-detail luminance signals and color-converted input color signals from the inputted-image data and a function to produce the visual image-referred data by using at least the obtained color-converted large region luminance signals, color-converted converted-detail luminance signals, color-converted difference-detail luminance signals and color-converted input color signals.

The program described in Item 344 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted large region luminance signals, color-converted detail luminance signals, color-converted converted-input color signals, and color-converted difference-input color signals from the inputted-image data and a function to produce the visual image-referred data by using at least the obtained color-converted large region luminance signals, color-converted detail luminance signals, color-converted converted-input color signals, and color-converted difference-input color signals from the inputted-image data.

The program described in Item 345 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted detail luminance signals, and color-converted input color signals from the inputted-image data and a function to produce the visual image-referred data by using at least the obtained color-converted large region luminance signals, color-converted converted-detail luminance signals, color-converted difference-detail luminance signals and color-converted input color signals.

The program described in Item 346 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted converted-detail luminance signals, color-converted difference-detail luminance signals, and color-converted input color signals from the inputted-image data and a function to produce revised-visual image-referred data by using at least the obtained visual image-referred data, color-converted large region luminance signals, color-converted converted-detail luminance signals, color-converted difference-detail luminance signals, and color-converted input color signals.

The program described in Item 347 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted detail luminance signals, color-converted converted-input color signals, and color-converted difference-input color signals from the inputted-image data and a function to produce revised-visual image-referred data by using at least the obtained visual image-referred data, color-converted large region luminance signals, color-converted detail luminance signals, color-converted converted-input color signals, and color-converted difference-input color signals.

In the third group of the image recording method described in Items 11-16, the image recording apparatus described in Items 69-74, the image processing method described in Items 127-132, the image processing apparatus described in Items 160-165, the recording medium described in Items 193-198, the program described in Items 251-256, the recording medium described in Items 284-289, the program described in Items 342-347, the third group has the similar structure of the second group, but is different from the second group in that the inputted-image data are subjected to a color converting process before input luminance signals and input color signals are produced from the inputted-image data.

The image data is generally expressed on various color spaces, and now a days, in the color space, the breadth of the color range and the definition are various. Then, depending on user's desire, the photographed image which is an input image data is an image existing on RIMMRGB which has a wide color range, but a situation in which it is desired that the viewing reference image data is expressed on sRGB, can be assumed. The present third invention group considers the above situation.

When the color space which can exist is converted by the input image data and the visual image-referred data, before the image processing to make the visual image-referred data coincide with user's taste is conducted, it is preferable that the color space is converted.

When it is converted from the color space whose the color range is wide to the color space whose color range is narrow, for the signal value existing outside the color space whose color range is narrow, because the change is added so that it is in the color space whose color range is narrow by conducting color mapping or color clipping, the color or gradation is changed. Accordingly, even when, before the color space is converted, that is, on the color space whose color range is wide, the image processing is conducted so that it coincides with user's taste, when the color space is converted, there is a case where the coincidence with the taste is not stored, and the necessity of further image processing is generated, and user's processing load is increased.

The third invention group considers the above situation, and when a mode of the first and second invention groups in which the conversion processing of the color space is arranged in the top, is structured, the decrease of the user's processing load is an advantage.

The first characteristic of the third invention group is to generate the color-converted input luminance signal and color-converted input color signal are generated after the color-converted processing is conducted on the input image data, and to generate the color-converted large region luminance signal and color-converted detail luminance signal from the color-converted input luminance signal, and to record at least the color-converted large region luminance signal, color-converted detail luminance signal and color-converted input color signal in the generated signals in the medium.

In the present third invention group, it is preferable to record at least the color-converted large region luminance signal and color-converted detail luminance signal together with the color-converted input color signal. Further, instead of the above color-converted detail luminance signal, it is also preferable that the color-converted converted-detail luminance signal and the color-converted - difference-detail luminance signal are recorded, and further, instead of the above color-converted input color signal, it is also preferable that the color-converted converted-input color signal and the difference-input color signal are recorded.

Further, together with at least the color-converted input color signal and color-converted large region luminance signal and color-converted detail luminance signal, a mode is also preferable by which the visual image-referred data generated by using the color-converted input color signal and color-converted large region luminance signal and color-converted detail luminance signal, is recorded, and together with the color-converted input color signal, color-converted large region luminance signal, color-converted converted-detail luminance signal and color-converted difference-detail luminance signal, it is also preferable that the visual image-referred data generated by using the color-converted. input color signal and color-converted large region luminance signal and color-converted converted-detail luminance signal, is recorded, and together with the color-converted converted-input color signal, color-converted difference-input color signal, color-converted large region luminance signal, and color-converted detail luminance signal, it is also preferable that the visual image-referred data generated by using the color-converted converted-input color signal and color-converted large region luminance signal and color-converted detail luminance signal, is recorded, and together with color-converted converted-input color signal, color-converted difference-input color signal, color-converted large region luminance signal, color-converted converted-detail luminance signal, and color-converted difference-detail luminance signal, it is also preferable that the visual image-referred data generated by using the color-converted converted-input color signal and color-converted large region luminance signal and color-converted converted-detail luminance signal, is recorded.

The "color-converted input luminance signal" and "color-converted input color signal" are signals corresponding to the luminance component and color component of the input image data in which the color-converted processing is conducted, and when the luminance component and color component are extracted, they are obtained by applying various methods which are commonly known, or which are known between skilled persons. Further, the "input luminance signal" and "input color signal" are signals which are different only in a point whether the color-converted processing is conducted on the original input image data at the time of the generation.

The "color-converted large region luminance signal" and "color-converted detail luminance signal" are the same intention of generation as the "large region luminance signal" and "detail luminance signal", and further, "large region signal" and "detail signal", and the "large region luminance signal" and "detail luminance signal" are different only in a case whether the color-converted processing is conducted on the original input image data at the time of generation.

In order to generate the "color-converted large region luminance signal" and "color-converted detail luminance signal", in the same manner as that "large region luminance signal" and "detail luminance signal" are generated, the "color-converted input luminance signal" and "color-converted input color signal" are generated from the input image on which color-converted processing is conducted, and by the same method as the above description by which the "large region signal" and "detail signal" are generated from the input image data, they can be generated from the color-converted input luminance signal, but it is not limited to this method.

Further, the second characteristic of the third invention group, is to obtain at least the color-converted large region luminance, color-converted detail luminance signal and color-converted input color signal, and to generate the visual image-referred data by using them.

In the above mode, instead of the color-converted detail luminance signal, the color-converted converted-detail luminance signal and color-converted difference-detail luminance signal are obtained, and it is also preferable that the visual image-referred data is generated, and instead of the color-converted input color signal, the color-converted converted-input color signal and color-converted difference-input color signal are obtained, and it is also preferable that the visual image-referred data is generated.

Further, in each of above modes, further, the visual image-referred data is obtained with together, and it is also preferable that, by using them, a revised-visual image-referred data in which the condition of the image is different from the obtained visual image-referred data is generated.

In the third invention group, in the same manner as the first and second invention groups, because the image processing can be conducted on the base of the already separated signal, the simple processing whose processing load is low for the user is realized, and when the processing is conducted again, because there is no trouble that it is newly separated, in addition to a case where there is an advantage that the processing load is low, instead of the large region signal or detail signal, because the visual image-referred data is generated by using the color-converted large region luminance signal or color-converted detail luminance signal, user's intention can be more easily reflected on the image processing, and there is an advantage that the user can also easily select the processing method.

Further, as the generation method of the visual image-referred data using the obtained signal in the third invention group, a method is preferable by which a predetermined image processing along user's intention is conducted on the obtained color-converted large region luminance signal, color-converted detail luminance signal and color-converted input color signal, and it is generated by using them. The image processing is conducted on each of color-converted large region luminance signal, color-converted detail luminance signal and color-converted input color signal, and of cause it is generated by using the processed signals, and it is needless to say that, corresponding to the intention, a mode by which the image processing is conducted on only some of them is also possible.

Because the image processing can be conducted on the base of the already separated signal, the easy processing whose processing load is low for the user, is realized, and also for the separated signal, because this method has respectively the nature which easily directly connects to the image processing to which the user intends, it has an advantage in which the selection of the processing method is easily made when the user conducts the image processing. Further, also when the repeating processing is re-done until it coincides with user's intention, at every time of re-doing, because there is no trouble in which signals are newly separated, it is the same as the first and second invention groups that there is a large advantage in which the processing load is low.

Further, when the condition of the separation of the obtained large region luminance signal and detail luminance signal does not coincide with user's intention, the obtained color-converted input color signal and the above-described re-structured color-converted input luminance signal are composed, the input image data in which the color-converted processing is conducted, is re-structured, and the color-converted input color signal and color-converted input luminance signal are generated again, and in the same manner as described above, a predetermined image processing is respectively conducted, and they are composed, and it is also possible to select a method to generate the visual image-referred data.

Further, when the condition of the separation of the color-converted input luminance signal and the color-converted input color signal does not coincide with user's intention, it may be possible to select a method in which the obtained color-converted input color signal and the restructured color-converted input luminance signal are synthesized, the inputted-image data having subjected to the color gamut converting processing are restructured, color-converted input color signal and color-converted input luminance signal are newly produced and then the predetermined image processing and synthesizing are applied on them likewise above, thereby producing visual image-referred data.

Further, when the content of the color-converted processing or the processing result does not coincide with user's intention, it is also possible that the inverse conversion processing of the color-converted processing is conducted on the above-described re-structured input image data which is color-converted processed, the input image data is re-structured, and the color-converted processing is conducted by the different means, and processing is advanced.

Further, in the generation of the above-described visual image-referred data, it is the same as the second invention group that, instead of the color-converted detail luminance signal, the color-converted converted-detail luminance signal and color-converted difference-detail luminance signal are obtained, and a method by which the visual image-referred data is generated, is also effective.

Further, in the generation of the above-described visual image-referred data, it is the same as the second invention group that, instead of the color-converted input color signal, the color-converted converted-input color signal and color-converted difference-input color signal are obtained, and a method by which the visual image-referred data is generated, is also effective. The color-converted processing conducted on the input image data is a processing which is necessary when the change is generated in the color space in which the input image data and the visual image-referred data can exist, and is the color space change processing, and the method is widely publickly known by the skilled persons.

For the image processing in which the color-converted large region luminance signal, it is preferable to apply the same processing method as the image processing using the large region signal described in the characteristic of the first invention group, for the image processing using the color-converted detail luminance signal, it is preferable to apply the same processing method as the image processing using the detail signal described in the characteristic of the first invention group, and for the color-converted processing which is conducted on the color-converted input color signal, it is preferable to apply the same processing method as the color-converted processing using the input color signal described in the characteristic of the first invention group.

As for the image processing using the large region signal, image processing using the detail signal, and color-converted processing conducted on input image data, they are described already, but other than them, for example, other various image processing methods such as a capture process correction processing (optical aberration (out-of-focus, tilt, peripheral aberration, coma, astigmatism, distortion and color aberration), geometrical effect(perspective correction), sensor effect correction, (CFA interpolation, non-uniformity correction and noise reduction) and lighting effect (over exposure, under exposure, illumination elimination and lens flare), defect correction processing (scratch (deletion) and crease reduction, dust reduction, particle reduction, red-eye reduction, soil removal, removal of inadequate expression), artistic expression processing (sepia adjustment, monochrome conversion from color, deformation, graphics formation), can be applied, but it is not limited to this.

The method described in Item 17 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a conversion processing on at least the large region signals to make them to be converted-large region signals, a process to produce difference-large region signals from the converted-large region signals and the large region signals and a process to record at least the converted-large region signals, the detail signals and the difference-large region signals on the recording medium.

The method described in Item 18 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a conversion processing on at least the large region signals to make them to be converted-large region signals, a process to produce difference-large region signals from the converted-large region signals and the large region signals, a process to conduct a conversion processing on at least the detail signals and thereby to produce converted-detail signals, a process to produce difference-detail signals from the detail signals and the converted-detail signals and a process to record at least the converted-large region signals, the difference-large region signals, the converted-detail signals and the difference-detail signals on the recording medium.

The method described in Item 19 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a conversion processing on at least the large region signals to make them to be converted-large region signals, a process to produce difference-large region signals from the converted-large region signals and the large region signals, a process to produce visual image-referred data by using the converted-large region signals and the detail signals and a process to record at least the visual image-referred data, the converted-large region signals, the difference-large region signals, and the detail signals on the recording medium.

The method described in Item 20 is that an image recording method to conduct, on inputted-image data, the image processing to optimize formation of a visual image on an output medium, and thereby to record on a recording medium the image data for producing visual image-referred data, wherein there are provided a process to produce large region signals and detail signals from the inputted-image data, a process to conduct a conversion processing on at least the large region signals to make them to be converted-large region signals, a process to produce difference-large region signals from the converted-large region signals and the large region signals, a process to conduct a conversion processing on at least the detail signals and thereby to produce converted-detail signals, a process to produce difference-detail signals from the detail signals and the converted-detail signals, a process to produce visual image-referred data by using the converted-large region signals and the converted-detail signals and a process to record at least the visual image-referred data, the converted-large region signals, the difference-large region signals, the converted-detail signals and the difference-detail signals on the recording medium.

The apparatus described in Item 75 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a conversion processing on at least the large region signals to make them to be converted-large region signals, a device to produce difference-large region signals from the converted-large region signals and the large region signals and a device to record at least the converted-large region signals, the detail signals and the difference-large region signals on the recording medium.

The apparatus described in Item 76 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a conversion processing on at least the large region signals to make them to be converted-large region signals, a device to produce difference-large region signals from the converted-large region signals and the large region signals, a device to conduct a conversion processing on at least the detail signals and thereby to produce converted-detail signals, a device to produce difference-detail signals from the detail signals and the converted-detail signals and a device to record at least the converted-large region signals, the difference-large region signals, the converted-detail signals and the difference-detail signals on the recording medium.

The apparatus described in Item 77 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a conversion processing on at least the large region signals to make them to be converted-large region signals, a device to produce difference-large region signals from the converted-large region signals and the large region signals, a device to produce visual image-referred data by using the converted-large region signals and the detail signals and a device to record at least the visual image-referred data, the converted-large region signals, the difference-large region signals, and the detail signals on the recording medium.

The apparatus described in Item 78 is that an image recording apparatus to conduct, on inputted-image data, the image processing to optimize formation of a visual image on an output medium, and thereby to record on a recording medium the image data for producing visual image-referred data, wherein there are provided a device to produce large region signals and detail signals from the inputted-image data, a device to conduct a conversion processing on at least the large region signals to make them to be converted-large region signals, a device to produce difference-large region signals from the converted-large region signals and the large region signals, a device to conduct a conversion processing on at least the detail signals and thereby to produce converted-detail signals, a device to produce difference-detail signals from the detail signals and the converted-detail signals, a device to produce visual image-referred data by using the converted-large region signals and the converted-detail signals and a device to record at least the visual image-referred data, the converted-large region signals, the difference-large region signals, the converted-detail signals and the difference-detail signals on the recording medium.

The method described in Item 133 is that an image processing method to conduct, on inputted-image data, the image processing to optimize formation of a visual image on an output medium, and thereby producing visual image-referred data, wherein the image processing method comprises a process to obtain at least converted-large region signals, detail signals and difference-large region signals from the inputted-image data and a process to produce the visual image-referred data by using at least the obtained converted-large region signals, detail signals and difference-large region signals.

The method described in Item 134 is that an image processing method to conduct, on inputted-image data, the image processing to optimize formation of a visual image on an output medium, and thereby producing visual image-referred data, wherein the image processing method comprises a process to obtain at least converted-large region signals, difference-large region signals, detail signals and difference-detail signals from the inputted-image data and a process to produce the visual image-referred data by using at least the obtained converted-large region signals, difference-large region signals, detail signals and difference-detail signals.

The method described in Item 135 is that an image processing method to conduct, on inputted-image data, the image processing to optimize formation of a visual image on an output medium, and thereby producing visual image-referred data, wherein the image processing method comprises a process to obtain at least visual image-referred data, converted-large region signals, difference-large region signals, and detail signals from the inputted-image data and a process to produce revised-visual image-referred data by using at least the obtained visual image-referred data, converted-large region signals, difference-large region signals, and detail signals.

The method described in Item 136 is that an image processing method to conduct, on inputted-image data, the image processing to optimize formation of a visual image on an output medium, and thereby producing visual image-referred data, wherein the image processing method comprises a process to obtain at least visual image-referred data, converted-large region signals, difference-large region signals, converted-detail signals, and difference-detail signals from the inputted-image data and a process to produce revised-visual image-referred data by using the obtained visual image-referred data, converted-large region signals, difference-large region signals, converted-detail signals, and difference-detail signals.

The structure described in Item 166 is that an image processing apparatus to conduct, on inputted-image data, the image processing to optimize formation of a visual image on an output medium, and thereby producing visual image-referred data, wherein the image processing apparatus comprises a device to obtain at least converted-large region signals, detail signals and difference-large region signals from the inputted-image data and a device to produce the visual image-referred data by using at least the obtained converted-large region signals, detail signals and difference-large region signals.

The structure described in Item 167 is that an image processing apparatus to conduct, on inputted-image data, the image processing to optimize formation of a visual image on an output medium, and thereby producing visual image-referred data, wherein the image processing apparatus comprises a device to obtain at least converted-large region signals, difference-large region signals, detail signals and difference-detail signals from the inputted-image data and a device to produce the visual image-referred data by using at least the obtained converted-large region signals, difference-large region signals, detail signals and difference-detail signals.

The structure described in Item 168 is that an image processing apparatus to conduct, on inputted-image data, the image processing to optimize formation of a visual image on an output medium, and thereby producing visual image-referred data, wherein the image processing apparatus comprises a device to obtain at least visual image-referred data, converted-large region signals, difference-large region signals, and detail signals from the inputted-image data and a device to produce revised-visual image-referred data by using at least the obtained visual image-referred data, converted-large region signals, difference-large region signals, and detail signals.

The structure described in Item 169 is that an image processing apparatus to conduct, on inputted-image data, the image processing to optimize formation of a visual image on an output medium, and thereby producing visual image-referred data, wherein the image processing apparatus comprises a device to obtain at least visual image-referred data, converted-large region signals, difference-large region signals, converted-detail signals, and difference-detail signals from the inputted-image data and a device to produce revised-visual image-referred data by using the obtained visual image-referred data, converted-large region signals, difference-large region signals, converted-detail signals, and difference-detail signals.

The media described in Item 199 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals and a function to record at least the converted-large region signals, the detail signals and the difference-large region signals on the recording medium.

The media described in Item 200 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to conduct a conversion processing on at least the detail signals and thereby to produce converted-detail signals, a function to produce difference-detail signals from the detail signals and the converted-detail signals and a function to record at least the converted-large region signals, the difference-large region signals, the converted-detail signals and the difference-detail signals on the recording medium.

The media described in Item 201 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to produce visual image-referred data by using the converted-large region signals and the detail signals and a function to record at least the visual image-referred data, the converted-large region signals, the difference-large region signals, and the detail signals on the recording medium.

The media described in Item 202 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to conduct a conversion processing on at least the detail signals and thereby to produce converted-detail signals, a function to produce difference-detail signals from the detail signals and the converted-detail signals, a function to produce visual image-referred data by using the converted-large region signals and the converted-detail signals and a function to record at least the visual image-referred data, the converted-large region signals, the difference-large region signals, the converted-detail signals and the difference-detail signals on the recording medium.

The media described in Item 257 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region signals, detail signals and difference-large region signals from the inputted-image data and a function to produce the visual image-referred data by using at least the obtained converted-large region signals, detail signals and difference-large region signals.

The media described in Item 258 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region signals, difference-large region signals, detail signals and difference-detail signals from the inputted-image data and a function to produce the visual image-referred data by using at least the obtained converted-large region signals, difference-large region signals, detail signals and difference-detail signals.

The media described in Item 259 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region signals, difference-large region signals, and detail signals from the inputted-image data and a function to produce revised-visual image-referred data by using at least the obtained visual image-referred data, converted-large region signals, difference-large region signals, and detail signals.

The media described in Item 260 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region signals, difference-large region signals, converted-detail signals, and difference-detail signals from the inputted-image data and a function to produce revised-visual image-referred data by using the obtained visual image-referred data, converted-large region signals, difference-large region signals, converted-detail signals, and difference-detail signals.

The program described in Item 290 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals and a function to record at least the converted-large region signals, the detail signals and the difference-large region signals on the recording medium.

The program described in Item 291 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to conduct a conversion processing on at least the detail signals and thereby to produce converted-detail signals, a function to produce difference-detail signals from the detail signals and the converted-detail signals and a function to record at least the converted-large region signals, the difference-large region signals, the converted-detail signals and the difference-detail signals on the recording medium.

The program described in Item 292 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to produce visual image-referred data by using the converted-large region signals and the detail signals and a function to record at least the visual image-referred data, the converted-large region signals, the difference-large region signals, and the detail signals on the recording medium.

The program described in Item 293 is that a program to make a computer to conduct, on inputted-image data, the image processing to optimize formation of a visual image on an output medium, and thereby to record on a recording medium the image data for producing visual image-referred data, wherein there are provided a function to produce large region signals and detail signals from the inputted-image data, a function to conduct a conversion processing on at least the large region signals to make them to be converted-large region signals, a function to produce difference-large region signals from the converted-large region signals and the large region signals, a function to conduct a conversion processing on at least the detail signals and thereby to produce converted-detail signals, a function to produce difference-detail signals from the detail signals and the converted-detail signals, a function to produce visual image-referred data by using the converted-large region signals and the converted-detail signals and a function to record at least the visual image-referred data, the converted-large region signals, the difference-large region signals, the converted-detail signals and the difference-detail signals on the recording medium.

The program described in Item 348 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region signals, detail signals and difference-large region signals from the inputted-image data and a function to produce the visual image-referred data by using at least the obtained converted-large region signals, detail signals and difference-large region signals.

The program described in Item 349 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region signals, difference-large region signals, detail signals and difference-detail signals from the inputted-image data and a function to produce the visual image-referred data by using at least the obtained converted-large region signals, difference-large region signals, detail signals and difference-detail signals.

The program described in Item 350 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region signals, difference-large region signals, and detail signals from the inputted-image data and a function to produce revised-visual image-referred data by using at least the obtained visual image-referred data, converted-large region signals, difference-large region signals, and detail signals.

The program described in Item 351 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region signals, difference-large region signals, converted-detail signals, and difference-detail signals from the inputted-image data and a function to produce revised-visual image-referred data by using the obtained visual image-referred data, converted-large region signals, difference-large region signals, converted-detail signals, and difference-detail signals.

The forth group is composed of the image recording method described in Items 17-20, the image recording apparatus described in Items 75-78, the image processing method described in Items 133-136, the image processing apparatus described in Items 166-169, the recording medium described in Items 199-202, the program described in Items 257-260, the recording medium described in Items 290-293, the program described in Items 348-351.

When the user conducts the image processing, it is described before that the gradation conversion processing which corrects the gradation which controls the impression of the whole image is largely used, however, the present fourth invention group is structured by considering this point from the first invention group, and in contrast to that the first invention group records or obtains the large region signal, and generates the visual image-referred data, in the fourth invention group, it is a character that, instead of the large region signal, the converted-large region signal in which conversion processing, for example, gradation conversion processing is conducted on the large region signal, and the difference-large region signal which means the content of the conversion processing or the degree of processing are recorded or obtained, and the visual image-referred data is generated, and when this structure is adopted, the user can simply conduct the gradation processing which is in heavy usage.

The first characteristic of the fourth invention group is to generate the large region signal and detail signal from the input image data, to generate the converted-large region signal by conducting the conversion processing on the large region signal, to generate the difference-large region signal from the large region signal and converted-large region signal, and to record at least the converted-large region signal, difference-large region signal, and detail signal.

Further, in the present fourth invention group, it is preferable to record at least converted-large region signal, difference-large region signal, and detail signal, further, it is also preferable that, instead of the above detail signal, the converted-detail signal, and difference-detail signal are recorded, and further, together with at least the converted-large region signal, difference-large region signal and detail signal, a mode is also preferable in which the visual image-referred data generated from the converted-large region signal and detail signal is recorded.

Further, at least together with the converted-large region signal, difference-large region signal, converted-detail signal, and difference-detail signal, a mode is also preferable in which the visual image-referred data generated from the converted-large region signal and converted-detail signal is recorded.

The "converted-large region signal" is a signal generated by conducting the conversion processing on the large region signal, and for the "conversion processing conducted on the large region signal", the gradation conversion processing by which the gradation is corrected, is preferable, and various methods known in the present skilled persons are applied.

Further, the "difference-large region signal" is a signal generated from "large region signal" and "converted-large region signal", and it is intended that the content of the influence or degree generated by the processing conducted on the large region signal is conserved. In the generation, for example, a method by which the difference of the "large region signal" and "converted-large region signal" is calculated, is also simple and preferable, and the ratio of the "large region signal" and "converted-large region signal" may be calculated, but it is not limited to this.

Further, the second characteristic of the fourth invention group is to obtain at least the converted-large luminance signal, difference-large region signal, and detail signal, and to generate the visual image-referred data by using them. In the above mode, instead of the detail signal, the converted-detail signal and difference-detail signal are obtained, and a mode is also preferable in which the visual image-referred data is generated, further, in each of above modes, further, the visual image-referred data is obtained with together, and by using them, it is also preferable that the revised-visual image-referred data in which the condition of the image is different from the obtained visual image-referred data, is newly generated.

In the fourth invention group, in the same manner as the first invention group, because the image processing can be conducted on the base of the already separated signal, the simple processing whose processing load is low for the user, is realized, and even when the processing is conducted again, because there is no trouble in which it is newly separated, it is of course that it is an advantage that the processing load is low, further, by using the difference-large region signal which means the content of the processing or degree, or the effect which is added to the object of the processing, when conversion processing is conducted on the large region signal, an advantage that the degree of the processing can simply be changed, is large.

As the generation method of the visual image-referred data using the obtained signals in the fourth invention group, a method is preferable by which a predetermined image processing which is along user's intention is conducted on the obtained converted-large region signal, detail luminance signal and difference-detail signal, and by adding them, the data is generated. It is of course that the converted-large region signal and detail luminance signal are added as it is, and the visual image-referred data is generated, and it is needless to say that a mode is also possible in which a predetermined image processing is conducted on only one of them, and the visual image-referred data is generated.

Further, when the visual image-referred data obtained from the medium, or the visual image-referred data generated by the above method do not coincide with user's taste, by using the obtained difference-large region signal, the degree of the conversion processing conducted on the large region signal can easily changed. Specifically, for example, the difference-large region signal multiplied by a predetermined coefficient may be added to the visual image-referred data. When the repeated processing is conducted again until it coincides with user's taste, this simplicity in which, at every time of re-doing, the degree of the processing can be changed without any trouble to be newly separated, is a large advantage of the present invention.

Further, when the method of the conversion processing conducted on the large region signal in order to generate the converted-large region signal does not coincide with user's intention, as described above, without re-structuring even the input image data, it is also possible that, by re-structuring the large region signal by adding the obtained converted-large region signal and difference-large region signal, and the image processing is newly conducted by a different method, the converted-large region signal and difference-large region signal are newly generated, and the processing is advanced.

Further, when the condition of the separation of the large region signal and detail signal which are originals of the obtained converted-large region signal and difference-large region signal does not coincide with user's intention, in the same manner as the first invention group, it is also possible that the input signal is re-structured by adding the obtained large region signal (obtained by being re-structured by adding obtained converted-large region signal and difference-large region signal), and detail signal.

Further, in the generation of the above visual image-referred data, also in the present invention group, in the same manner as the first invention group, a mode is also preferable in which, instead of the detail luminance signal, the converted-detail luminance signal and difference-detail luminance signal are obtained, and the visual image-referred data is generated.

The method described in Item 21 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals and a process to record at least the converted-large region luminance signals, the difference-large region luminance signals, the detail luminance signals and the input color signals on the recording medium.

The method described in Item 22 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals, a process to conduct a conversion processing on at least the detail luminance signals to make them to be converted-detail luminance signals, a process to produce difference-detail luminance signals from the converted-detail luminance signals and the large region luminance signals and a process to record at least the converted-large region luminance signals, the difference-large region luminance signals, the converted-detail luminance signals, the difference-detail luminance signals and the input color signals on the recording medium.

The method described in Item 23 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals, a process to conduct a conversion processing on at least the input color signals to make them to be converted-input color signals, a process to produce difference-input color signals from the converted-input color signals and the input color signals and a process to record at least the converted-large region luminance signals, the difference-large region luminance signals, the detail luminance signals, the converted-input color signals and the difference-input color signals on the recording medium.

The method described in Item 24 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals, a process to produce visual image-referred data by using at least the converted-large region luminance signals, the detail luminance signals and the input color signals and a process to record at least the visual image-referred data, the converted-large region luminance signals, the difference-large region luminance signals, the detail luminance signals and the input color signals on the recording medium.

The method described in Item 25 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals, a process to conduct a conversion processing on at least detail luminance signals to make them to be converted-detail luminance signals, a process to produce difference-detail luminance signals from the converted-detail luminance signals and the large region luminance signals, a process to produce visual image-referred data by using at least the converted-large region luminance signals, the converted-detail luminance signals and the input color signals and a process to record at least the visual image-referred data, the converted-large region luminance signals, the difference-large region luminance signals, the converted-detail luminance signals, the difference-detail luminance signals and the input color signals on the recording medium.

The method described in Item 26 is that an image recording method to conduct, on inputted-image data, the image processing to optimize formation of a visual image on an output medium, and thereby to record on a recording medium the image data for producing visual image-referred data, wherein there are provided a process to produce input luminance signals and input color signals from the inputted-image data, a process to produce large region luminance signals and detail luminance signals from the input luminance signals, a process to conduct a conversion processing on at least the large region luminance signals to make them to be converted-large region luminance signals, a process to produce difference-large region luminance signals from the converted-large region luminance signals and the large region luminance signals, a process to conduct a conversion processing on at least the input color signals to make them to be converted-input color signals, a process to produce difference-input color signals from the converted-input color signals and the detail input color signals, a process to produce visual image-referred data by using at least the converted-large region luminance signals, the detail luminance signals and the converted-input color signals and a process to record at least the converted-large region luminance signals, the difference-large region luminance signals, the detail luminance signals, the converted-input color signals and the difference-input color signals on the recording medium.

The apparatus described in Item 79 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals and a device to record at least the converted-large region luminance signals, the difference-large region luminance signals, the detail luminance signals and the input color signals on the recording medium.

The apparatus described in Item 80 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals, a device to conduct a conversion processing on at least the detail luminance signals to make them to be converted-detail luminance signals, a device to produce difference-detail luminance signals from the converted-detail luminance signals and the large region luminance signals and a device to record at least the converted-large region luminance signals, the difference-large region luminance signals, the converted-detail luminance signals, the difference-detail luminance signals and the input color signals on the recording medium.

The apparatus described in Item 81 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals, a device to conduct a conversion processing on at least the input color signals to make them to be converted-input color signals, a device to produce difference-input color signals from the converted-input color signals and the input color signals and a device to record at least the converted-large region luminance signals, the difference-large region luminance signals, the detail luminance signals, the converted-input color signals and the difference-input color signals on the recording medium.

The apparatus described in Item 82 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals, a device to produce visual image-referred data by using at least the converted-large region luminance signals, the detail luminance signals and the input color signals and a device to record at least the visual image-referred data, the converted-large region luminance signals, the difference-large region luminance signals, the detail luminance signals and the input color signals on the recording medium.

The apparatus described in Item 83 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals, a device to conduct a conversion processing on at least detail luminance signals to make them to be converted-detail luminance signals, a device to produce difference-detail luminance signals from the converted-detail luminance signals and the large region luminance signals, a device to produce visual image-referred data by using at least the converted-large region luminance signals, the converted-detail luminance signals and the input color signals and a device to record at least the visual image-referred data, the converted-large region luminance signals, the difference-large region luminance signals, the converted-detail luminance signals, the difference-detail luminance signals and the input color signals on the recording medium.

The apparatus described in Item 84 is that an image recording apparatus to conduct, on inputted-image data, the image processing to optimize formation of a visual image on an output medium, and thereby to record on a recording medium the image data for producing visual image-referred data, wherein there are provided a device to produce input luminance signals and input color signals from the inputted-image data, a device to produce large region luminance signals and detail luminance signals from the input luminance signals, a device to conduct a conversion processing on at least the large region luminance signals to make them to be converted-large region luminance signals, a device to produce difference-large region luminance signals from the converted-large region luminance signals and the large region luminance signals, a device to conduct a conversion processing on at least the input color signals to make them to be converted-input color signals, a device to produce difference-input color signals from the converted-input color signals and the detail input color signals, a device to produce visual image-referred data by using at least the converted-large region luminance signals, the detail luminance signals and the converted-input color signals and a device to record at least the converted-large region luminance signals, the difference-large region luminance signals, the detail luminance signals, the converted-input color signals and the difference-input color signals on the recording medium.

The method described in Item 137 is that an image processing method to conduct, on inputted-image data, the image processing to optimize formation of a visual image on an output medium, and thereby producing visual image-referred data, wherein the image processing method comprises a process to obtain at least converted-large region luminance signals, difference-large region luminance signals, detail luminance signals, and input color signals from the inputted-image data and a process to produce the visual image-referred data by using the obtained converted-large region luminance signals, difference-large region luminance signals, detail luminance signals, and input color signals.

The method described in Item 138 is that an image processing method to conduct, on inputted-image data, the image processing to optimize formation of a visual image on an output medium, and thereby producing visual image-referred data, wherein the image processing method comprises a process to obtain at least converted-large region luminance signals, difference-large region luminance signals, converted-detail luminance signals, difference-detail luminance signals and input color signals from the inputted-image data and a process to produce the visual image-referred data by using the obtained converted-large region luminance signals, difference-large region luminance signals, converted-detail luminance signals, difference-detail luminance signals and input color signals.

The method described in Item 139 is that an image processing method to conduct, on inputted-image data, the image processing to optimize formation of a visual image on an output medium, and thereby producing visual image-referred data, wherein the image processing method comprises a process to obtain at least converted-large region luminance signals, difference-large region luminance signals, detail luminance signals, converted-input color signals and difference-input color signals from the inputted-image data and a process to produce the visual image-referred data by using the obtained converted-large region luminance signals, difference-large region luminance signals, detail luminance signals, converted-input color signals and difference-input color signals.

The method described in Item 140 is that an image processing method to conduct, on inputted-image data, the image processing to optimize formation of a visual image on an output medium, and thereby producing visual image-referred data, wherein the image processing method comprises a process to obtain at least visual image-referred data, converted-large region luminance signals, difference-large region luminance signals, detail luminance signals, and input color signals from the inputted-image data and a process to produce revised-visual image-referred data by using the obtained visual image-referred data, converted-large region luminance signals, difference-large region luminance signals, detail luminance signals, and input color signals.

The method described in Item 141 is that an image processing method to conduct, on inputted-image data, the image processing to optimize formation of a visual image on an output medium, and thereby producing visual image-referred data, wherein the image processing method comprises a process to obtain at least visual image-referred data, converted-large region luminance signals, difference-large region luminance signals, converted-detail luminance signals, difference-detail luminance signals and input color signals from the inputted-image data and a process to produce revised-visual image-referred data by using the obtained visual image-referred data, converted-large region luminance signals, difference-large region luminance signals, converted-detail luminance signals, difference-detail luminance signals and input color signals.

The method described in Item 142 is that an image processing method to conduct, on inputted-image data, the image processing to optimize formation of a visual image on an output medium, and thereby producing visual image-referred data, wherein the image processing method comprises a process to obtain at least visual image-referred data, converted-large region luminance signals, difference-large region luminance signals, detail luminance signals, converted-input color signals and difference-input color signals from the inputted-image data and a process to produce revised-visual image-referred data by using the obtained visual image-referred data, converted-large region luminance signals, difference-large region luminance signals, detail luminance signals, converted-input color signals and difference-input color signals.

The structure described in Item 170 is that an image processing apparatus to conduct, on inputted-image data, the image processing to optimize formation of a visual image on an output medium, and thereby producing visual image-referred data, wherein the image processing apparatus comprises a device to obtain at least converted-large region luminance signals, difference-large region luminance signals, detail luminance signals, and input color signals from the inputted-image data and a device to produce the visual image-referred data by using the obtained converted-large region luminance signals, difference-large region luminance signals, detail luminance signals, and input color signals.

The structure described in Item 171 is that an image processing apparatus to conduct, on inputted-image data, the image processing to optimize formation of a visual image on an output medium, and thereby producing visual image-referred data, wherein the image processing apparatus comprises a device to obtain at least converted-large region luminance signals, difference-large region luminance signals, converted-detail luminance signals, difference-detail luminance signals and input color signals from the inputted-image data and a device to produce the visual image-referred data by using the obtained converted-large region luminance signals, difference-large region luminance signals, converted-detail luminance signals, difference-detail luminance signals and input color signals.

The structure described in Item 172 is that an image processing apparatus to conduct, on inputted-image data, the image processing to optimize formation of a visual image on an output medium, and thereby producing visual image-referred data, wherein the image processing apparatus comprises a device to obtain at least converted-large region luminance signals, difference-large region luminance signals, detail luminance signals, converted-input color signals and difference-input color signals from the inputted-image data and a device to produce the visual image-referred data by using the obtained converted-large region luminance signals, difference-large region luminance signals, detail luminance signals, converted-input color signals and difference-input color signals.

The structure described in Item 173 is that an image processing apparatus to conduct, on inputted-image data, the image processing to optimize formation of a visual image on an output medium, and thereby producing visual image-referred data, wherein the image processing apparatus comprises a device to obtain at least visual image-referred data, converted-large region luminance signals, difference-large region luminance signals, detail luminance signals, and input color signals from the inputted-image data and a device to produce revised-visual image-referred data by using the obtained visual image-referred data, converted-large region luminance signals, difference-large region luminance signals, detail luminance signals, and input color signals.

The structure described in Item 174 is that an image processing apparatus to conduct, on inputted-image data, the image processing to optimize formation of a visual image on an output medium, and thereby producing visual image-referred data, wherein the image processing apparatus comprises a device to obtain at least visual image-referred data, converted-large region luminance signals, difference-large region luminance signals, converted-detail luminance signals, difference-detail luminance signals and input color signals from the inputted-image data and a device to produce revised-visual image-referred data by using the obtained visual image-referred data, converted-large region luminance signals, difference-large region luminance signals, converted-detail luminance signals, difference-detail luminance signals and input color signals.

The structure described in Item 175 is that an image processing apparatus to conduct, on inputted-image data, the image processing to optimize formation of a visual image on an output medium, and thereby producing visual image-referred data, wherein the image processing apparatus comprises a device to obtain at least visual image-referred data, converted-large region luminance signals, difference-large region luminance signals, detail luminance signals, converted-input color signals and difference-input color signals from the inputted-image data and a device to produce revised-visual image-referred data by using the obtained visual image-referred data, converted-large region luminance signals, difference-large region luminance signals, detail luminance signals, converted-input color signals and difference-input color signals.

The media described in Item 203 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals and a function to record at least the converted-large region luminance signals, the difference-large region luminance signals, the detail luminance signals and the input color signals on the recording medium.

The media described in Item 204 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the detail luminance signals to make them to be converted-detail luminance signals, a function to produce difference-detail luminance signals from the converted-detail luminance signals and the large region luminance signals and a function to record at least the converted-large region luminance signals, the difference-large region luminance signals, the converted-detail luminance signals, the difference-detail luminance signals and the input color signals on the recording medium.

The media described in Item 205 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the input color signals to make them to be converted-input color signals, a function to produce difference-input color signals from the converted-input color signals and the input color signals and a function to record at least the converted-large region luminance signals, the difference-large region luminance signals, the detail luminance signals, the converted-input color signals and the difference-input color signals on the recording medium.

The media described in Item 206 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to produce visual image-referred data by using at least the converted-large region luminance signals, the detail luminance signals and the input color signals and a function to record at least the visual image-referred data, the converted-large region luminance signals, the difference-large region luminance signals, the detail luminance signals and the input color signals on the recording medium.

The media described in Item 207 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least detail luminance signals to make them to be converted-detail luminance signals, a function to produce difference-detail luminance signals from the converted-detail luminance signals and the large region luminance signals, a function to produce visual image-referred data by using at least the converted-large region luminance signals, the converted-detail luminance signals and the input color signals and a function to record at least the visual image-referred data, the converted-large region luminance signals, the difference-large region luminance signals, the converted-detail luminance signals, the difference-detail luminance signals and the input color signals on the recording medium.

The media described in Item 208 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the input color signals to make them to be converted-input color signals, a function to produce difference-input color signals from the converted-input color signals and the detail input color signals, a function to produce visual image-referred data by using at least the converted-large region luminance signals, the detail luminance signals and the converted-input color signals and a function to record at least the converted-large region luminance signals, the difference-large region luminance signals, the detail luminance signals, the converted-input color signals and the difference-input color signals on the recording medium.

The media described in Item 261 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, detail luminance signals, and input color signals from the inputted-image data and a function to produce the visual image-referred data by using the obtained converted-large region luminance signals, difference-large region luminance signals, detail luminance signals, and input color signals.

The media described in Item 262 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, converted-detail luminance signals, difference-detail luminance signals and input color signals from the inputted-image data and a function to produce the visual image-referred data by using the obtained converted-large region luminance signals, difference-large region luminance signals, converted-detail luminance signals, difference-detail luminance signals and input color signals.

The media described in Item 263 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, detail luminance signals, converted-input color signals and difference-input color signals from the inputted-image data and a function to produce the visual image-referred data by using the obtained converted-large region luminance signals, difference-large region luminance signals, detail luminance signals, converted-input color signals and difference-input color signals.

The media described in Item 264 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, detail luminance signals, and input color signals from the inputted-image data and a function to produce revised-visual image-referred data by using the obtained visual image-referred data, converted-large region luminance signals, difference-large region luminance signals, detail luminance signals, and input color signals.

The media described in Item 265 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, converted-detail luminance signals, difference-detail luminance signals and input color signals from the inputted-image data and a function to produce revised-visual image-referred data by using the obtained visual image-referred data, converted-large region luminance signals, difference-large region luminance signals, converted-detail luminance signals, difference-detail luminance signals and input color signals.

The media described in Item 266 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, detail luminance signals, converted-input color signals and difference-input color signals from the inputted-image data and a function to produce revised-visual image-referred data by using the obtained visual image-referred data, converted-large region luminance signals, difference-large region luminance signals, detail luminance signals, converted-input color signals and difference-input color signals.

The program described in Item 294 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals and a function to record at least the converted-large region luminance signals, the difference-large region luminance signals, the detail luminance signals and the input color signals on the recording medium.

The program described in Item 295 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the detail luminance signals to make them to be converted-detail luminance signals, a function to produce difference-detail luminance signals from the converted-detail luminance signals and the large region luminance signals and a function to record at least the converted-large region luminance signals, the difference-large region luminance signals, the converted-detail luminance signals, the difference-detail luminance signals and the input color signals on the recording medium.

The program described in Item 296 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the input color signals to make them to be converted-input color signals, a function to produce difference-input color signals from the converted-input color signals and the input color signals and a function to record at least the converted-large region luminance signals, the difference-large region luminance signals, the detail luminance signals, the converted-input color signals and the difference-input color signals on the recording medium.

The program described in Item 297 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to produce visual image-referred data by using at least the converted-large region luminance signals, the detail luminance signals and the input. color signals and a function to record at least the visual image-referred data, the converted-large region luminance signals, the difference-large region luminance signals, the detail luminance signals and the input color signals on the recording medium.

The program described in Item 298 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least detail luminance signals to make them to be converted-detail luminance signals, a function to produce difference-detail luminance signals from the converted-detail luminance signals and the large region luminance signals, a function to produce visual image-referred data by using at least the converted-large region luminance signals, the converted-detail luminance signals and the input color signals and a function to record at least the visual image-referred data, the converted-large region luminance signals, the difference-large region luminance signals, the converted-detail luminance signals, the difference-detail luminance signals and the input color signals on the recording medium.

The program described in Item 299 is that a program to make a computer to conduct, on inputted-image data, the image processing to optimize formation of a visual image on an output medium, and thereby to record on a recording medium the image data for producing visual image-referred data, wherein there are provided a function to produce input luminance signals and input color signals from the inputted-image data, a function to produce large region luminance signals and detail luminance signals from the input luminance signals, a function to conduct a conversion processing on at least the large region luminance signals to make them to be converted-large region luminance signals, a function to produce difference-large region luminance signals from the converted-large region luminance signals and the large region luminance signals, a function to conduct a conversion processing on at least the input color signals to make them to be converted-input color signals, a function to produce difference-input color signals from the converted-input color signals and the detail input color signals, a function to produce visual image-referred data by using at least the converted-large region luminance signals, the detail luminance signals and the converted-input color signals and a function to record at least the converted-large region luminance signals, the difference-large region luminance signals, the detail luminance signals, the converted-input color signals and the difference-input color signals on the recording medium.

The program described in Item 352 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, detail luminance signals, and input color signals from the inputted-image data and a function to produce the visual image-referred data by using the obtained converted-large region luminance signals, difference-large region luminance signals, detail luminance signals, and input color signals.

The program described in Item 353 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, converted-detail luminance signals, difference-detail luminance signals and input color signals from the inputted-image data and a function to produce the visual image-referred data by using the obtained converted-large region luminance signals, difference-large region luminance signals, converted-detail luminance signals, difference-detail luminance signals and input color signals.

The program described in Item 354 is that a recording media capable of being read by a computer and to record a program to conduct, on inputted-image data, the image processing to optimize formation of a visual image on an output medium, and thereby producing visual image-referred data, wherein the recording media comprises a function to obtain at least converted-large region luminance signals, difference-large region luminance signals, detail luminance signals, converted-input color signals and difference-input color signals from the inputted-image data and a function to produce the visual image-referred data by using the obtained converted-large region luminance signals, difference-large region luminance signals, detail luminance signals, converted-input color signals and difference-input color signals.

The program described in Item 355 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, detail luminance signals, and input color signals from the inputted-image data and a function to produce revised-visual image-referred data by using the obtained visual image-referred data, converted-large region luminance signals, difference-large region luminance signals, detail luminance signals, and input color signals.

The program described in Item 356 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, converted-detail luminance signals, difference-detail luminance signals and input color signals from the inputted-image data and a function to produce revised-visual image-referred data by using the obtained visual image-referred data, converted-large region luminance signals, difference-large region luminance signals, converted-detail luminance signals, difference-detail luminance signals and input color signals.

The program described in Item 357 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, converted-large region luminance signals, difference-large region luminance signals, detail luminance signals, converted-input color signals and difference-input color signals from the inputted-image data and a function to produce revised-visual image-referred data by using the obtained visual image-referred data, converted-large region luminance signals, difference-large region luminance signals, detail luminance signals, converted-input color signals and difference-input color signals.

The fifth group is composed of the image recording method described in Items 21-26, the image recording apparatus described in Items 79-84, the image processing method described in Items 137-142, the image processing apparatus described in Items 170-175, the recording medium described in Items 203-208, the program described in Items 261-266, the recording medium described in Items 294-299, the program described in Items 352-357.

It is described above that, when the user conducts the image processing, the gradation conversion processing by which the gradation to control the impression of the whole image is corrected, is largely used, and the fifth invention group is structured by considering this point from the second invention group.

In contrast to that the second invention group records the large region signal, or obtains it and generates the visual image-referred data, in the fifth invention group, it is a character that, instead of the large region signal, the converted-large region signal in which the conversion processing, for example, the gradation conversion processing is conducted on the large region signal, and the difference-large region signal which means the content of conversion processing or degree of the processing, are recorded or obtained, and the visual image-referred data is generated, and by structuring as this, the user can simply conduct the largely used gradation processing.

The first characteristic of the fifth invention group, is to generate the input color signal and input luminance signal from the input image data, and to generate the large region luminance signal and detail luminance signal, to generate the converted-large region luminance signal by conducting the conversion processing on the large region luminance signal, to generate the difference-large region luminance signal from the large region luminance signal and converted-large region luminance signal, and to record at least the converted-large region luminance signal, difference-large region luminance signal, detail luminance signal and input color signal.

In the present fifth invention group, it is preferable to record at least the input color signal, converted-large region luminance signal, difference-large region luminance signal, and detail luminance signal. Further, instead of the above detail luminance signal, it is also preferable to record the converted-detail luminance signal and difference-detail luminance signal, and further, instead of the above input color signal, it is also preferable to record the converted-input color signal and difference-input color signal.

Further, a mode is also preferable in which, together with at least the input color signal, converted-large region luminance signal, difference-large region luminance signal, and detail luminance signal, the visual image-referred data generated by using the input color signal, converted-large region luminance signal, and detail luminance signal, is recorded, and it is also preferable that, together with the input color signal, converted-large region luminance signal, difference-large region luminance signal, converted-detail luminance signal and difference-detail luminance signal, the visual image-referred data generated by using the input color signal, converted-large region luminance signal, and converted-detail luminance signal, is recorded, and it is also preferable that, together with the converted-input color signal, difference-input color signal, converted-large region luminance signal, difference-large region luminance signal and detail luminance signal, the visual image-referred data generated by using the converted-input color signal, converted-large region luminance signal, and detail luminance signal, is recorded, and it is also preferable that, together with the converted-input color signal, difference-input color signal, converted-large region luminance signal, difference-large region luminance signal, converted-detail luminance signal, and difference-detail luminance signal, the visual image-referred data generated by using the converted-input color signal, converted-large region luminance signal, and converted-detail luminance signal, is recorded.

The "converted-large region luminance signal" is a signal which is the same intention of generation as the converted-large region signal, and generated by conducting the conversion processing on the large region luminance signal. In the "conversion processing conducted on the large region luminance signal", the same method as the conversion processing conducted on the large region signal when the converted-large region signal is generated, can be applied, and the gradation conversion processing to correct the gradation is preferable, and various methods known in the present industry are applied.

The "difference-large region luminance signal" is a signal which is the same intention of the generation as the difference-large region signal, and generated from the "large region luminance signal" and "converted-large region luminance signal", and intends that the content or degree of the influence generated by the processing conducted on the large region luminance signal is conserved. In the generation, for example, a method is also simple and preferable by which the difference of the "large region luminance signal" and "converted-large region luminance signal" is calculated, and it is also allowable that the ratio of the "large region luminance signal" and "converted-large region luminance signal" is calculated, but it is not limited to this.

Further, the second characteristic of the fifth invention group is to obtain at least the converted-large region luminance signal, difference-large region luminance signal, detail luminance signal and input color signal, and by using them, to generate the visual image-referred data. In the above mode, it is also preferable that, instead of the detail luminance signal, the converted-detail luminance signal, and difference-detail luminance signal are obtained, and visual image-referred data is generated, and it is also preferable that, instead of input color signal, the converted-input color signal and difference-input color signal are obtained, and the visual image-referred data is generated. Further, in each of above modes, further, it is also preferable that the visual image-referred data is obtained together, and by using them, the revised-visual image-referred data whose condition of the image is different from the obtained visual image-referred data is generated.

In the fifth invention group, in the same manner as the first invention group, because the image processing can be conducted on the base of the already separated signal, the simple processing whose processing load is low for the user is realized, and also when the processing is re-done, because there is no trouble by which the signal is newly separated, in addition to that there is an advantage in which the processing load is low, instead of the large region signal or detail signal, in order to generate the visual image-referred data by using the large region luminance signal and detail luminance signal structured by the luminance component of the large region signal or detail signal, a point in which user's intention is more easily reflected and also the user can easily select the processing method, or when the user desires to change the degree of the gradation processing in which the user largely uses at the time of the image processing, there is an advantage in which, by using the difference-large region signal, the degree of the processing can be simply changed.

These plurality of advantages are combined with each other, in a point of view that user's processing load is reduced or the selection of the processing is made easy, it is confirmed that the effect far beyond supposition is realized.

In the fifth invention group, as the generation method of the visual image-referred data using the obtained signal, a method is preferable by which a predetermined image processing along user's intention is conducted on the obtained converted-large region luminance signal, difference-large region luminance signal, detail luminance signal and input color signal, and it is generated by using them. It is of course that the image processing is conducted on each of obtained respective signals and the visual image-referred data is generated by using the processed signals, and it is needless to say that, corresponding to the intention, a mode by which the image processing is conducted on only some of them, or the image processing is not conducted, is also possible.

For example, it is also allowable that the converted-large region luminance signal and detail luminance signal are added as it is, and composition processing is conducted with the input color signal, and the visual image-referred data is generated, and it is also allowable that, for example, after the detail luminance signal on which a predetermined image processing is conducted is added to the converted-large region luminance signal, the composition processing is conducted with the input color signal, and the visual image-referred data is generated.

Further, when the visual image-referred data obtained from the medium, or the visual image-referred data generated by the above method does not coincide with user's taste, it is easily possible that, by using the obtained difference-large region luminance signal, the degree of the conversion processing conducted on the large region luminance signal is changed. Specifically, for example, the difference-large region luminance signal multiplied by a predetermined coefficient may be added to the visual image-referred data. When the user conducts the repeated processing again until it coincides with the taste, the simplicity in which, at every time of re-doing, without any trouble that it is newly separated, the degree of the processing can be changed, is a large advantage of the present invention.

Further, when a method of the conversion processing conducted on the large region luminance signal in order to generate the converted-large region luminance signal does not coincide with user's intention, it is also possible that, as described above, without re-structuring even the input image data, when the obtained converted-large region luminance signal, and difference-large region luminance signal are added, the large region luminance signal is re-structured.

Further, when the separation condition of the obtained large region luminance signal and detail luminance signal does not coincide with user's intention, it is also possible that the obtained large region luminance signal and detail luminance signal are added, and the input luminance signal is re-structured. Further, when the separation condition of the input luminance signal and input color signal does not coincide with user's intention, it is also further possible that the obtained input color signal and the above re-structured input luminance signal are added, and the input image data is re-structured.

Further, in the generation of the above visual image-referred data, also in the present invention group, a mode is also preferable in which, in the same manner as the second invention group, instead of the detail luminance signal, the converted-detail luminance signal and difference-detail luminance signal are obtained, and the visual image-referred data is generated.

Further, in the generation of the above visual image-referred data, also in the present invention group, a mode is also preferable in which, in the same manner as the second invention group, instead of input color signal, the converted-input color signal and difference-input color signal are obtained, and the visual image-referred data is generated.

The method described in Item 27 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals and a process to record at least the color-converted converted-large region luminance signals, the color-converted difference-large region luminance signals, the color-converted detail luminance signals and the color-converted input color signals on the recording medium.

The method described in Item 28 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals, a process to conduct a conversion processing on at least the color-converted detail luminance signals to make them to be color-converted converted-detail luminance signals, a process to produce color-converted difference-detail luminance signals from the color-converted detail luminance signals and the color-converted converted-detail luminance signals, and a process to record at least the color-converted converted-large region luminance signals, the color-converted difference-large region luminance signals, the color-converted converted detail luminance signals, the color-converted difference-detail luminance signals and the color-converted input color signals on the recording medium.

The method described in Item 29 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals, a process to conduct a conversion processing on the color-converted input color signals and thereby to produce color-converted converted-input color signals, a process to produce color-converted difference-input color signals by using the color-converted input color signals and the color-converted converted-input color signals and a process to record at least the color-converted converted-large region luminance signals, the color-converted difference-large region luminance signals, the color-converted detail luminance signals, the color-converted converted-input color signals and the color-converted difference-input color signals on the recording medium.

The method described in Item 30 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals, a process to produce visual image-referred data from the color-converted converted-large region luminance signals, the color-converted detail luminance signals and the color-converted input color signals and a process to record at least the visual image-referred data, the color-converted converted-large region luminance signals, the color-converted difference-large region luminance signals, the color-converted detail luminance signals and the color-converted input color signals on the recording medium.

The method described in Item 31 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals, a process to conduct a conversion processing on at least the color-converted detail luminance signals to make them to be color-converted converted-detail luminance signals, a process to produce color-converted difference-detail luminance signals from the color-converted detail luminance signals and the color-converted converted-detail luminance signals, a process to produce visual image-referred data from the color-converted converted-large region luminance signals, the color-converted converted-detail luminance signals and the color-converted input color signals and a process to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The method described in Item 32 is that an image recording method to conduct, on inputted-image data, the image processing to optimize formation of a visual image on an output medium, and thereby to record on a recording medium the image data for producing visual image-referred data, wherein there are provided a process to conduct a color gamut converting processing on the inputted-image data and thereby to produce color-converted input luminance signals and color-converted input color signals, a process to produce color-converted large region luminance signals and color-converted detail luminance signals from the color-converted input luminance signals, a process to conduct a conversion processing on at least the color-converted large region luminance signals to make them to be color-converted converted-large region luminance signals, a process to produce color-converted difference-large region luminance signals from the color-converted large region luminance signals and the color-converted converted-large region luminance signals, a process to conduct a conversion processing on the color-converted input color signals and thereby to produce color-converted converted-input color signals, a process to produce color-converted difference-input color signals by using the color-converted input color signals and the color-converted converted-input color signals, a process to produce visual image-referred data from the color-converted converted-large region luminance signals, the color-converted detail luminance signals and the color-converted converted-input color signals and a process to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The apparatus described in Item 85 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals and a device to record at least the color-converted converted-large region luminance signals, the color-converted difference-large region luminance signals, the color-converted detail luminance signals and the color-converted input color signals on the recording medium.

The apparatus described in Item 86 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals, a device to conduct a conversion processing on at least the color-converted detail luminance signals to make them to be color-converted converted-detail luminance signals, a device to produce color-converted difference-detail luminance signals and a device to record at least the color-converted converted-large region luminance signals, the color-converted difference-large region luminance signals, the color-converted converted detail luminance signals, the color-converted difference-detail luminance signals and the color-converted input color signals on the recording medium.

The apparatus described in Item 87 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals, a device to conduct a conversion processing on the color-converted input color signals and thereby to produce color-converted converted-input color signals, a device to produce color-converted difference-input color signals by using the color-converted input color signals and the color-converted converted-input color signals and a device to record at least the color-converted converted-large region luminance signals, the color-converted difference-large region luminance signals, the color-converted detail luminance signals, the color-converted converted-input color signals and the color-converted difference-input color signals on the recording medium.

The apparatus described in Item 88 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals, a device to produce visual image-referred data from the color-converted converted-large region luminance signals, the color-converted detail luminance signals and the color-converted input color signals and a device to record at least the visual image-referred data, the color-converted converted-large region luminance signals, the color-converted difference-large region luminance signals, the color-converted detail luminance signals and the color-converted input color signals on the recording medium.

The apparatus described in Item 89 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals, a device to conduct a conversion processing on at least the color-converted detail luminance signals to make them to be color-converted converted-detail luminance signals, a device to produce color-converted difference-detail luminance signals from the color-converted detail luminance signals and the color-converted converted-detail luminance signals, a device to produce visual image-referred data from the color-converted converted-large region luminance signals, the color-converted converted-detail luminance signals and the color-converted input color signals and a device to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The apparatus described in Item 90 is that an image recording apparatus to conduct, on inputted-image data, the image processing to optimize formation of a visual image on an output medium, and thereby to record on a recording medium the image data for producing visual image-referred data, wherein there are provided a device to conduct a color gamut converting processing on the inputted-image data and thereby to produce color-converted input luminance signals and color-converted input color signals, a device to produce color-converted large region luminance signals and color-converted detail luminance signals from the color-converted input luminance signals, a device to conduct a conversion processing on at least the color-converted large region luminance signals to make them to be color-converted converted-large region luminance signals, a device to produce color-converted difference-large region luminance signals from the color-converted large region luminance signals and the color-converted converted-large region luminance signals, a device to conduct a conversion processing on the color-converted input color signals and thereby to produce color-converted converted-input color signals, a device to produce color-converted difference-input color signals by using the color-converted input color signals and the color-converted converted-input color signals, a device to produce visual image-referred data from the color-converted converted-large region luminance signals, the color-converted detail luminance signals and the color-converted converted-input color signals and a device to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The method described in Item 143 is that an image processing method to conduct, on inputted-image data, the image processing to optimize formation of a visual image on an output medium, and thereby producing visual image-referred data, wherein the image processing method comprises a process to obtain at least color-converted converted-large region luminance signals, color-converted difference-large region luminance signals, color-converted detail luminance signals, and color-converted input color signals from the inputted-image data and a process to produce the visual image-referred data by using the obtained color-converted converted-large region luminance signals, color-converted difference-large region luminance signals, color-converted detail luminance signals, and color-converted input color signals.

The method described in Item 144 is that an image processing method to conduct, on inputted-image data, the image processing to optimize formation of a visual image on an output medium, and thereby producing visual image-referred data, wherein the image processing method comprises a process to obtain at least color-converted converted-large region luminance signals, color-converted difference-large region luminance signals, color-converted converted-detail luminance signals, color-converted difference-detail luminance signals, and color-converted input color signals from the inputted-image data and a process to produce the visual image-referred data by using the obtained color-converted converted-large region luminance signals, color-converted difference-large region luminance signals, color-converted converted-detail luminance signals, color-converted difference-detail luminance signals, and color-converted input color signals.

The method described in Item 145 is that an image processing method to conduct, on inputted-image data, the image processing to optimize formation of a visual image on an output medium, and thereby producing visual image-referred data, wherein the image processing method comprises a process to obtain at least color-converted converted-large region luminance signals, color-converted difference-large region luminance signals, color-converted detail luminance signals, color-converted converted-input color signals and color-converted difference-input color signals from the inputted-image data and a process to produce the visual image-referred data by using the obtained color-converted converted-large region luminance signals, color-converted difference-large region luminance signals, color-converted detail luminance signals, color-converted converted-input color signals and color-converted difference-input color signals.

The method described in Item 146 is that an image processing method to conduct, on inputted-image data, the image processing to optimize formation of a visual image on an output medium, and thereby producing visual image-referred data, wherein the image processing method comprises a process to obtain at least visual image-referred data, color-converted converted-large region luminance signals, color-converted difference-large region luminance signals, color-converted detail luminance signals, and color-converted input color signals from the inputted-image data and a process to produce revised-visual image-referred data by using the obtained visual image-referred data, color-converted converted-large region luminance signals, color-converted difference-large region luminance signals, color-converted detail luminance signals, and color-converted input color signals.

The method described in Item 147 is that an image processing method to conduct, on inputted-image data, the image processing to optimize formation of a visual image on an output medium, and thereby producing visual image-referred data, wherein the image processing method comprises a process to obtain at least visual image-referred data, color-converted converted-large region luminance signals, color-converted difference-large region luminance signals, color-converted converted-detail luminance signals, color-converted difference-detail luminance signals, and color-converted input color signals from the inputted-image data and a process to produce revised-visual image-referred data by using the obtained visual image-referred data, color-converted converted-large region luminance signals, color-converted difference-large region luminance signals, color-converted converted-detail luminance signals, color-converted difference-detail luminance signals, and color-converted input color signals.

The method described in Item 148 is that an image processing method to conduct, on inputted-image data, the image processing to optimize formation of a visual image on an output medium, and thereby producing visual image-referred data, wherein the image processing method comprises a process to obtain at least visual image-referred data, color-converted large region luminance signals, color-converted difference-large region luminance signals, color-converted detail luminance signals, color-converted converted- input color signals, and color-converted difference-input color signals from the inputted-image data and a process to produce revised-visual image-referred data by using the obtained visual image-referred data, color-converted large region luminance signals, color-converted difference-large region luminance signals, color-converted detail luminance signals, color-converted converted- input color signals, and color-converted difference-input color signals.

The structure described in Item 176 is that an image processing apparatus to conduct, on inputted-image data, the image processing to optimize formation of a visual image on an output medium, and thereby producing visual image-referred data, wherein the image processing apparatus comprises a device to obtain at least color-converted converted-large region luminance signals, color-converted difference-large region luminance signals, color-converted detail luminance signals, and color-converted input color signals from the inputted-image data and a device to produce the visual image-referred data by using the obtained color-converted converted-large region luminance signals, color-converted difference-large region luminance signals, color-converted detail luminance signals, and color-converted input color signals.

The structure described in Item 177 is that an image processing apparatus to conduct, on inputted-image data, the image processing to optimize formation of a visual image on an output medium, and thereby producing visual image-referred data, wherein the image processing apparatus comprises a device to obtain at least color-converted converted-large region luminance signals, color-converted difference-large region luminance signals, color-converted converted-detail luminance signals, color-converted difference-detail luminance signals, and color-converted input color signals from the inputted-image data and a device to produce the visual image-referred data by using the obtained color-converted converted-large region luminance signals, color-converted difference-large region luminance signals, color-converted converted-detail luminance signals, color-converted difference-detail luminance signals, and color-converted input color signals.

The structure described in Item 178 is that an image processing apparatus to conduct, on inputted-image data, the image processing to optimize formation of a visual image on an output medium, and thereby producing visual image-referred data, wherein the image processing apparatus comprises a device to obtain at least color-converted converted-large region luminance signals, color-converted difference-large region luminance signals, color-converted detail luminance signals, color-converted converted-input color signals and color-converted difference-input color signals from the inputted-image data and a device to produce the visual image-referred data by using the obtained color-converted converted-large region luminance signals, color-converted difference-large region luminance signals, color-converted detail luminance signals, color-converted converted-input color signals and color-converted difference-input color signals.

The structure described in Item 179 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted converted-large region luminance signals, color-converted difference-large region luminance signals, color-converted detail luminance signals, and color-converted input color signals from the inputted-image data and a device to produce revised-visual image-referred data by using the obtained visual image-referred data, color-converted converted-large region luminance signals, color-converted difference-large region luminance signals, color-converted detail luminance signals, and color-converted input color signals.

The structure described in Item 180 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted converted-large region luminance signals, color-converted difference-large region luminance signals, color-converted converted-detail luminance signals, color-converted difference-detail luminance signals, and color-converted input color signals from the inputted-image data and a device to produce revised-visual image-referred data by using the obtained visual image-referred data, color-converted converted-large region luminance signals, color-converted difference-large region luminance signals, color-converted converted-detail luminance signals, color-converted difference-detail luminance signals, and color-converted input color signals.

The structure described in Item 181 is that an image processing apparatus to conduct, on inputted-image data, the image processing to optimize formation of a visual image on an output medium, and thereby producing visual image-referred data, wherein the image processing apparatus comprises a device to obtain at least visual image-referred data, color-converted large region luminance signals, color-converted difference-large region luminance signals, color-converted detail luminance signals, color-converted converted- input color signals, and color-converted difference-input color signals from the inputted-image data and a device to produce revised-visual image-referred data by using the obtained visual image-referred data, color-converted large region luminance signals, color-converted difference-large region luminance signals, color-converted detail luminance signals, color-converted converted- input color signals, and color-converted difference-input color signals.

The media described in Item 209 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals and a function to record at least the color-converted converted-large region luminance signals, the color-converted difference-large region luminance signals, the color-converted detail luminance signals and the color-converted input color signals on the recording medium.

The media described in Item 210 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on at least the color-converted detail luminance signals to make them to be color-converted converted-detail luminance signals, a function to produce color-converted difference-detail luminance signals and a function to record at least the color-converted converted-large region luminance signals, the color-converted difference-large region luminance signals, the color-converted converted detail luminance signals, the color-converted difference-detail luminance signals and the color-converted input color signals on the recording medium.

The media described in Item 211 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on the color-converted input color signals and thereby to produce color-converted converted-input color signals, a function to produce color-converted difference-input color signals by using the color-converted input color signals and the color-converted converted-input color signals and a function to record at least the color-converted converted-large region luminance signals, the color-converted difference-large region luminance signals, the color-converted detail luminance signals, the color-converted converted-input color signals and the color-converted difference-input color signals on the recording medium.

The media described in Item 212 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to produce visual image-referred data from the color-converted converted-large region luminance signals, the color-converted detail luminance signals and the color-converted input color signals and a function to record at least the visual image-referred data, the color-converted converted-large region luminance signals, the color-converted difference-large region luminance signals, the color-converted detail luminance signals and the color-converted input color signals on the recording medium.

The media described in Item 213 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on at least the color-converted detail luminance signals to make them to be color-converted converted-detail luminance signals, a function to produce color-converted difference-detail luminance signals from the color-converted detail luminance signals and the color-converted converted-detail luminance signals, a function to produce visual image-referred data from the color-converted converted-large region luminance signals, the color-converted converted-detail luminance signals and the color-converted input color signals and a function to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The media described in Item 214 is that an recording media capable of being read by a computer and to record a program to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on the color-converted input color signals and thereby to produce color-converted converted-input color signals, a function to produce color-converted difference-input color signals by using the color-converted input color signals and the color-converted converted-input color signals, a function to produce visual image-referred data from the color-converted converted-large region luminance signals, the color-converted detail luminance signals and the color-converted converted-input color signals and a function to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The media described in Item 267 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted detail luminance signals, and color-converted input color signals from the inputted-image data and a function to produce the visual image-referred data by using the obtained color-converted converted-large region luminance signals, color-converted difference-large region luminance signals, color-converted detail luminance signals, and color-converted input color signals.

The media described in Item 268 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted converted-detail luminance signals, color-converted difference-detail luminance signals, and color-converted input color signals from the inputted-image data and a function to produce the visual image-referred data by using the obtained color-converted converted-large region luminance signals, color-converted difference-large region luminance signals, color-converted converted-detail luminance signals, color-converted difference-detail luminance signals, and color-converted input color signals.

The media described in Item 269 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted detail luminance signals, color-converted converted-input color signals and color-converted difference-input color signals from the inputted-image data and a function to produce the visual image-referred data by using the obtained color-converted converted-large region luminance signals, color-converted difference-large region luminance signals, color-converted detail luminance signals, color-converted converted-input color signals and color-converted difference-input color signals.

The media described in Item 270 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted converted-large region luminance signals, color-converted difference-large region luminance signals, color-converted detail luminance signals, and color-converted input color signals from the inputted-image data and a function to produce revised-visual image-referred data by using the obtained visual image-referred data, color-converted converted-large region luminance signals, color-converted difference-large region luminance signals, color-converted detail luminance signals, and color-converted input color signals.

The media described in Item 271 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted converted-large region luminance signals, color-converted difference-large region luminance signals, color-converted converted-detail luminance signals, color-converted difference-detail luminance signals, and color-converted input color signals from the inputted-image data and a function to produce revised-visual image-referred data by using the obtained visual image-referred data, color-converted converted-large region luminance signals, color-converted difference-large region luminance signals, color-converted converted-detail luminance signals, color-converted difference-detail luminance signals, and color-converted input color signals.

The media described in Item 272 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted difference-large region luminance signals, color-converted detail luminance signals, color-converted converted- input color signals, and color-converted difference-input color signals from the inputted-image data and a function to produce revised-visual image-referred data by using the obtained visual image-referred data, color-converted large region luminance signals, color-converted difference-large region luminance signals, color-converted detail luminance signals, color-converted converted- input color signals, and color-converted difference-input color signals.

The program described in Item 300 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals and a function to record at least the color-converted converted-large region luminance signals, the color-converted difference-large region luminance signals, the color-converted detail luminance signals and the color-converted input color signals on the recording medium.

The program described in Item 301 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on at least the color-converted detail luminance signals to make them to be color-converted converted-detail luminance signals, a function to produce color-converted difference-detail luminance signals and a function to record at least the color-converted converted-large region luminance signals, the color-converted difference-large region luminance signals, the color-converted converted detail luminance signals, the color-converted difference-detail luminance signals and the color-converted input color signals on the recording medium.

The program described in Item 302 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on the color-converted input color signals and thereby to produce color-converted converted-input color signals, a function to produce color-converted difference-input color signals by using the color-converted input color signals and the color-converted converted-input color signals and a function to record at least the color-converted converted-large region luminance signals, the color-converted difference-large region luminance signals, the color-converted detail luminance signals, the color-converted converted-input color signals and the color-converted difference-input color signals on the recording medium.

The program described in Item 303 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to produce visual image-referred data from the color-converted converted-large region luminance signals, the color-converted detail luminance signals and the color-converted input color signals and a function to record at least the visual image-referred data, the color-converted converted-large region luminance signals, the color-converted difference-large region luminance signals, the color-converted detail luminance signals and the color-converted input color signals on the recording medium.

The program described in Item 304 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on at least the color-converted detail luminance signals to make them to be color-converted converted-detail luminance signals, a function to produce color-converted difference-detail luminance signals from the color-converted detail luminance signals and the color-converted converted-detail luminance signals, a function to produce visual image-referred data from the color-converted converted-large region luminance signals, the color-converted converted-detail luminance signals and the color-converted input color signals and a function to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The program described in Item 305 is that a program to make a computer to conduct, on inputted-image data, the image processing to optimize formation of a visual image on an output medium, and thereby to record on a recording medium the image data for producing visual image-referred data, wherein there are provided a function to conduct a color gamut converting processing on the inputted-image data and thereby to produce color-converted input luminance signals and color-converted input color signals, a function to produce color-converted large region luminance signals and color-converted detail luminance signals from the color-converted input luminance signals, a function to conduct a conversion processing on at least the color-converted large region luminance signals to make them to be color-converted converted-large region luminance signals, a function to produce color-converted difference-large region luminance signals from the color-converted large region luminance signals and the color-converted converted-large region luminance signals, a function to conduct a conversion processing on the color-converted input color signals and thereby to produce color-converted converted-input color signals, a function to produce color-converted difference-input color signals by using the color-converted input color signals and the color-converted converted-input color signals, a function to produce visual image-referred data from the color-converted converted-large region luminance signals, the color-converted detail luminance signals and the color-converted converted-input color signals and a function to record at least the visual image-referred data, the color-converted converted-large region luminance signals, the color-converted difference-large region luminance signals, the color-converted converted-detail luminance signals, the color-converted difference-detail luminance signals and the color-converted input color signals on the recording medium.

The program described in Item 358 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted detail luminance signals, and color-converted input color signals from the inputted-image data and a function to produce the visual image-referred data by using the obtained color-converted converted-large region luminance signals, color-converted difference-large region luminance signals, color-converted detail luminance signals, and color-converted input color signals.

The program described in Item 359 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted converted-detail luminance signals, color-converted difference-detail luminance signals, and color-converted input color signals from the inputted-image data and a function to produce the visual image-referred data by using the obtained color-converted converted-large region luminance signals, color-converted difference-large region luminance signals, color-converted converted-detail luminance signals, color-converted difference-detail luminance signals, and color-converted input color signals.

The program described in Item 360 is that a recording media capable of being read by a computer and to record a program to conduct, on inputted-image data, the image processing to optimize formation of a visual image on an output medium, and thereby producing visual image-referred data, wherein the recording media comprises a function to obtain at least color-converted converted-large region luminance signals, color-converted difference-large region luminance signals, color-converted detail luminance signals, color-converted converted-input color signals and color-converted difference-input color signals from the inputted-image data and a function to produce the visual image-referred data by using the obtained color-converted converted-large region luminance signals, color-converted difference-large region luminance signals, color-converted detail luminance signals, color-converted converted-input color signals and color-converted difference-input color signals.

The program described in Item 361 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted converted-large region luminance signals, color-converted difference-large region luminance signals, color-converted detail luminance signals, and color-converted input color signals from the inputted-image data and a function to produce revised-visual image-referred data by using the obtained visual image-referred data, color-converted converted-large region luminance signals, color-converted difference-large region luminance signals, color-converted detail luminance signals, and color-converted input color signals.

The program described in Item 362 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted converted-large region luminance signals, color-converted difference-large region luminance signals, color-converted converted-detail luminance signals, color-converted difference-detail luminance signals, and color-converted input color signals from the inputted-image data and a function to produce revised-visual image-referred data by using the obtained visual image-referred data, color-converted converted-large region luminance signals, color-converted difference-large region luminance signals, color-converted converted-detail luminance signals, color-converted difference-detail luminance signals, and color-converted input color signals.

The program described in Item 363 is that a recording media capable of being read by a computer and to record a program to conduct, on inputted-image data, the image processing to optimize formation of a visual image on an output medium, and thereby producing visual image-referred data, wherein the recording media comprises a function to obtain at least visual image-referred data, color-converted large region luminance signals, color-converted difference-large region luminance signals, color-converted detail luminance signals, color-converted converted- input color signals, and color-converted difference-input color signals from the inputted-image data and a function to produce revised-visual image-referred data by using the obtained visual image-referred data, color-converted large region luminance signals, color-converted difference-large region luminance signals, color-converted detail luminance signals, color-converted converted- input color signals, and color-converted difference-input color signals.

In the sixth group of the image recording method described in Items 27-32, the image recording apparatus described in Items 85-90, the image processing method described in Items 143-148, the image processing apparatus described in Items 176-181, the recording medium described in Items 209-214, the program described in Items 267-272, the recording medium described in Items 300-305, the program described in Items 358-363, the third group has the similar structure of the second group, but is different from the second group in that the inputted-image data are subjected to a color converting process before input luminance signals and input color signals are produced from the inputted-image data.

The sixth invention group considers the condition that the conversion of the color space is necessary, in the same manner as the third invention group, and when the mode of the fourth and fifth invention groups in which the conversion processing of the color space is arranged in the beginning is structured, the reduction of user's processing load is an advantage.

In the fourth and fifth invention groups, after the gradation conversion including the local printing processing and the sharpness emphasis processing are conducted, it is necessary that conversion processing of the color space is conducted, and even when, for example, the gradation characteristic which coincides with user's taste is possessed, when the conversion processing of the color space is conducted, there is a disadvantage that the color balance is collapsed. Further, assuming the influence from the conversion processing of the color space conducted later, the gradation conversion is conducted, and it is almost impossible even more for general user to make unnecessary that the correction is conducted again, after the conversion processing of the color space.

However, in the present sixth invention group, because the conversion processing of the color space is arranged in the beginning, the processing such as gradation conversion processing can be advanced without considering the collapse of the color balance or the influence from the conversion processing of the color space, therefore, there is an advantage that the processing load is very lowered.

The first characteristic of the sixth invention group is that, after the color-converted processing is conducted on the input image data, the color-converted input luminance signal and color-converted input color signal are generated, color-converted large region luminance signal and color-converted detail luminance signal are generated from the color-converted input luminance signal, and the conversion processing is conducted on the color-converted large region luminance signal, and color-converted converted-large region luminance signal is generated, and the color-converted difference-large region luminance signal is generated from the color-converted large region luminance signal and color-converted converted-large region luminance signal, and at least the color-converted converted-large region luminance signal, color-converted difference-large region luminance signal, color-converted detail luminance signal and color-converted input color signal are recorded in the medium.

In the present sixth invention group, it is preferable that at least the color-converted input color signal, color-converted converted-large region luminance signal, color-converted difference-large region luminance signal, and color-converted detail luminance signal are recorded. Further, instead of the above color-converted detail luminance signal, it is also preferable that the color-converted converted-detail luminance signal and color-converted difference-detail luminance signal are recorded, and further, it is also preferable that, instead of the above color-converted input color signal, the color-converted converted-input color signal and color-converted difference-input color signal are recorded.

Further, a mode is also preferable that at least together with the color-converted input color signal, color-converted converted-large region luminance signal, color-converted difference-large region luminance signal, and color-converted detail luminance signal, the visual image-referred data generated by using the color-converted input color signal, color-converted converted-large region luminance signal, and color-converted detail luminance signal, is recorded, and it is also preferable that, together with the color-converted input color signal, color-converted converted-large region luminance signal, color-converted difference-large region luminance signal, color-converted converted-detail luminance signal, and color-converted difference-detail luminance signal, the visual image-referred data generated by using the color-converted input color signal, color-converted converted-large region luminance signal, and color-converted converted-detail luminance signal, is recorded, and it is also preferable that, together with the color-converted converted-input color signal, color-converted converted-large region luminance signal, color-converted difference-large region luminance signal, and color-converted detail luminance signal, the visual image-referred data generated by using the color-converted converted-input color signal, color-converted converted-large region luminance signal, and color-converted detail luminance signal, is recorded, and it is also preferable that, together with the color-converted converted-input color signal, color-converted difference-input color signal, color-converted converted-large region luminance signal, color-converted difference-large region luminance signal, and color-converted converted-detail luminance signal, and color-converted difference-detail luminance signal, the visual image-referred data generated by using the color-converted converted-input color signal, color-converted converted-large region luminance signal, and color-converted detail luminance signal, is recorded.

The "color-converted converted-large region luminance signal" is the same intention of the generation as the converted-large region luminance signal, and further, the converted-large region signal, and is a signal in which the conversion processing is conducted on the color-converted large region luminance signal. The "conversion processing conducted on the color-converted large region luminance signal" is a processing in which, when the converted-large region signal is generated, the same method as the conversion processing conducted on the large region signal can be applied, and the gradation conversion processing to correct the gradation is preferable, and various methods known in the present industry are applied.

The "color-converted difference-large region luminance signal" is the same intention of the generation as the difference-large region luminance signal, and further, the difference-large region signal, and is a signal generated from the "color-converted large region luminance signal" and "color-converted converted-large region luminance signal", and intends that the content of the influence generated by the processing conducted on the color-converted large region luminance signal or the degree is conserved. In the generation, for example, a method is also simple and preferable by which the difference of "color-converted large region luminance signal" and "color-converted converted-large region luminance signal" is found, and it is also allowable that the ratio of "large region luminance signal" and "converted-large region luminance signal" is found, but it is not limited to this.

Further, the characteristic of the sixth invention group is that at least color-converted converted-large region luminance signal, color-converted difference-large region luminance signal, color-converted detail luminance signal, and color-converted input color signal are obtained, and by using them, the visual image-referred data is generated. In the above mode, it is also preferable that, instead of the color-converted detail luminance signal, the color-converted converted-detail luminance signal and color-converted difference-detail luminance signal are obtained, and the visual image-referred data is generated, and it is also preferable that, instead of color-converted input color signal, the color-converted converted-input color signal and color-converted difference-input color signal are obtained, and the visual image-referred data is generated. Further, in each of above modes, it is also preferable that, further, the visual image-referred data is obtained together, and by using them, the revised-visual image-referred data whose condition of the image is different from the obtained visual image-referred data is generated.

In the sixth invention group, in the same manner as the first invention group, because the image processing can be conducted on the base of the already separated signal, the simple processing whose processing load is low for the user is realized, and when the processing is conducted again, because there is no trouble that signals are newly separated, in addition to an advantage that the processing load is low, instead of the large region signal or detail signal, by using the color-converted large region luminance signal and color-converted detail luminance signal, the visual image-referred data is generated, therefore, there is an advantage that user's intention is more easily reflected on the image processing, and also the user easily selects the processing method, and further, when the user desires the change of the degree of the gradation processing which is large used at the time of image processing, by using the difference-large region signal, the degree of the processing can be simply changed.

With the combination of these plurality of advantages, in the point of view that user's processing load is reduced, and selection of the processing is made easy, it is confirmed that the effect more than supposition is realized.

In the sixth invention group, as the generation method of the visual image-referred data using the obtained signal, a method is preferable in which a predetermined image processing along user's intention is conducted on the obtained color-converted converted-large region luminance signal, color-converted difference-large region luminance signal, color-converted detail luminance signal and color-converted input color signal, and by using them, it is generated.

It is of course that the image processing is conducted on respective obtained signals, and the visual image-referred data is generated by using the processed signals, and it is needless to say that, corresponding to the intention, a mode in which the image processing is conducted on only some of them, or a mode in which the image processing is not conducted, is possible. For example, it is also allowable that the color-converted converted-large region luminance signal and color-converted detail luminance signal are added as it is, and the composition processing is conducted with color-converted input color signal, and the visual image-referred data is generated, or it is also allowable that, for example, after the color-converted converted-large region luminance signal and color-converted detail luminance signal on which a predetermined image processing is conducted, are added, the composition processing is conducted with the color-converted input color signal, and the visual image-referred data is generated.

Further, when the visual image-referred data obtained from the medium, or generated by the above method, does not coincide with user's taste, by using the obtained color-converted difference-large region luminance signal, the degree of the conversion processing conducted on the color-converted large region luminance signal, can be easily changed. Specifically, for example, the color-converted difference-large region luminance signal which is multiplied by a predetermined coefficient may be added to the visual image-referred data. When the user conducts the repeating processing again until it coincides with the taste, the simplicity in which, at every time of re-doing, the degree of the processing can be changed without any trouble that it is newly separated, is a large advantage of the preset invention.

Further, when a method of the conversion processing conducted on the large region luminance signal in order to generate the color-converted converted-large region luminance signal does not coincide with user's intention, as described above, without re-structuring even an input image data, by adding the obtained color-converted converted-large region luminance signal and color-converted difference-large region luminance signal, the color-converted large region luminance signal can also be re-structured.

Further, when the condition of separation of the obtained color-converted large region luminance signal and color-converted detail luminance signal does not coincide with user's intention, by adding the obtained color-converted large region luminance signal and color-converted detail luminance signal, the color-converted input luminance signal can also be re-structured. Further, when the condition of separation of the color-converted input luminance signal and color-converted input color signal does not coincide with user's intention, by composing the obtained color-converted input color signal and the above re-structured color-converted input luminance signal, it is also possible that the color-converted input image data is re-structured.

Further, in the generation of the above visual image-referred data, also in the present sixth invention group, in the same manner as the third invention group, instead of the color-converted detail color signal, the color-converted converted-detail luminance signal and color-converted difference-detail luminance signal are obtained, and it is also preferable that the visual image-referred data is generated.

Further, in the generation of the above visual image-referred data, also in the present sixth invention group, in the same manner as the third invention group, a mode in which, instead of the color-converted input color signal, the color-converted converted-input color signal and color-converted difference-input signal are obtained, and the visual image-referred data is generated.

In the present embodiment, it is a characteristic that the image processing which is optimized in order to form the viewing image on the output medium, is conducted on the input image data, and in order to generate the visual image-referred data, the plurality of image data generated by using the input image data are recorded in the medium, and a plurality of image data recorded in the medium are obtained, and by using them, the visual image-referred data is generated.

Initially, the definition of the technical term used in the present embodiment will be described. The "generation" is to newly generate the electronic file by the program which acts in the image recording apparatus of the present embodiment, and the processing circuit. In this connection, there is some times a case where the "generation" is used as the synonym.

The "visual image-referred data" means the digital image data which is used for the display devices, such as the CRT (Cathode Ray Tube), liquid crystal display, plasma display, or in which the output device uses for the hard copy image generation on the output medium such as the silver halide printing paper, inkjet paper, thermal printer paper. On the display devices such as the CRT, liquid crystal display, plasma display, and on the output medium such as the silver halide printing paper, inkjet paper, thermal printer paper, in order to obtain the optimum image, the "image processing to optimize" is conducted on the "input image data".

The "image processing to optimize" is a processing to obtain the optimum image on the display devices such as the CRT, liquid crystal display, plasma display, and on the output medium such as the silver halide printing paper, inkjet paper, thermal printer paper, for example, when it is presupposed that it is displayed on the CRT display monitor according to sRGB standard, it is processed so that the optimum color reproduction can be obtained in the color range of the silver halide printing paper. Further, other than compression of the color range, the gradation compression from 16 bits to 8 bits, reduction of number of output pixels, and the corresponding processing to the output characteristic (LUT: Look Up Table) of the output device are also included. Further, it is needless to say that the image processing such as the noise suppression, sharpness, color balance adjustment, chroma adjustment, and local printing processing, is conducted.

"To record" means "to record" in the "medium" or "to store" in a memory medium. The "medium" is a storage medium used for conservation of data or signal generated in the present embodiment, and any of the compact flash (trade mark), memory stick (trade mark), smart media (trade mark), multi media card, hard disk, floppy (trade mark) disk, magnetic storage medium (MO), or CD-R may be used.

Further, a unit to write in the storage medium may be any mode such as one body with an apparatus which generates data or signal in the present embodiment, or a write unit connected in the wired status via a cord, an independent unit connected in the wireless status via communication or internet, or a unit located in the remote place. A file format at the time of "to record in the medium" is not a format inherent to the image pick-up apparatus, but it is preferable to be recorded in the general purpose standardized file format such as TIFF (Tagged Image File Format), JPEG (Joint Photographic Experts Group), Exif (Exchangeable Image File Format).

The "output medium" is a display device such as the CRT, liquid crystal display, plasma display, and a document for a hard copy image generation such as the silver halide printing paper, inkjet paper, thermal printer paper.

The "large region signal" is a signal structured by a signal component which bears the expression of light and darkness of the whole, and the "detail signal" is a signal which is relative to "large region signal", and is structured by a signal component which bears the expression of a fine structure (for example, a textile pattern of a monochrome cloth, human hair or lash of the face) in the scenes expressed in the input image.

In order to generate the "large region signal" and "detail signal", for example, the frequency large region separation processing is conducted on the input image data, and the input image data is separated into the low frequency component and high frequency component, and when the low frequency component is allotted to the large region signal, and the high frequency component is allotted to the detail component, the large region signal and detail signal can be generated.

In the frequency large region separation processing, various methods publicly known between the present industry, for example, a method by which the frequency range is separated by using the low pass filter or high pass filter, or a method by which, after the multiple resolution conversion including Fourier transformation or wavelet transformation is conducted, the frequency range is separated, are listed. From the view point of calculation load and design man-hour, a method is particularly preferable by which the frequency range is separated by using the digital low pass filter.

Herein, relating to the separation of frequency range by using the digital low pass filter, an example will be shown and described. Generally, the digital filter is expressed by m line x n raw matrix scanning window, and this window is successively scanned on the image matrix, and the sum of the product with the signal value on the image matrix corresponding to a coefficient set in each cell of the scanning window, is made a new signal value of the image matrix cell corresponding to the scanning window central.

In the case of the low pass digital filter, a setting in which the coefficient of the window central cell is made maximum, and which successively reduces the coefficient of the cell of the peripheral portion corresponding to the distance from the center, is generally used. For a function to determine a coefficient corresponding to the distance from the center, a function whose occupancy is better in the frequency space and real space is preferable in a point of the artifact prevention, and for example, the Gauss function shown by the following expression (1) is frequently used.

$$f(x) = \exp(-x^2/2\sigma^2) \tag{1}$$

Where, x: the distance from the center

When the low pass filter is applied to the image signal, the higher the signal component whose space frequency is, the larger the attenuation amount is. Generally, the frequency corresponding to the attenuation amount of 3 dB is called a cut-off frequency and it is made an index of filter characteristic. For example, when the above Gauss function is used for the coefficient setting of the low pass digital filter, because the larger the value of $\sigma$ of the above expression (1) is, the lower the cut-off frequency is, when the value of $\sigma$ is appropriately set, the cut-off frequency of the filter can be arbitrarily adjusted.

Further, as the cut-off frequency is made lower, that is, as the value of $\sigma$ is made larger, because the degree of the attenuation corresponding to the distance from the center of the coefficient set in the above expression f(x)is reduced, the necessity by which the size of the scanning window is made large is generated. As described above, the low pass filter using the Gauss function is explained as an example, however, the low pass filter used in the present invention is not limited to this.

As the simplest example, there is a method in which the simple average value of the whole image matrix cell in the matrix scanning window of m-line, n-row is made a new signal value of the image matrix cell corresponding to the center of the scanning window. Even in this case, it is not changed that the necessity in which, as the cut-off frequency is set lower, the larger the size of the scanning window is made, is generated.

Further, it is also preferable that a component in which the low frequency component and edge component are added to the large region signal, and a component in which edge component is subtracted from the high frequency component, is allotted to the detail component. As a generation method of the component in which the edge component is subtracted from a component in which the low frequency component and the edge component are added and high frequency component, the input image data, for example, after, by the above-described method, the input image data is separated into the low frequency component and high frequency component, further, for example, when the input image data is a digital image data, relating to respective pixels, by using the data of the pixels peripheral of respective pixels, the inclination value of the frequency component is found, and the degree of whether the pixel position which is remarkable for the large and small value of the inclination value is an edge, is assumed as the counting a (1 - 0, 1: flat portion, 0: edge portion).

A component in which the frequency component is multiplied by the counting a is allotted to the detail signal in which the attention is thin in each of them, and a component in which a component in which the high frequency component is multiplied by a value (= 1-a) obtained by subtracting the counting a from 1 and a low frequency component are added is allotted to the large region signal, or a component obtained by subtracting a value of the above calculated detail signal from the value of the remarkable pixel position of the input image data may be allotted to it, and for example, methods as described in Japanese Tokkai No. 2000 - 75852, 2000 - 187728, 2000 - 207546, 2000 - 261824, 2001 - 216511, 2001 - 216512, and 2001 - 229377, are applied, but it is not limited to these methods.

"Determining conditions for generating large region signals and detail signals" means a procedure to determine selection of signals to be generated in place of large region signals and detail signals described in the first group of inventions (for example, large region luminance signals and detail luminance signals described in the second group of inventions or color-converted large region luminance signals and color-converted detail luminance signals described in the third group of inventions and a procedure to determine conditions of generating and processing in the course of generating large region signals.

Further, "difference-detail signal" is generated by the detail signal and the "converted-detail signal" which is generated by conducting the detail conversion processing on the detail signal, and means the content of the processing of the detail conversion processing or the degree of the processing. Relating to the generation of the difference-detail signal, it may be the differential value of the detail signal and converted-detail signal, and the ratio of the detail signal and the converted-detail signal may be found, however, it is not limited to this method.

"Additional information accompanying input image data" in the invention includes, for example, the following information.

Information concerning establishment of photographing conditions and types of subjects such as the exposure time, a shutter speed, an aperture value (f-number), ISO speed, a luminance value, a subject distance range, a light source, the presence or absence of electronic flash emission, a subject area, white balance, zoom magnification, a subject structure, a photographing scene type, an amount of reflected light of electronic flash light source and photographing chroma.

Information that shows displaying with a standard color space of a display monitor conforming to sRGB signals or with other color spaces, and information dependent on types of machines represented by information such as the number of pixels, pixel array and the number of bits per one pixel.

Information about an image pickup device and an image data generating equipment such as a camera type (equipment type) such as a camera name and a code number, and a film scanner name and a code number in the case of obtaining image data by scanning a film, and information concerning image data generating conditions such as image resolution and scanning resolution.

With respect to a method of obtaining "additional information accompanying input image data" used in the invention, there is no restriction in particular, and various methods may be used.

- For example, it is possible to obtain additional information by receiving specifications or by referring to accompanying information (such as tag information) attached to image signals showing a photographed image, when a user gives instructions to the embodiment of the invention.
- It is further possible to obtain "additional information" by referring to original information formats for explaining more definitely or to information given as independent information files and signals. However, the embodiment which is more preferable is to obtain by referring to existing tag information prescribed in various general-purpose image formats represented by JPEG, TIFF and Exif, or by referring to regions used widely such as a maker note and a user note.
- In addition to the foregoing, additional information may also be obtained when information is transmitted directly to an image processing apparatus from a photographing apparatus, or when an operator inputs in the course of image processing.
- When reading images recorded on a developed film such as a negative film or a reversal film with a film scanner and thereby conducting image processing, additional information may also be obtained by reading information recorded on the film optically or magnetically in the course of photographing or before development.

Referring to drawings, an embodiment of the present invention will be detail below.

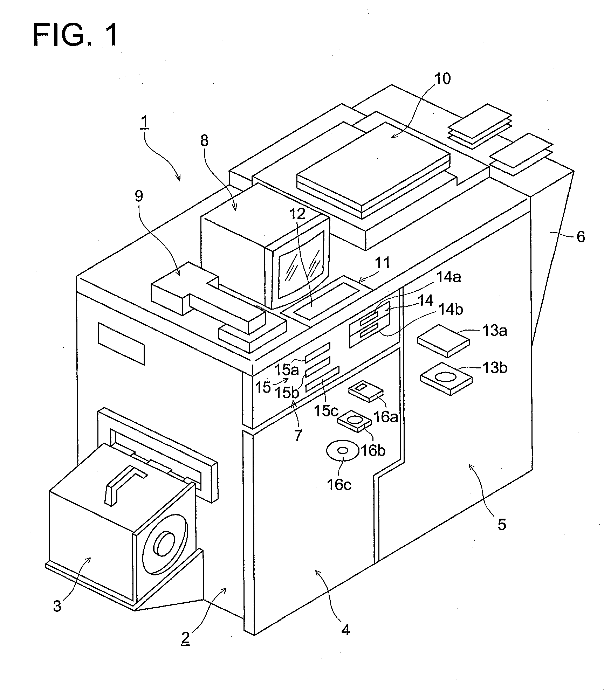

Figs. 1 - 3 are views showing an embodiment of an image recording apparatus 1 to which the present invention is applied.

Fig. 1 is an appearance perspective view of the image recording apparatus 1 in the present embodiment.

Herein, as the image recording apparatus 1, the document is read by the scanner section, and the input image data is made, and a mode which has a mechanism to conduct the image recording method in the present invention, and also has a mechanism to conduct the image processing method in the present invention, and further, the visual image-referred data generated in the image recording method in the present invention, or the visual image-referred data generated in the image processing method in the present invention, is exposed on the photosensitive material and developed, and which also has the print output function to produce a print, is illustrated, but a mode in which the input image data is produced is not limited, and may be provided with a film scanner in which the frame image information of the photographic photosensitive material recorded by an analog camera, such as color negative film, color reversal film, monochrome negative film, monochrome reversal film, is inputted, or may be provided with a flat bed scanner in which the image information reproduced on the color paper which is a silver halide printing paper is inputted.

Further, it may also be provided with a means for reading the digital image data which is obtained by an image pick-up apparatus such as a digital camera and conserved in all of publicly known portable "medium", such as a compact flash, memory stick, smart media, multi-media card, floppy disk, optical magnetic recording medium (MO) or CD-R, or may also be provided with a processing means by which the digital image data is obtained form a remote place through a communication means such as a network, and the viewing image is formed in all of publicly known "storage medium" such as a display device such as a CRT, liquid crystal display, plasma display, or such as a document for hard copy image generation such as a silver halide printing paper, inkjet paper, thermal printer sheet.

Further, also in a mode to produce a print, there is no limitation, and a print producing mode of an inkjet method, electro-photographic method, thermo-sensible method, sublimation method may be adopted. Further, not only built-in or outside hard disk, it may also have a conversion means for conversing in all publicly known portable "media" such as a compact flash, memory stick, smart media, multimedia card, floppy disk, optical magnetic storage medium (MO), or CD-R.

Further, in the image recording apparatus 1 of the present embodiment, as the above mode, the image recording apparatus and image processing apparatus may also be integrated, or may also be independent, and it is not limited. In the present embodiment, as one mode of the present invention, a part of a laboratory system is assumed, and the embodiment of the present invention in the apparatus in which the image recording apparatus and image processing apparatus are integrated, will be described, and it is needless to say that, after the present embodiment is conducted, the user receives a medium in which a signal in which the input signal is separated is recorded, and the present invention is applied in the image processing apparatus including the user own personal computer, and the image processing is repeated until it coincides with his taste, and can be simply conducted at low processing load, and it is an intention of the present invention.

The image recording apparatus 1 of this embodiment, as shown in Fig. 1, provided with a magazine loading section 3 in the left side surface of the main body 2, and is provided with, in the main body 2, an exposure processing section 4 which exposes on the photosensitive material which is a recording medium, and a print producing section 5 by which the exposed photosensitive material is developing processed and dried, and the print is produced, and the produced print is delivered to the tray 6 provided in the right side surface of the main body 2. Further, inside the main body 2, a control section 7 is provided in the upper position of the exposure processing section 4.

Further, in the upper portion of the main body 2, a CRT 8 is arranged. This CRT 8 structures a display means for displaying the image of the image information in which a print is produced, on the image plane. On the left side of the CRT 8, a film scanner section 9 which is a transmission document reading apparatus is arranged, and on the right side, a reflection document input apparatus 10 is arranged.

As the document read from the film scanner section 9 or reflection document input apparatus 10, there is a photographic photosensitive material, and as the photographic photosensitive material, a color negative film, color reversal film, monochrome negative film, monochrome reversal film, are listed, and the frame image information photographed by an analog camera is recorded. It is converted into the digital information by a film scanner of the film scanner section 9, and can be made the frame image information. Further, when the photographic photosensitive material is the color paper, it can be made the frame image information by the flat bed scanner of the reflection document input apparatus 10.

Further, at the position of the control section 7 of the main body 2, an image reading section 14 is provided. In the image reading section 14, a PC card adapter 14a, and floppy disk adapter 14b are provided, and a PC card 13a or floppy disk 13b can be inserted into them. In the PC card 13a, a memory in which the image is image picked-up by the digital camera and the plurality of frame image information are stored, is provided. In the floppy disk 13b, for example, the image is image picked-up by the digital camera and the plurality of frame image information are stored.

An operation section 11 is arranged on the front side of CRT, and an information input means 12 is provided in this operation section 11, and the information input means is structured, for example, by a touch panel. As a recording medium having the frame image information other than the above description, a multi-media card, memory stick, MD data, or CD-ROM is listed. Hereupon, the operation section 11, CRT 8, film scanner section 9, reflection document input apparatus 10, and image reading section 14 are integrally provided with the main body 2, and form the structure of the apparatus, however, any one or more may be separately provided.

Further, at the potion of the control section 7 of the main body 2, a image writing section 15 is provided. In the image writing section 15, a FD (floppy disk) adapter 15a, MO (optical magnetic recording medium) adapter 15b, and optical disk adapter 15c are provided, and FD 16a, MO 16b, and optical disk 16c can be inserted into them, and it is structured in such a manner that the image information such as the data or signal generated by an image writing method in the present invention, or the data or signal generated by the image processing method in the present invention, can be written in the image recording medium.

Further, in the control section 7, a communication means which is not shown is provided, and the image signal expressing the picked-up image and a print command are directly received from another computer in the facility or from a remote computer through the internet, and it can function as so-called network printer apparatus.

Further, when a portion or all of the image information including the data or signal generated by the image recording method in the present invention, and a portion or all of the image information including the data or signal generated by the image processing method in the present invention, are sent through the internet to the user, as a part of the commercial service, it can be used.

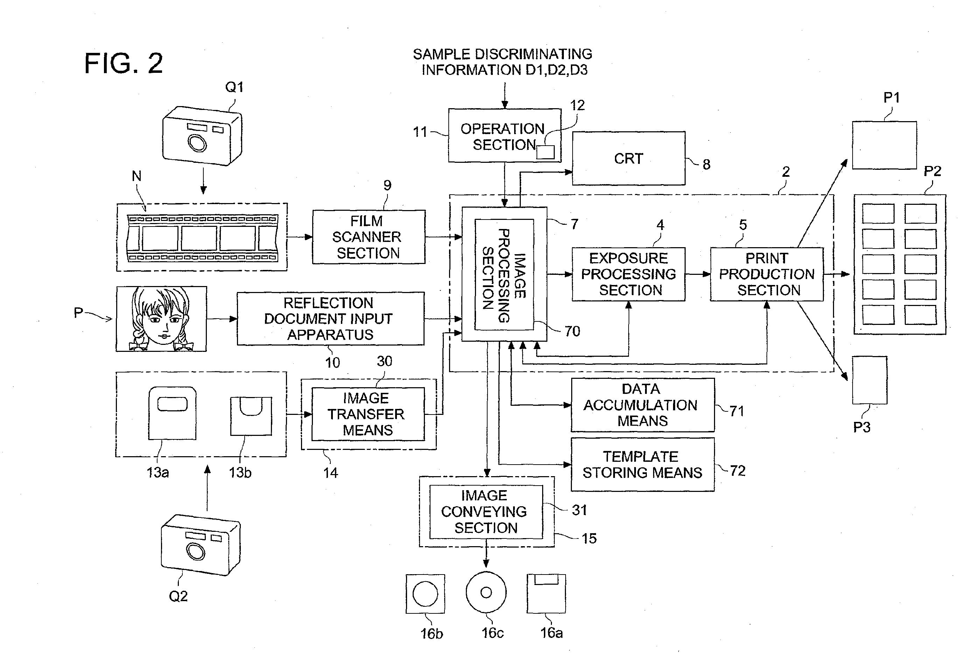

Fig. 2 is an outline structural view showing the function of the image recording apparatus 1. In Fig. 2, the control section 7 of the image recording apparatus 1, based on the command information, conducts the reading of the document information from the film scanner section 9 or reflection document input apparatus 10, and obtains the image information and displays on the CRT 8. Further, the image recording apparatus 1 has the data accumulation means 71 and template storing means 72. The image information and the order information (the information in which, from the image of which frame, how many print sheets are produced, the information of print size) are stored and successively accumulated in the data accumulation means 71. From the film scanner section 9, the frame image data from the developed negative film N obtained by developing the negative film picked-up by the analog camera is inputted, and from the reflection document input apparatus 10, the frame image data from the print P in which the frame image is printed on the printing paper and developing processed is inputted.

In the template storage means 72, the data of at least one template which sets the composing area with the background image which is the sample image data and illustration image, corresponding to the sample discrimination information D1, D2, and D3, is previously stored, and is set by the operation of the operator, and a predetermined template is selected from a plurality of templates which are previously stored in the template storage means 72, and the frame image information is composed with the selected template, and the sample image data selected based on the specified sample discrimination information D1, D2 and D3, and the imge data based on the order and/or the character data are composed, and the print is produced based on the specified sample. The composition by this template is conducted by the well known chromakey method.

Further, the control section 7 has an image processing section 70, and in this image processing section 70, the image information is image processed and the image information for the exposure is formed, and sent to the exposure processing section 4. In the exposure processing section 4, the image is exposed on the photosensitive material, and this photosensitive material is sent to the print production section 5, and the photosensitive material exposed in the print production section 5 is development processed and dried, and a print P1, P2, and P3 are produced. The print P1 is a service size, high-vision size, panorama size and the print P2 is A4 size, and the print P3 is a print of a name card size.

In this image recording apparatus 1, the image reading-in section 14 by which the frame image information of the PC card 13a in which images are picked-up by the digital camera and stored, or floppy disk 13b is read-out and transferred, is provided. In this image reading-in section 14, as an image transfer means 30, the PC card adapter, floppy disk adapter are provided. Into the PC card adapter, the PC card 13a is inserted, and further, floppy disk adapter 14b, the floppy disk 13b is inserted, and the frame image information recorded in the PC card 13a, or floppy disk 13b, is read out, and transferred to the control section 7 structured by a microcomputer. As the PC card adapter 14a, for example, a PC card reader, or a PC card slot is used.

In this image recording apparatus 1, sample discrimination information D1, D2, D3 which specify the sample of the print, are inputted from the operation section 11, however, because the sample discrimination information D1, D2, D3 are recorded in the sample of the print or order sheet, it can be read out by the reading out means such as the OCR, or the operator may also input from the key board.

Further, in the image processing section 70, a communication means which is not shown, is provided, and an image signal expressing the picked-up image and an operation command such as the print are directly received from the remote computer through another computer in the facility or the internet, and the image processing can be conducted by the remote operation or the print can also be produced.

As described above, the sample image data is recorded corresponding to the sample discrimination information D1 which specifies the sample of print, and the sample discrimination information D1 which specifies the sample of print is inputted, and the sample image data is selected according to this sample discrimination information D1 to be inputted, and this selected sample image data and the image data/or character data based on the order are composed, and because the print based on the sample by the specification is produced, the user actually holds various real-size samples and can order the print, and various requirements of wide users can be replied.

Further, the first sample discrimination information D2 to specify the first sample and the image data of the first sample are stored, or the second sample discrimination information D3 to specify the second sample and the image data of the second sample are stored, and the sample image data selected based on the specified first and second sample discrimination information D2 and D3 and the image data and/or character data based on the order are composed, and because the print based on the sample by the specification is produced, further various images can be composed, and the prints corresponding to the various requirements of the wider users can be produced.

Further, in the image writing section 15, a FD adapter 15a, MO adapter 15b and optical disk adapter 15c are provided, and the FD 16a, MO 16b and optical disk 16c can insert into them, and it is structured in such a manner that the image information such as the data or signal generated by the image recording method in the present invention, or the data or signal generated by the image processing method in the present invention, can be written in the image recording medium.

Further, by using the communication means, which is not shown, connected to the image processing section 70, the order information incidental to the image signal expressing the photographic image after the image processing of the present invention is conducted, can also be sent to another computer in the facility or the remote computer through the internet, further, also when a part or all of the image information including the data or signal generated by the image recording method in the present invention, or a part or all of the image information including the data or signal generated by the image processing method in the present invention, are sent to the user though the internet as a part of the commercial service, it can be used.

As described above, the image recording apparatus 1 is structured by the image input means taking-in the image information obtained by matrix-metering the image and image document of each kind of digital medium, and the recording means in which, when the user conducts the image processing, the selection of processing method becomes easy, and in order to lighten the processing load at every time of re-doing, from the input image data taken-in from this image input means, the large region signal and detail signal are generated, and recorded in the medium, and further, the image processing means by which the viewing image data is generated by conducting a predetermined image processing on the large region signal and detail signal, and further, it has the image output means by which the generated viewing image data is displayed, or print outputted, or written-in the image recording medium, and has a means for transmitting the order information incidental to the image signal to another computer in the facility, or remote computer through the communication line, and further, has a means by which the large region signal and detail signal, visual image-referred data, generated through the internet are sent or received to or from the user.

The image input means is structured by the image reading section 14 by which the image information of the image of each kind of digital media is taken in, film scanner section 9 by which the image information obtained by matrix-metering the image document is taken in, reflection document input apparatus 10 and communication means which is not shown, and when the user conducts the image processing, the selection of the processing method becomes easy, and in order to lighten the processing load at every time of re-doing, from the input imge data taken-in from this image input means, the large region signal and detail signal are generated, and the recording means which records this in the medium, is structured by the image processing section 70 and image writing section 15 which writes in the image recording medium, however, instead of recording in the medium, or when the large region signal and detail signal are transferred to the user through the internet in combination with it, it is structured together with the communication means which is not shown.

The image processing means which generates the visual image-referred data by conducting a predetermined image processing on the large region signal and detail signal, is provided in the image processing section 70, and further, the image output means is structured by the CRT 8 which displays the image, exposure processing section 4 and print production section 5 which output the print, image writing section 15 which writes the image in the image recording medium, and communication means which is not shown.

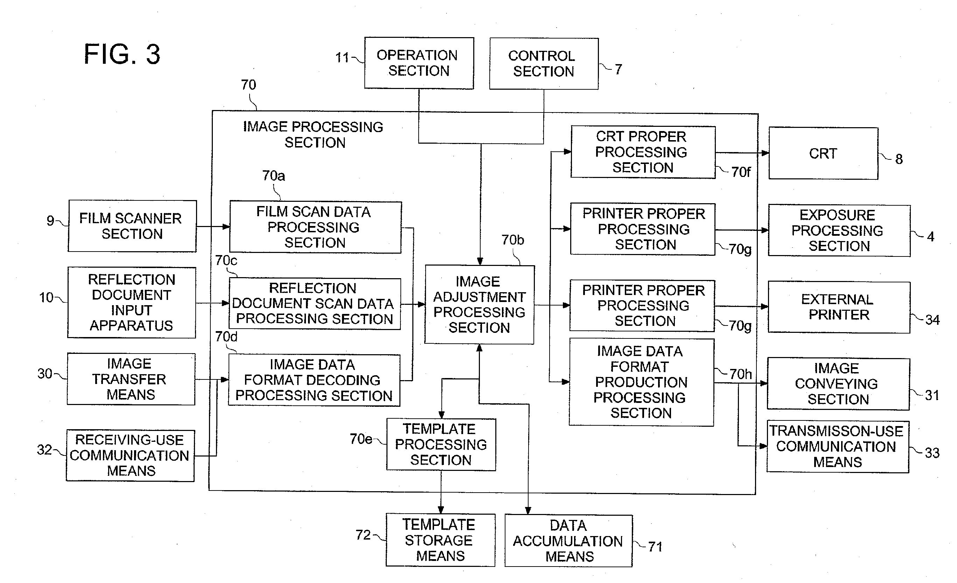

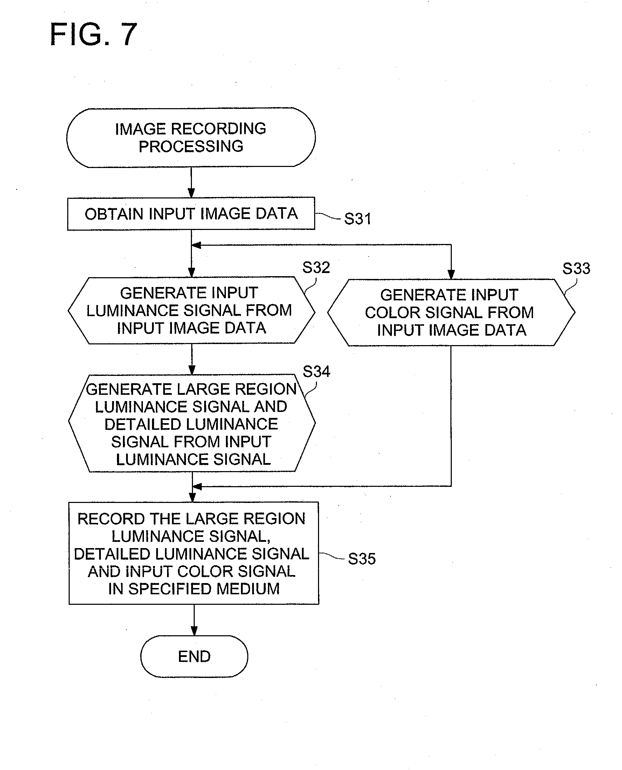

Next, Fig. 3 is a view showing the outline structure in the image processing section 70. In this Fig. 7, on the image signal inputted from the film scanner section 9, in the film scanning data processing section 70a, the correction operation proper to the film scanner section 9, negative positive reversal processing at the time of negative document, dust and flaw removal, gray balance adjustment, contrast adjustment, granular noise removal, or sharpness emphasis is conducted, and it is sent to the image adjustment processing section 70b. Further, the film size, kind of negative and positive, information relating to the main object optically or magnetically recorded in the film, information relating to the photographic condition (for example, the content of written information of ASP) are sent altogether to the image adjustment processing section 70b.

The image signal inputted from the reflection document input apparatus 10 is, in the reflection document scanning data processing section 70c, the correction operation proper to the reflection document input apparatus 10, negative positive reversal processing at the time of negative document, dust and flaw removal, gray balance adjustment, contrast adjustment, noise removal, or sharpness emphasis is conducted, and it is sent to the image adjustment processing section 70b.

The image signal inputted from the image transfer means 30 and receiving communication means 32 is, in the image data format decoding processing section 70d, according to the data format of that signal, the reversion of the compression code, and conversion of the expression method of the color signal are conducted at need, and converted into the data format appropriate for the calculation in the image processing section 70, and sent to the image adjustment processing section 70b. Further, when the photographic information is obtained from the header information and tag information in which Exif of the image signal is made an example, it is sent to the image adjustment processing section 70b together.

The designation for the magnitude of the output image is inputted from the operation section 11, and other than this, when there is the designation for the magnitude of the output image sent to the transmission communication means 33 or the designation for the magnitude of the output image embedded in the header information and tag information of the image signal obtained by the image transfer means 30, the image data format decode processing section 70d detects the information, and transfers it to the image adjustment processing section 70b.

In the image adjustment processing section 70b, when the template processing is necessary, the image signal is transferred to the template processing section 70e, and the image signal after the template processing is received again. Further, in the image adjustment processing section 70b, according to the command of the operation section 11 or control section 7, on the image signals received from the film scanner section 9, reflection document input apparatus 10, image transfer means 30, receiving communication means 32, template processing section 70e, the image processing is conducted so that the desirable impression is given by the method, which will be described later, when the image is observed on the output medium, and the processed image signal is sent to the CRT proper processing section 70f, printer proper processing section 70g, image data format production processing section 70h, and data accumulation means 71.

In the CRT proper processing section 70f, on the image signal received from the image adjustment processing section 70b, the processing such as the change of number of pixels and color matching is conducted at need, and the signal for display composed with the information in which the display such as the control information is necessary is sent out to the CRT 8.

In the printer proper processing section 70f, the correction processing proper to the printer, color matching, change of number of pixels are conducted at need, and the image signal is sent out to the exposure processing section 4. When the external printer apparatus such as the large sized inkjet printer is further connected to the image recording apparatus 1 of the present embodiment, the printer proper processing section 70f is provided for every connected printer apparatus, and the appropriate correction processing proper to the printer, color matching, and change of number of pixels are conducted.

In the image data format production processing section 70h, on the image signal received from the image adjustment processing section 70b, the conversion into each kind of general purpose image format represented by JPEG, TIFF, Exif is conducted at need, and the image signal is transferred to the image conveyance section 31 or transmission communication means 33.

The section such as above described film scan data processing 70a, reflection document scan data processing section 70c, image data format decode processing section 70d, image adjustment processing section 70b, CRT proper processing section 70f, printer proper processing section 70g, image data format production processing section 70h, is the section provided for helping the understanding of the function of the image processing section 70 of the present embodiment, and it is not necessary that it is always realized as the physically independent device, but it may also be realized as the section of the kind of software processing in, for example, a single CPU.

Further, relating to the signal up to now or process to generate the data, the content (such as methods or its degree, used parameter) of the image processing used in the process in which the image processing is conducted (in order to coincide with user's taste), or the content of the generated data or signal (the large region signal, detail signal, visual image-referred data), it is preferable that they are recorded by adding to the additional information (so-called tag information) attached to the image signal, carrying out the change, and newly producing.

Such a additional information is attached as the peculiar information format or independent information file, signal, and as a more preferable mode, it is listed that the existing tag information standardized in each kind of wide use image format represented by JPEG, TIFF, Exif, is used, or a freely usable area such as a maker note or user note is used. Relating to the recording, it may also be inputted manually by the operator, or the circumstance to be automatically written-in may also be provided by using the program.

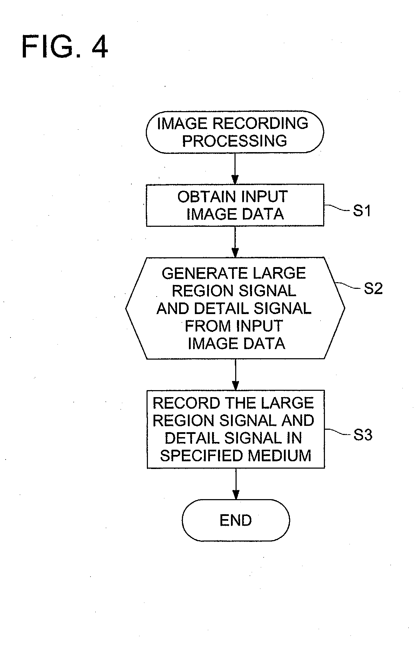

Next, based on flowcharts shown in Fig. 4 to Fig. 21, the image recording processing and image processing conducted by the image adjustment processing section 70b in Fig. 3 in each of the first to the sixth embodiments shown below, will be described.

[The first embodiment]

Fig. 4 to Fig. 6 are flowcharts showing the image recording processing and image processing conducted by the image adjustment processing section 70b in Fig. 3 in the first embodiment. Fig. 4 is a flowchart showing the image recording processing corresponding to the image recording method described in the aspect 1. In Fig. 4, initially, the image adjustment processing section 70b obtains the input image data (step S1), from the input image data, the large region signal and detail signal are generated (step S2), the large region signal and detail signal are made specified media and recorded, for example, in the optical disk (step S3).

Herein, the processing of step S2 will be detail. The low frequency component is extracted by applying the Gauss filter which is a kind of the low pass filter, on the input image data, the low frequency component is subtracted from the input image data, and the high frequency component is extracted, and for each of pixels, by using the data of the pixel of the circumference of respective pixels, the inclination value of the low frequency component is found, and the degree whether the pixel position remarkable at the large and small value is an edge, is calculated as a counting a (1 or 0, 1: flat portion, 0: edge portion), and according to the following expressions (2) and (3), the large region signal, and the detail signal are generated.

The details of the calculation method of the inclination value of the low frequency component, and the calculation method of the coefficient a are described in Japanese Tokkai No. 2000-75852, 2000-187728, 2000-207546, 2000-261824, 2001-216511, 2001-216512, 2001-229377.

$$\text{Detail signal } (x) = \text{high frequency component } (x) \times a \qquad (2),$$

Large region signal (x) = low frequency component +

[high frequency component x (1- a)]                    (3),

x: pixel position in the image.

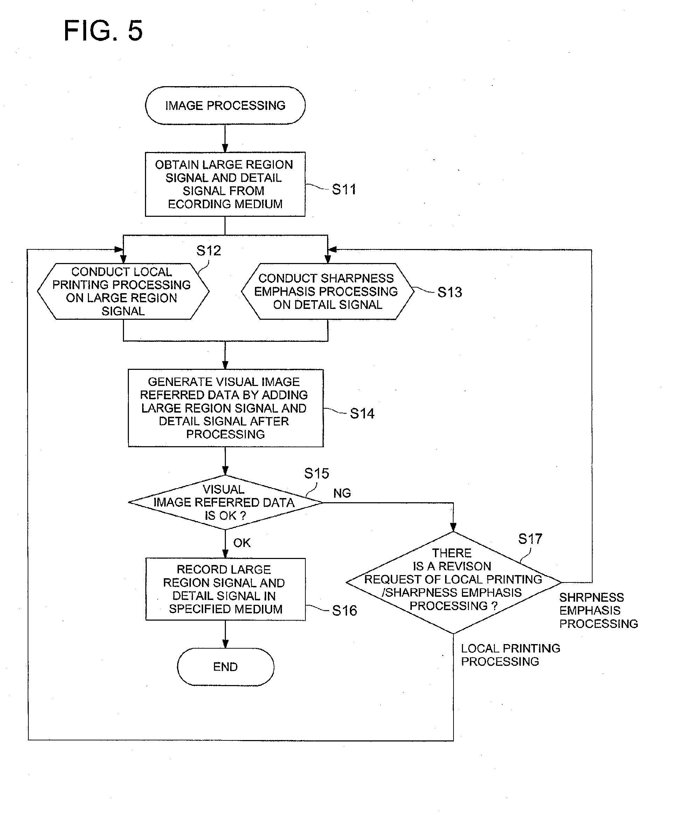

Next, Fig. 5 is a flowchart showing the image processing corresponding to the image processing method written in the aspect 117. Because the input image data obtained in the step S1 in the above is a scene under the back light in which the building in the outdoor is the background, and the person is arranged in this side, the local printing processing is desired, and it is assumed that there is a requirement that the looks of the person or fine structure (pattern of the monochrome wall) is made clear.

In Fig. 5, initially, the image adjustment processing section 70b obtains the large region signal and detail signal recorded in the optical disk in the step S3 (step S11), the local printing is conducted by using the large region signal (step S12), and the sharpness emphasis signal is conducted by using the detail signal (step S13). Next, the processed large region signal and detail signal on which the image processing is respectively conducted, are added and the visual image-referred data is generated (step S14).

When the method or degree of the local printing processing or sharpness emphasis processing does not coincide with user's taste (step S15: NG), the image adjustment processing section 70b returns to the local printing processing of the large region signal of the step S12, or the sharpness emphasis processing of the detail signal of the step S13 corresponding the revision request of the local printing processing by the user (step S17: local printing processing) or the revision request of the sharpness emphasis processing (step S17: sharpness emphasis processing), and conducts the processing again.

Herein, the step S12 will be detail below. The scene of this obtained input image data is the back light scene as described above, the difference of brightness of the person and background is large, and the local printing processing is desired. The local printing processing is conducted, that is, in order to make proper the luminance range of the whole, while the brightness difference in eyes of the person or the fine structure of the background is maintained, for the signal expressing the brightness difference of the whole image, other than the person's eyes or the fine structure of the background, it is necessary to compress the dynamic range.

For that, it is easy and effective to use the large region signal already separated or generated from the input image data. Specifically, the method written in Japanese Tokkaihei No. 11-284860 is applied, however, it is not limited to this, but various methods which are known between the skilled persons and including the technology written in Japanese Tokkaihei No. 8-29400, Tokkai No. 2000-75852, can be applied.

Further, the step S13 will be detail. For the scene of this obtained input image data, it is assumed that there is a request which is desired to make clear the looks of the person. Thereupon, the high frequency component which bears the role to express the fine structure conducts the sharpness emphasis processing by using the detail signal which is a main component. Specifically, as shown in the following expression (4), the detail signal value T (x) of each of pixel positions may be multiplied by a predetermined coefficient b (b > 1).

$$T' (x) = T (x) \text{ x } b \text{ } (b > 1)\qquad\qquad(4)$$

Further, the step S14 will be detail. The visual image-referred data on which the sharpness processing is conducted can be generated when the large region signal on which the local printing is conducted in the step S12, and the detail signal on which the sharpness emphasis processing is conducted in the step S13 are added. When the processing is conducted by using the signal appropriate for respective processings, the effective local printing processing is conducted on the input image data, and the brightness of the person and background becomes a natural atmosphere, and becomes preferable. Further, when the effective sharpness processing is conducted, person's eyes or hair, and the pattern of the background wall become clear.

Further, also for the operation of the image processing conducted so as to coincide with user's taste, because the previously separated signal is used, the visual image-referred data can be generated very easily. Further, also when the result of the processing does not coincide with user's taste, without conducting the processing from the input image data, because the processing can be conducted by using each of separated signals, it is confirmed that the effect that the processing load is lightened is realized.

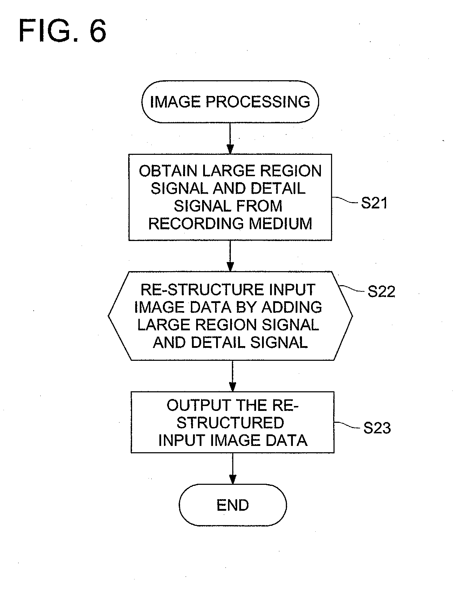

Further, when the separation condition of the obtained large region signal and detail signal does not coincide with user's intention, as shown in Fig. 6, a method can also be selected in which the image adjustment processing section 70b obtains the large region signal and detail signal from the recorded medium, and the obtained large region signal and detail signal are added and the input image data is re-structured (step S22), and by outputting the re-structured input image data (step S23), by the different means from the generation means of the large region signal and detail signal recorded in the medium, the large region signal and detail signal are newly generated again, and further, respectively a predetermined image processing is conducted and added in the same manner as described above, and the viewing imge reference data is generated.

Further, the recorded viewing imge reference data is obtained together with above-described various signals, and a mode in which the changed viewing imge reference data is generated is also preferable. In this mode, because one viewing image is made a start point, there is an advantage that the content in which the user desires the correction can be easily grasped, and the operation is easily advanced.

Further, the obtained viewing imge reference data is made a start point, and by using the large region signal obtained together or detail signal, or the converted-detail signal or difference-detail signal, it is possible that the data is changed until it coincides with user's taste. For example, when it is desired that the degree of the emphasis of the fine structure or the noise reduction is changed to the visual image-referred data, by the very easy operation in which the difference-detail signal multiplied by a predetermined coefficient is added to the visual image-referred data, the degree of the emphasis of the fine structure or the noise reduction can be changed.

Also in this mode, when the separation condition of the obtained large region signal and detail signal, or the method (not the degree) itself of the change of the detail signal, does not coincide with user's intention, by using obtained various signals, the input image data is re-structured, and by the different processing method, the image processing can be conducted, and it is as described before that the width of the processing content selected by the user can be spread.

[The second embodiment]

Fig. 7 to Fig. 9 are flowcharts showing the image recording processing conducted by the image adjustment processing section 70b in Fig. 3 in the second embodiment, and the image processing. Fig. 7 is a flowchart showing the image recording processing corresponding to the image recording method written in the aspect 5. In Fig. 7, initially, the image adjustment processing section 70b obtains the input image data (step S31), the input luminance signal and input color signal are generated from the input image data (steps S32, S33), and the large region luminance signal and detail luminance signal are generated from the input luminance signal by using the same method as the step S2 in Fig. 4 (step S34), and recorded in, for example, the optical disk (step S35) as the medium in which the large region luminance signal, detail luminance signal and input color signal are designated.

Herein, the processing in the step S32 will be detail below. In order to generate the input luminance component and input color component from the input image data, the processing to convert 3-color intensity signals of Blue, Green, Red of the input image data, into YIQ base according to the following expressions (5) - (7), may be conducted.

$$\text{Luminance component: } Y = 0.2990 * Red + 0.5870 * Green +$$

$$0.1140 * Blue \tag{5}$$

$$\text{Color component: } I = 0.5959 * Red - 0.2750 * Green +$$

$$0.3210 \, Blue \tag{6}$$

$$Q = 0.2065 * Red - 0.4969 * Green - 0.2904 * Blue \tag{7}$$

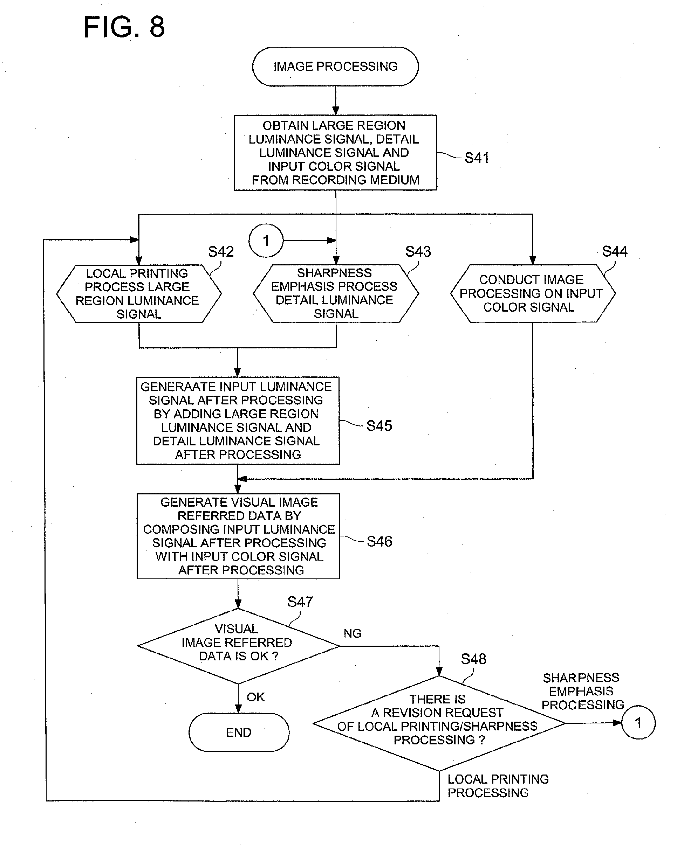

Next, Fig. 8 is a flowchart showing the image processing corresponding to the image processing method written in the aspect 121. In the image data obtained in the above step S31, because it is a scene under the back light in which the building in the outdoor is background, and the person is arranged this side, the local printing processing is required, and further, it is assumed that there is a requirement desired that the looks of the person or fine structure of the background (pattern of monochrome wall) are made clear.

In Fig. 8, initially, the image adjustment processing section 70b generates the visual image-referred data in such a manner that the input color signal recorded in the step S35, large region luminance signal and detail luminance signal are obtained from the optical disk (step S41), by using the large region luminance signal, the local printing processing is conducted by the same method as the step S12 in Fig. 5 (step S42), the sharpness emphasis processing is conducted by using the detail luminance signal by using the same method as the step S13 in Fig. 5 (step S43), the processed large region luminance signal on which the image processing is respectively conducted, and the converted-detail luminance signal are added and the converted-input luminance signal is generated (step S45), and further, it is composing processed with the input color signal (step S44) on which the image processing is conducted, and the visual image-referred data is generated (step S46).

When the method or degree of the local printing processing on the visual image-referred data or the sharpness emphasis processing does not coincide with user's taste, (step S47: NG), the image adjustment processing section 70b returns to the local printing processing of the large region luminance signal in the step S42 or the sharpness emphasis processing of the detail luminance signal in the step S43, corresponding to the revision request of the local printing processing by the user (step S48: local printing processing), or the revision requirement (step S48: sharpness emphasis processing) of the sharpness emphasis processing, and conducts the processing again.

Herein, the processing of the step S42 will be detail. In order to compose the input color signal and a signal in which the large region luminance signal on which the local printing process is conducted and detail luminance signal on which the sharpness emphasis processing is conducted are added, that is, the changed input luminance signal, the inverse conversion of the conversion processing conducted in the step S32 in Fig. 7 may be conducted, and according to the following expressions (8) to (10), may be converted into 3-color intensity signals of Blue, Green, Red.

$$Red = Y + 0.9489 * I + 0.6561 * Q \qquad (8)$$

$$Green = Y - 0.2645 * I - 0.6847 * Q \qquad (9)$$

$$Blue = Y - 1.1270 * I + 1.8050 * Q \qquad (10)$$

In the image processing in the present second embodiment, because the obtained signal is a signal which is previously separated into the luminance component and the color component, and generated, it is confirmed that as a result, the local printing processing and sharpness emphasis processing more effectively act on, and it is a preferable mode.

In the present second embodiment, when the processing is conducted by using the signal appropriate for respective processing, particularly by using the signal from which the luminance component is extracted, the very effective local printing processing is conducted on the input image data, and the brightness of the person and background becomes natural atmosphere, and becomes very preferable.

Further, when, by using the signal of the luminance component, the sharpness emphasis processing is conducted, the eyes and hair of the person or pattern of the wall of the background become fairly clear. Also for the operation of the image processing which is conducted so as to make coincide with user's taste, because the previously separated signal is used, and further, the effect of the image processing prominently appears because each signal is generated by extracting the luminance signal, the visual image-referred data can be very simply generated.

Further, also when the result of the processing does not coincide with user's taste, without conducting again the processing from the input image data, because the processing can be conducted by using each of separated signals, it is confirmed that the effect in which the processing load is lightened is realized.

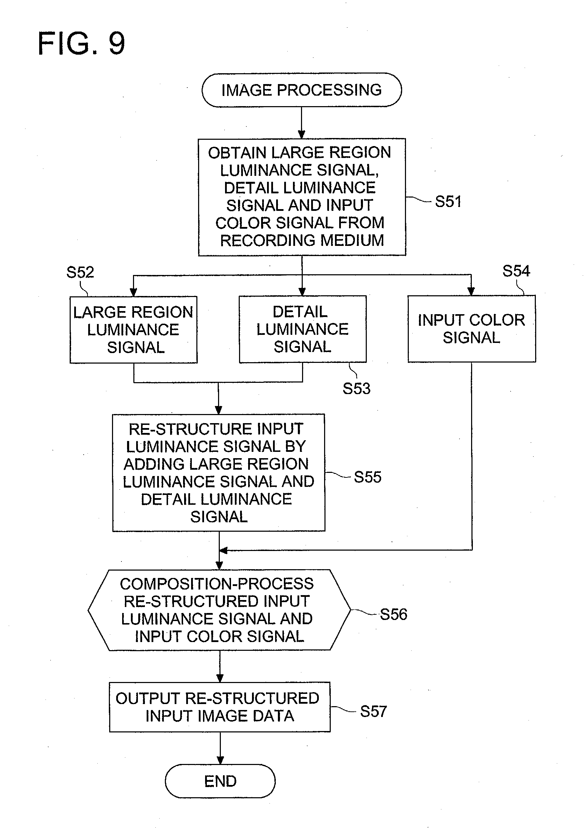

Further, when the separation condition of the obtained large region luminance signal and detail luminance signal does not coincide with user's taste, in the first invention group, in the same manner when the separation condition of the obtained large region luminance signal and detail luminance signal does not coincide with user's taste, as shown in Fig. 9, the image adjustment processing section 70b obtains the large region luminance signal, detail luminance signal and input color signal from the recorded medium (steps S51 - S54), the obtained large region luminance signal and detail luminance signal are added and the input luminance signal is re-structured (step S55), and by a means different from the generation method of the recorded large region luminance signal and detail luminance signal, the large region luminance signal and detail luminance signal are generated again, and in the same manner as described above, respectively a predetermined image processing is conducted, and added, and a method by which the visual image-referred data is generated, can also be selected.

Further, when the separation condition of the input luminance signal and input color signal does not coincide with user's taste, the obtained input color signal and the above re-structured input luminance signal are added, and the input image data is re-structured (steps S56, S57), and the input color signal and input luminance signal are newly generated, and in the same manner as described above, respectively a predetermined image processing is conducted, and added, and a method by which the visual image-referred data is generated, can also be selected.

Further, in the above generation of the visual image-referred data, a method by which, instead of detail luminance signal, the converted-detail luminance signal and difference-detail luminance signal are obtained, and the visual image-referred data is generated, is also effective. Specifically, for example, by using the visual image-referred data which is a start point,(the obtained large region luminance signal, converted-detail luminance signal and input color signal are added, and it may also be generated) and the difference-detail luminance signal, the emphasis of the fine structure or degree of noise removal is further changed, and the visual image-referred data which further coincides with user's taste can be generated.

For example, when the difference-detail luminance signal multiplied by a predetermined coefficient is added to the visual image-referred data which is a start point, the visual image-referred data in which the emphasis or degree of noise removal is changed, can be easily generated. This method is a concept approximate to the concept in which, in the first invention group, when the large region signal and detail signal are obtained, and the visual image-referred data is generated, instead of the detail signal, the changed detail signal and the difference-detail signal are obtained, and the visual image-referred data is generated.

Further, when the separation condition of the obtained large region luminance signal and detail luminance signal, or the method of change (not the degree) itself does not coincide with user's intention, it is possible that the obtained large region luminance signal, converted-detail luminance signal, difference-detail luminance signal and input color signal are added, and the input image data is re-structured.

Further, in the generation of the above visual image-referred data, instead of the input color signal, a method by which the converted-input color signal and difference-input color signal are obtained, and the visual image-referred data is generated, is also effective. Specifically, for example, by using the visual image-referred data which is a start point, (obtained large region luminance signal, converted-detail luminance signal, and input color signal are added and may also be generated) and the difference-input color signal, the color is changed, and the visual image-referred data which further coincides with user's taste can be generated.

For example, when the difference-input color signal multiplied by a predetermined coefficient is added to the visual image-referred data which is a start point, the visual image-referred data whose chroma or lightness is changed, can be easily generated.

Further, when the separation condition of the obtained input luminance signal and input color signal, or the method of the change (not degree) itself of the converted-input color signal does not coincide with user's intention, the obtained input luminance signal and input color signal are added, and the input image data can be re-structured.

In this connection, to the image processing using the large region luminance signal, it is preferable that the processing method which is the same as the image processing using the large region signal written in the characteristic of the first invention group is applied, and it is preferable that, to the image processing using the detail luminance signal, the same processing method as the image processing using the detail signal written in the characteristic of the first invention group is applied.

Further, to the color-converted processing conducted on the input color signal, the various processings which correct or change the color, can be applied, and for example, the color balance correction processing, specific color emphasis processing, chroma emphasis processing, change processing of the color space, fade correction processing operation, color tone rotation processing, color gamma value change processing, are listed, but it is not limited to this.

[The third embodiment]

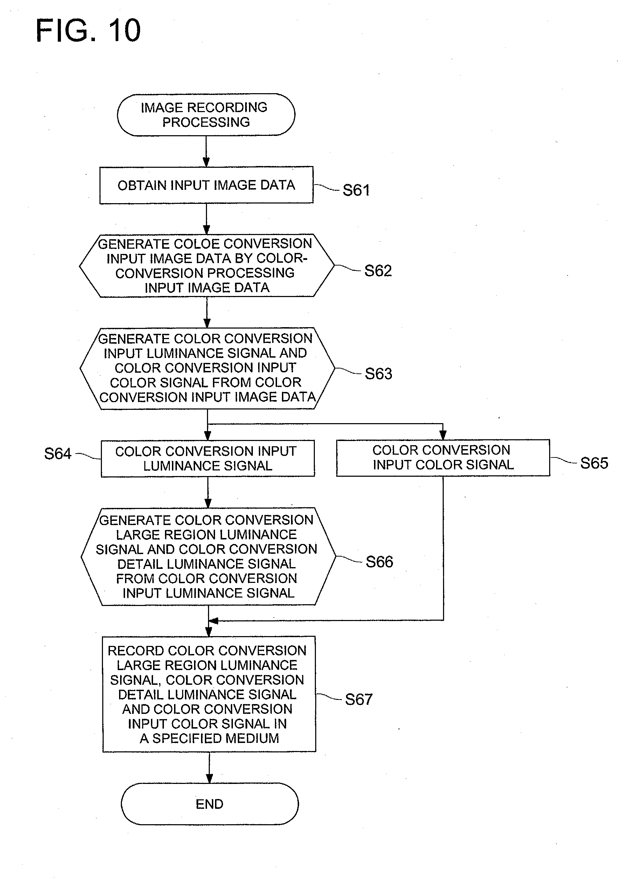

Fig. 10 to Fig. 12 are flowcharts showing the image recording processing and image processing conducted by the image adjustment processing section 70b in Fig. 3 in the third embodiment. The input image data in the present third embodiment is the image generated on the RIMMRGB as the picked-up image, and the color space is converted into sRGB, and because the building in the outdoor is made a background, and it is a scene under the back light in which the person is arranged this side, the local printing processing is desired, and further, it is assumed that there is a request in which the looks of the person or fine structure of the background (pattern of the monochrome wall) are desired to be clear.

Fig. 10 is a flowchart showing the image recording processing corresponding to the image recording method written in the aspect 11. In Fig. 10, initially, the image adjustment processing section 70b obtains the input image data (step S61), after conversion processing of the color space from RIMMRGB into sRGB is conducted on the input image data (step S62), the color-converted input luminance signal and color-converted input color signal are generated in the same manner as steps S32, S33 (steps S63 - S65), and from the color-converted input luminance signal, the color-converted large region luminance signal and color-converted detail luminance signal are generated by using the same method as the step S2 in Fig. 4 (step S66), and the color-converted large region luminance signal, color-converted detail luminance signal and color-converted input color signal are recorded in, for example, the optical disk as the designated medium (step S67).

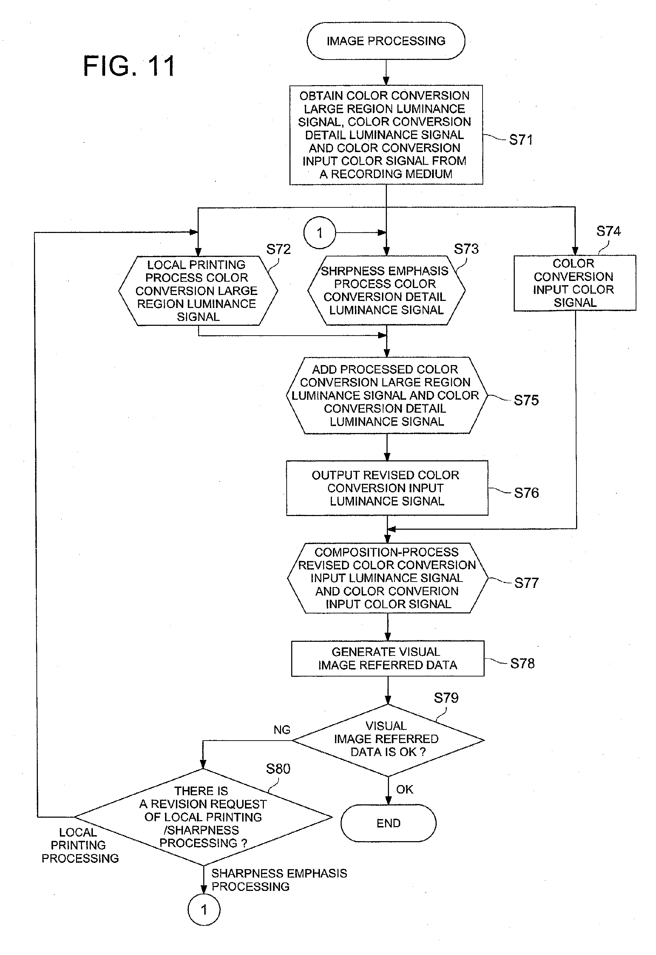

Next, Fig. 11 is a flowchart showing the image processing corresponding to the image processing method written in the aspect 127. In Fig. 11, initially, the image adjustment processing section 70b obtains the color-converted input color signal, color-converted large region luminance signal and color-converted detail luminance signal which are recorded in the step S67 in Fig. 10 from the optical disk (step S71), the local printing is conducted by using the color-converted large region luminance signal by using the same method as the step S12 in Fig. 5 (step S72), and the sharpness emphasis processing is conducted by using the color-converted detail luminance signal by using the same method as the step S13 in Fig. 5 (step S73).

Next, the image adjustment processing section 70b adds the processed color-converted large region luminance signal and color-converted detail luminance signal on which the image processing is respectively conducted (step S75), the changed color-converted input luminance signal is outputted (step S76), and further changed color-converted input luminance signal and color-converted input color signal are composition-processed (step S77), and the visual image-referred data is generated (step S78).

When the method or degree of the local printing processing or the sharpness emphasis processing on the viewing reference data does not coincide with user's taste (step S79: NG), the image adjustment processing section 70b returns to the local printing processing of the color-converted large region luminance signal of the step S72, or the sharpness emphasis processing of the color-converted detail luminance signal of the step S73, corresponding to the revision request of the local printing processing by the user (step S80: local printing processing) or the revision request of the sharpness emphasis processing (step S80: sharpness emphasis processing), and conducts the processing again.

As compared to the case where the conversion processing of the color space is conducted after the processing is conducted in the second embodiment, when the conversion processing of the color space is arranged in the top in the present third embodiment, it can be confirmed that the load of the processing is lightened. Further, in the present third embodiment, because the color space in which the input image data and the viewing reference image data can exist is different, the conversion processing of the color space is necessary, but when the conversion processing of the color space is arranged in the top of the recording processing along the present invention, an advantage that the correction processing subsequent to it, for coinciding with user's taste, can be smoothly conducted is realized.

Further, when the local printing processing or sharpness emphasis processing is conducted by using the signal from which particularly the luminance component is extracted, and which is appropriate to respective processing, the very effective local printing processing is conducted on the input image data, the brightness of the person and background becomes a natural atmosphere, and is very preferable, and eyes or hair of the person and the pattern of wall of the background become fairly clear.

Further, also for the operation of the imge processing conducted for coinciding with user's taste, because previously separated signal is used, or the effect of the image processing prominently appears because each signal is generated by extracting the luminance component, the visual image-referred data can be very simply generated. Further, also when the result of the processing does not coincide with user's taste, because it is not necessary that the processing is conducted again from the input image data, but by using each of the separated signals, the processing can be conducted, it is confirmed that an effect that the processing load is lightened, is realized.

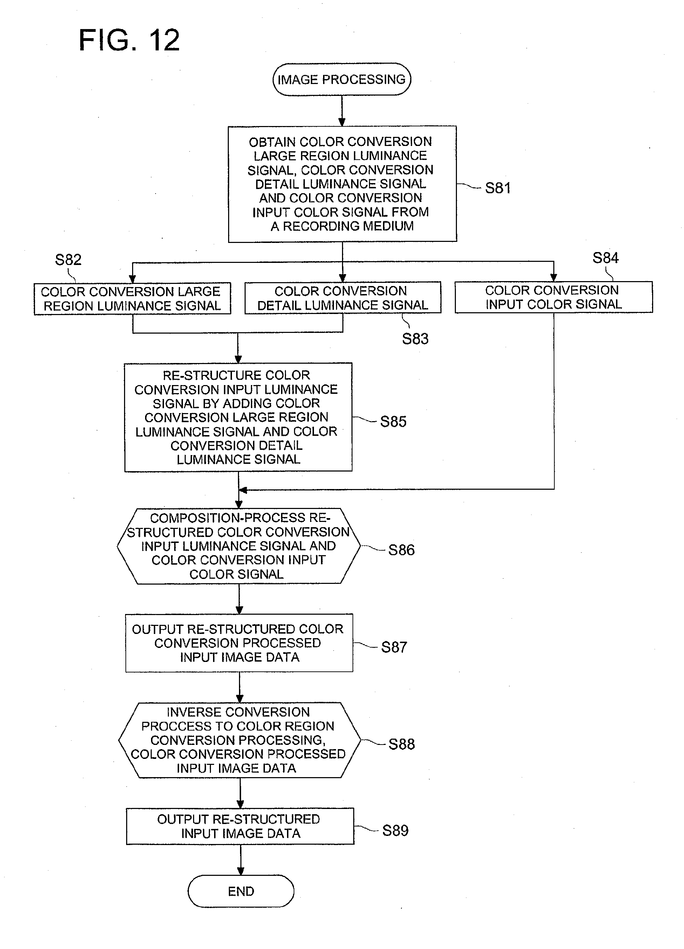

Further, when the separation condition of the color-converted input luminance signal and color-converted input color signal does not coincide with user's intention, as shown in Fig. 12, a method can also be selected in which the image adjustment processing section 70b obtains from the recording medium the color-converted large region luminance signal, color-converted detail luminance signal and color-converted input color signal (steps S81 - S84), and the color-converted large region luminance signal and color-converted detail luminance signal are added and the color-converted input luminance signal is re-structured (step S85), and the color-converted input color signal is composition-processed with the re-structured color-converted input luminance signal, and the color-converted processed input image data is re-structured (steps S86, S87), and the color-converted input color signal and color-converted input luminance signal are newly generated again, and a predetermined image processing is respectively conducted in the same manner as described above and composed, and the visual image-referred data is generated.

Further, when the content of the color-converted processing or the processing result does not coincide with user's intention, it is also possible that the inverse conversion processing of the color-converted processing is conducted on the above-described re-structured color-converted processed input image data (step S88), and the input image data is re-structured (step S89), and the color-converted processing is conducted by the different means, and the processing is advanced.

Further, in the generation of the above-described visual image-referred data, it is the same as the second invention group that a method is also effective in which, instead of the color-converted detail luminance signal, the color-converted converted-detail luminance signal and color-converted difference-detail luminance signal are obtained, and the visual image-referred data is generated.

Further, in the generation of the above-described visual image-referred data, it is the same as the second invention group that a method is also effective in which, instead of the color-converted input color signal, the color-converted converted-input color signal and color-converted difference-input color signal are obtained, and the visual image-referred data is generated. The color-converted processing conducted on the input image data is a processing necessary when the change is generated in the color space in which the input image data and the visual image-referred data can exist, and is the color space change processing, and its method is widely publicly known in the skilled persons.

For the image processing using the color-converted large region luminance signal, it is preferable that the same processing method as the image processing in which the large region signal written in the characteristic of the first invention group is used, is applied, and for the image processing using the color-converted detail luminance signal, it is preferable that the same processing method as the image processing using the detail signal written in the characteristic of the first invention group is applied, and for the color-converted processing conducted on the color-converted input color signal, it is preferable that the same processing method as the color-converted processing using the input color signal written in the characteristic of the first invention group is applied.

For the image processing using the large region signal, image processing using the detail signal, and the color-converted processing conducted on the input imge data, descriptions are already written, but except that, other various image processing methods such as, for example, the capture process correction processing (optical aberration (out-of-focus, tilt, peripheral aberration, astigmatism, distortion and color aberration), geometric effect (perspective correction), sensor effect correction, (CFA interpolation, unequal correction, and noise reduction) and illumination effect (over exposure, under exposure, illumination vanishing and lens flare), defect correction processing (scratch (deletion) and crease reduction, dust reduction, particle reduction, red-eye reduction, dirt removal, removal of inappropriate expression), , artistic expression processing (sepia adjustment, monochrome conversion from color, production of graphics), can be applied, but it is not limited to this.

[The fourth embodiment]

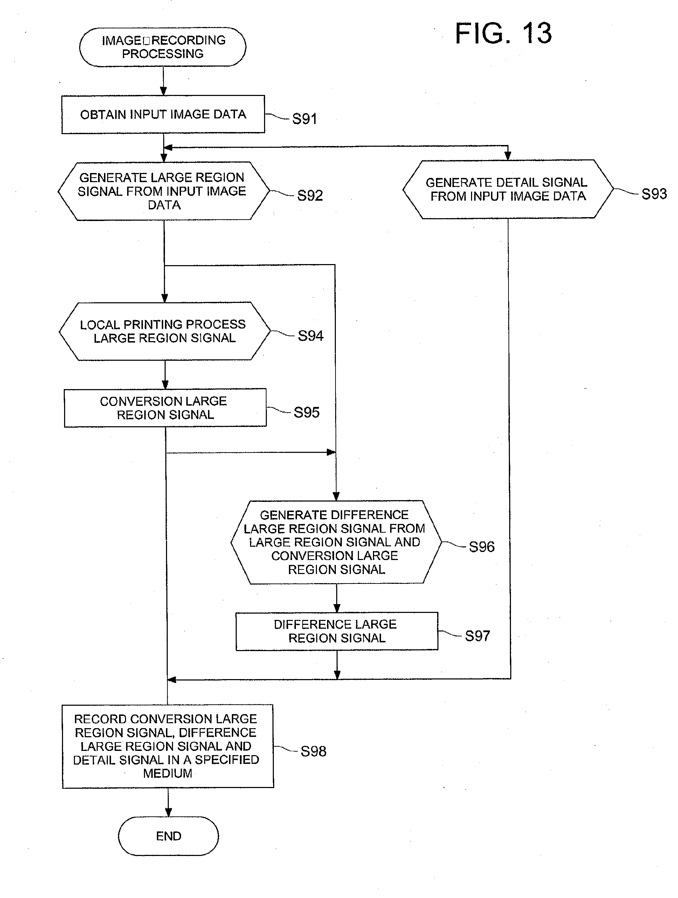

Fig. 13 to Fig. 15 are flowcharts showing the image recording processing and the image processing conducted by the image adjustment processing 70b in Fig. 3 in the forth embodiment. In the input image data obtained in the present fourth embodiment, because it is a scene under the back light in which the building in the outdoor is a background, and the person is arranged this side, the local printing is desired, and further, it is assumed that there is a request in which the looks of the person or fine structure (pattern of monochrome wall) of the background are made clear.

Fig. 13 is a flowchart showing the image recording processing corresponding to the image recording method described in the aspect 17. In Fig. 13, initially, the image adjustment processing section 70b obtains the input image data (step S91), in the same manner as the image recording processing in Fig. 4, the large region signal and detail signal are generated from the input image data (steps S92, S93), and the local printing processing is conducted on the large region signal in the same manner as the image recording processing in Fig. 4, and the converted-large region signal is generated (steps S94, S95), and the difference-large region signal is generated by taking the difference of the large region signal and converted-large region signal (steps S96, S97), and the converted-large region signal, difference-large region signal and detail signal are recorded in, for example, the optical disk as a designated medium (step S98).

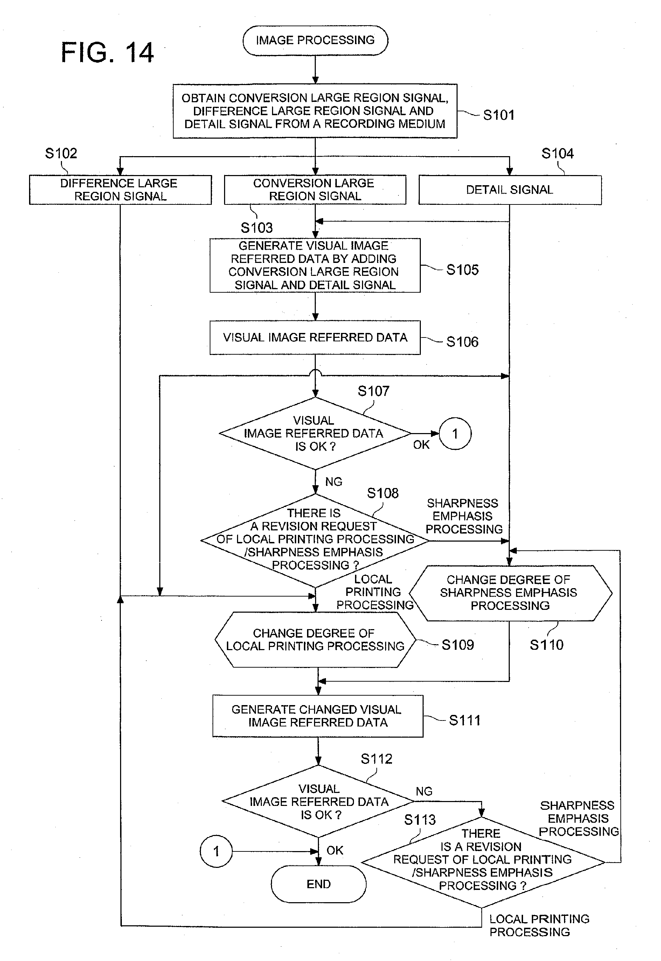

Next, Fig. 14 is a flowchart showing the image processing corresponding to the image processing method described in the aspect 133. In Fig. 14, initially, the image adjustment processing section 70b obtains the converted-large region signal, difference-large region signal and detail signal which are recorded in the above step S98 (steps S101 to S104), and adds the converted-large region signal and detail signal and generates the visual image-referred data (steps S105, S106).

Next, the image adjustment processing section 70b judges whether the generated visual image-referred data coincides with user's taste (step S107), and when does not coincide with (step S107: NG), the degree of the local printing processing is changed by using the visual image-referred data and the difference-large signal (step S109), corresponding to the revision request of the local printing processing by the user (step S108: local printing processing), or the revision request of the sharpness emphasis processing (step S108: sharpness emphasis processing), and the detail signal multiplied by a predetermined coefficient is added to the visual image-referred data and the degree of the sharpness emphasis processing is changed (step S110), and the revised visual image-referred data is generated (step S111).

Further, when the method or degree of the local printing processing of the revised visual image-referred data or sharpness emphasis processing does not coincide with user's taste (step S112: NG), the image adjustment processing section 70b returns to the local printing processing of step S109, or the sharpness emphasis processing of step S110, and conducts the processing again, corresponding to the revision request of the local printing processing by the user (step S113: local printing processing), or the revision request of the sharpness emphasis processing (step 113: sharpness emphasis processing).

In the present fourth embodiment, by using the difference-large region signal, without any trouble to re-separate it from the input image data, the degree of the local printing processing can be simply changed, and it is found that, when the processing is repeated many times until it coincides with user's taste, user's processing load is largely reduced.

As described above, in the present embodiment, it is easily possible that the degree of the conversion processing conducted on the large region signal is changed. Specifically, as described in the above embodiment, the difference-large region signal multiplied by a predetermined coefficient may add to the visual image-referred data, further, as another method, this is particularly effective when there is a request in which the degree of the sharpness emphasis processing is also changed simultaneously with the local printing processing, and a method is also preferable by which the difference-large region signal multiplied by a predetermined coefficient is added to the converted-large region signal, and the converted-large region signal in which the degree of the local printing is changed is generated, and the converted-large region signal in which the degree of the local printing is changed, and the detail signal in which the detail signal is multiplied by a predetermined coefficient and the degree of the sharpness emphasis processing is changed, are added, and the visual image-referred data in which the degree of the local printing is changed (in addition, the degree of the sharpness emphasis processing is also changed) is generated. In either case, also when the repeated processing is conducted again by the user until it coincides with the taste, every time of re-doing, the degree of the processing can be changed without taking any time to newly separate signals, and this simplicity is a large advantage of the present invention.

Further, in the present fourth embodiment, By uswing a signal appropriate for respective processing, specially a signal from which the luminance component is extracted, when the local printing processing or sharpness processing is conducted, the very effective local printing processing is conducted, and the brightness of the person and the background becomes a natural atmosphere, and is very preferable, and it is of course that eyes or hair of the person, or the pattern of the background wall become fairly clear, further, when the result of processing does not coincide with user's taste, the correction of the degree of the local printing processing is conducted by using the difference-large region signal, but because the difference-large region signal is a signal meaning the effect itself of the local printing processing, also for the sensitive request in which the effect of 1/2 of the one time-preceding effect is desired to be given, because it can cope with the request in such a manner that the difference-large region signal is multiplied by 1/2 and subtracted from the converted-large region signal, the processing load is very lightened and the processing operation becomes greatly simple.

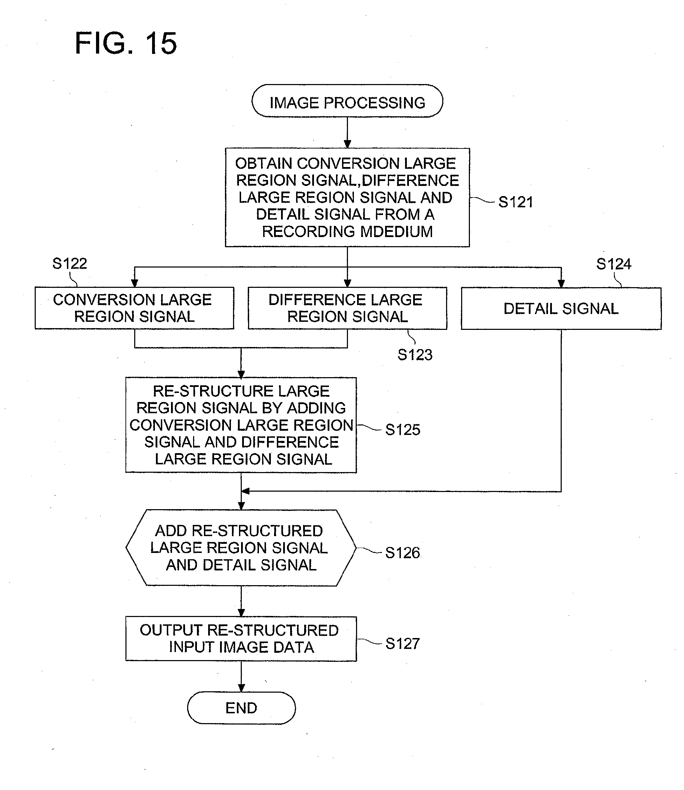

Further, when the visual image-referred data obtained from the medium, or the visual image-referred data generated by the above-described method, does not coincide with user's taste, as shown in Fig. 15, it is also possible that the image adjustment processing section 70b obtains the converted-large region signal, difference-large region signal and detail signal from the recording medium (steps S121 to S124), adds the converted-large region signal and difference-large region signal, and re-structures the large region signal (step S125), and adds the re-structured large region signal and detail signal (step S126), and re-structures the input image data (step S127).

Further, when the method of the conversion processing conducted on the large region signal in order to generate the converted-large region signal, does not coincide with user's intention, it is also possible that, as described above, without re-structuring even the input image data, the obtained converted-large region signal and difference-large region signal are added, and the large region signal is re-structured, and the image processing is newly conducted by the different method, and the converted-large region signal and difference-large region signal are newly generated, and the processing is advanced.

Further, when the separation condition of the large region signal and detail signal which are the base of the obtained converted-large region signal and the difference-large region signal, does not coincide with user's intention, in the same manner as the first invention group, it is also possible that the obtained large region signal (obtained by adding the obtained converted-large region signal and difference-large region signal and by re-structuring), and the detail signal are added and the input signal is re-structured.

Further, in the generation of above visual image-referred data, also in the present invention group, in the same manner as the first invention group, a mode is also preferable in which, instead of the detail luminance signal, the converted-detail luminance signal and difference-detail luminance signal are obtained, and the visual image-referred data is generated.

[The fifth embodiment]

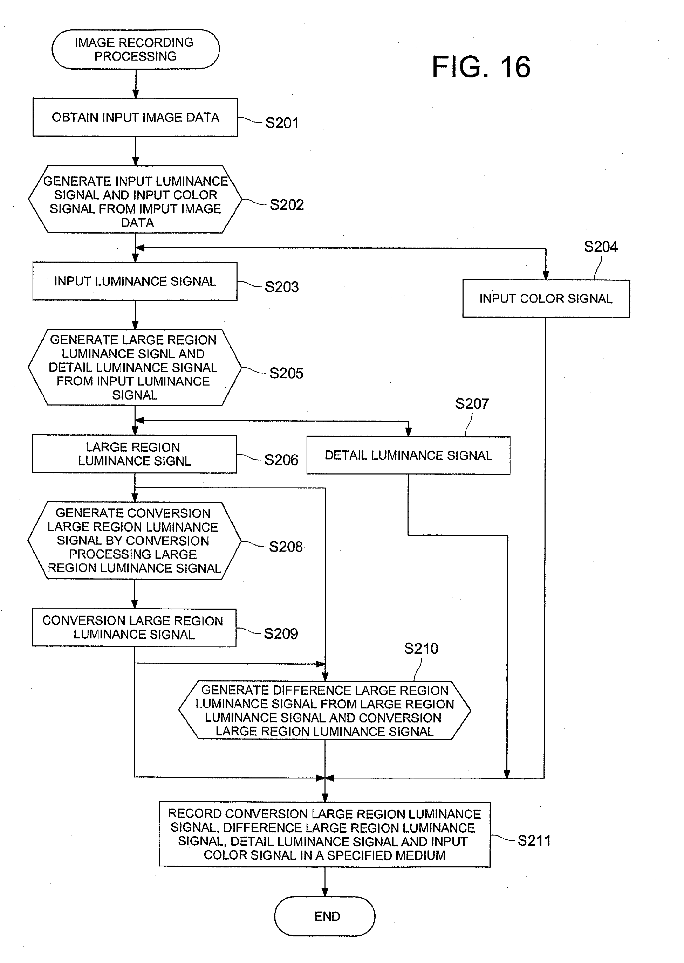

Fig. 16 to Fig. 18 are flowcharts showing the image recording processing and image processing conducted by the image adjustment processing section 70b in Fig. 3 in the fifth embodiment. Because the input image data in the present fifth embodiment is a scene under the back light in which the building in the out door is a background, and the person is arranged this side, it is assumed that there is a request in which the local printing processing is desired, and further, it is desired that the looks of the person or fine structure of the background (pattern of monochrome wall) are made clear.

Fig. 16 is a flowchart showing the image recording processing corresponding to the image recording method described in the aspect 21. In Fig. 16, initially, the image adjustment processing section 70b obtains the input image data (step S201), in the same manner as the steps S32, S33, generates the input luminance signal and input color signal from the input image data (step S202), and generates the large region luminance signal and detail luminance signal from the input luminance signal by using the same method as the step S34 in Fig. 7 (step S203, S205), generates the converted-large region luminance signal by conducting the local printing processing on the large region luminance signal in the same manner as the step S42 in Fig. 8 (steps S206, S208), generates the difference-large region luminance signal by taking the difference of the large region luminance signal and converted-large region luminance signal (steps S209, S210), and records the converted-large region luminance signal, difference-large region luminance signal, detail luminance signal and input color signal in, for example, the optical disk as a specified medium (steps S204, S207, S211).

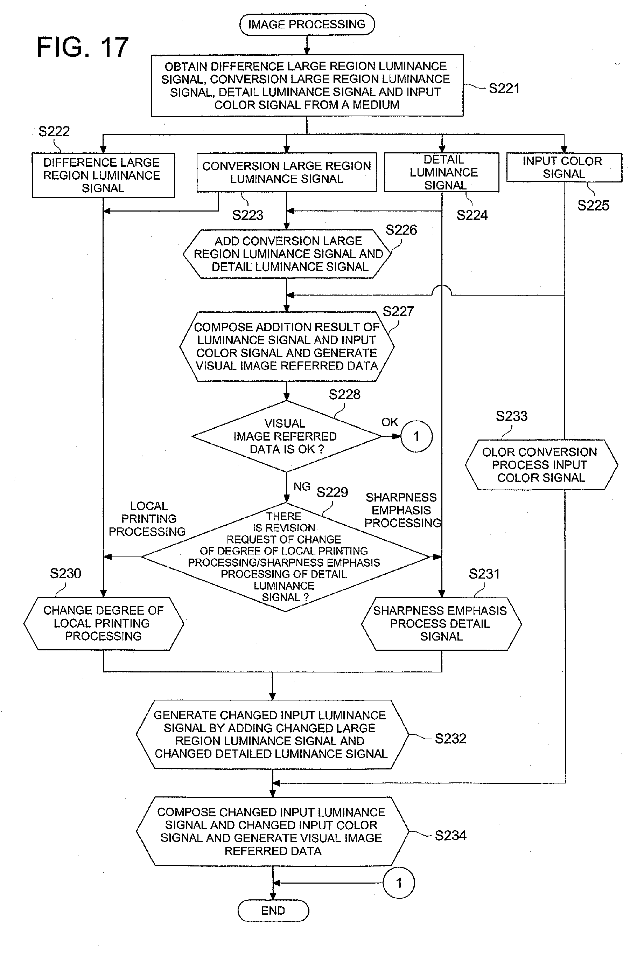

Next, Fig. 17 is a flowchart showing the image processing correspond to the image processing method written in the aspect 137. In this connection, because the input image data obtained in the above step S201 is a scene under the back light in which the building in the out door is a background, and the person is arranged this side, the local printing is desired, and further, it is assumed that there is a request in which it is desired that the looks of the person or the fine structure of the background (pattern of the monochrome wall) are made clear.

In Fig. 17, initially, the image adjustment processing section 70b obtains the difference-large region luminance signal, converted-large region luminance signal, detail luminance signal, and input color signal (steps S221 to 225), adds the converted-large region signal and detail luminance signal (step S226), and generates the visual image-referred data by composition-processing this and the input color signal (step S227).

Next, the image adjustment processing section 70b judges whether the generated visual image-referred data coincides with user's taste (step S228), and when it does not coincide (step S228: NG), it generates the changed large region luminance signal whose degree of the local printing processing is changed, by using the converted-large region luminance signal and difference-large region luminance signal (step S230), corresponding to the revision request of the local printing processing by the user (step S229: local printing processing) or revision request of the sharpness emphasis processing (step S229: sharpness emphasis processing), and when it is desired to conduct the sharpness emphasis processing, the section 70b generates the changed detail luminance signal by multiplying the detail luminance signal by a predetermined coefficient (b > 1) (step S231), and when the color does not coincide with the taste, conducts a predetermined color-converted processing (for example, chroma emphasis) on the input color signal and generates the changed input color signal(step S233), and adds the changed large region luminance signal and changed detail luminance signal and generates the changed input luminance signal (step S232), and composes the changed input luminance signal with further changed input color signal and generates the revised-visual image-referred data (step S234).

When thus obtained revised-visual image-referred data does not coincide with user's taste, the sequence returns to the step S230, and/or step S231, and/or step S233, and conducts the processing again.

As described above, in the present embodiment, it is easily possible that the degree of the conversion processing conducted on the large region luminance signal is changed. Specific method is, other than the above-described method, a method is also preferable by which the difference-large region luminance signal multiplied by a predetermined coefficient is added to the visual image-referred data, in either case, this simplicity is a large advantage of the present invention in which, also when the user conducts again the repeated processing until the image data coincides with the taste, every time of re-doing, the degree of the processing can be changed without any trouble to newly separate the signal.

In the fifth embodiment, when the processing is conducted by using the signal appropriate for respective processing, and from which particularly, the luminance component is extracted, the very effective local printing is conducted on the input image data, and the brightness of the person and the background becomes a natural atmosphere, and is very preferable, and further, when the sharpness processing is conducted by using the signal of the luminance component, it is of course that the eyes or hair of the person and the pattern of the wall of the background become fairly clear, however, when the result of the processing does not coincide with user's taste, the correction of the degree of the local printing processing is conducted by using the difference-large region signal. Because the difference-large region signal is a signal meaning the effect itself of the local printing processing, also for the sensitive request in which the effect of 1/2 of the one time-preceding effect is desired to be given, because it can cope with the request in such a manner that the difference-large region signal is multiplied by 1/2 and subtracted from the converted-large region signal, the processing load is very lightened and the processing operation becomes greatly simple.

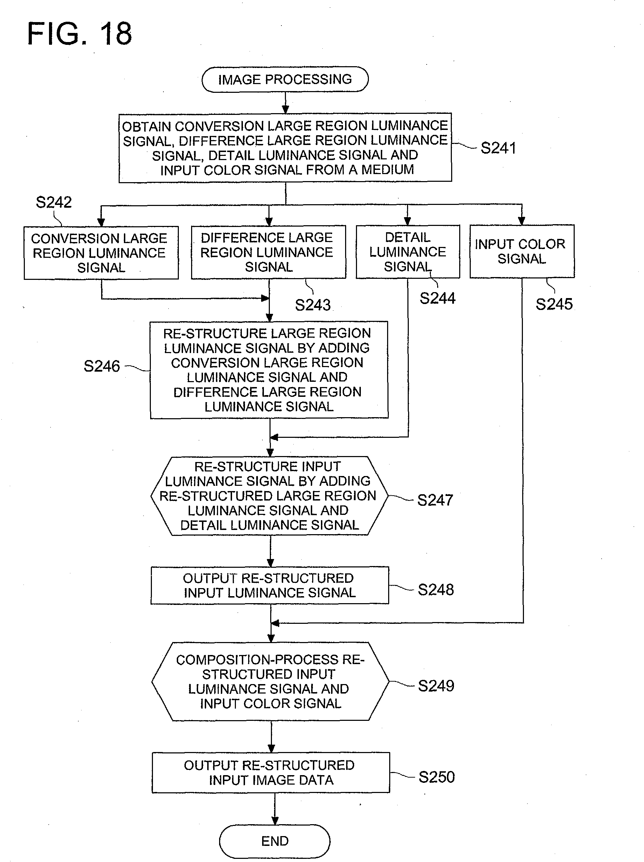

Further, when the visual image-referred data obtained from the medium, or the visual image-referred data generated by the above-described method, does not coincide with user's taste, as shown in Fig. 18, it is possible that the image adjustment processing section 70b obtains the converted-large region luminance signal, difference-large region luminance signal and detail luminance signal and input color signal from the recording medium (steps S141 to S245), adds the converted-large region luminance signal and difference-large region luminance signal, and re-structures the large region luminance signal (step S246), and adds this re-structured large region luminance signal and detail luminance signal and re-structures the input luminance signal (steps S247, S248), and composition-processes the re-structured input luminance signal and input color signal (step S249), and re-structures the input image data (step S250).

Further, when the method of the conversion processing conducted on the large region luminance signal in order to generate the converted-large region luminance signal, does not coincide with user's intention, it is also possible that, as described above, without re-structuring even the input image data, the obtained converted-large region luminance signal and difference-large region luminance signal are added, and the large region luminance signal is re-structured, and the method of the different conversion processing is selected and conducted.

Further, when the separation condition of the obtained large region luminance signal and detail luminance signal does not coincide with user's intention, it is also possible that the obtained large region luminance signal and the detail luminance signal are added and the input luminance signal is re-structured. Further, when the separation condition of the input luminance signal and the input color signal does not coincide with user's intention, it is also possible that the obtained input color signal and the above-described re-structured input luminance signal are added and the input image data is re-structured, and the different method is selected, and signals are separated.

Further, in the generation of the above visual image-referred data, also in the present invention group, in the same manner as the second invention group, a mode is also preferable in which, instead of the detail luminance signal, the converted-detail luminance signal and difference-detail luminance signal are obtained, and the visual image-referred data is generated.

Further, in the generation of the above visual image-referred data, also in the present fifth invention group, in the same manner as the second invention group, a mode is also preferable in which, instead of the input color signal, the converted-input color signal and difference-input signal are obtained, and the visual image-referred data is generated.

[The sixth embodiment]

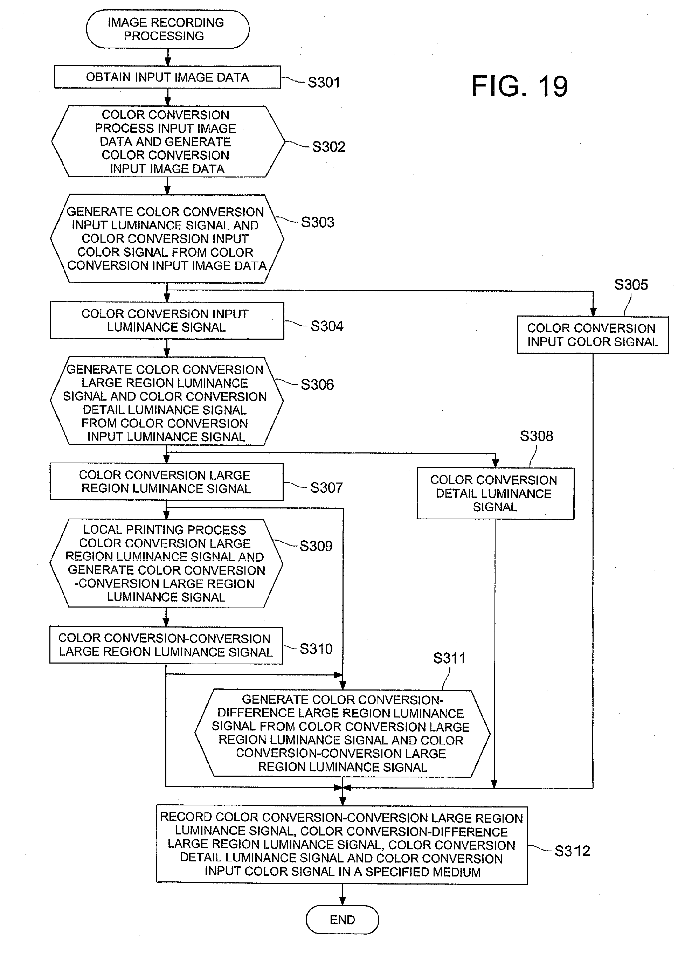

Figs. 19 to Fig. 21 are flowcharts showing the image recording processing and image processing conducted by the image adjustment processing section 70b in Fig. 3 in the sixth embodiment. Because the input image data in the sixth embodiment is an image generated on RIMMRGB as a picked-up image, but the color space is converted into sRGB, and a scene under the back light in which the building in the out door is a background, and the person is arranged this side, it is assumed that there is a request in which the local printing processing is desired, and further, it is desired that the looks of the person or fine structure of the background (pattern of monochrome wall) are made clear.

Fig. 19 is a flowchart showing the image recording processing corresponding to the image recording method described in the aspect 27. In Fig. 19, initially, the image adjustment processing section 70b obtains the input image data (step S301), and after the conversion processing (step S302) of the color space from the RIMMRGB into sRGB is conducted on the input image data, in the same manner as the steps S63 in Fig. 10, generates the color-converted input luminance signal and color-converted input color signal from the input image data (step S303 to S305), and generates the color-converted large region luminance signal and color-converted detail luminance signal from the color-converted input luminance signal by using the same method as the step S66 in Fig. 10 (step S306 to S308), conducts the local printing processing on the color-converted large region luminance signal in the same manner as the step S72 in Fig. 11, generates the color-converted converted-large region luminance signal (steps S309, S310), and generates the color-converted difference-large region luminance signal by taking the difference of the color-converted large region luminance signal and color-converted converted-large region luminance signal (step S311), and records the color-converted converted-large region luminance signal, color-converted difference-large region luminance signal, color-converted detail luminance signal and color-converted input color signal in, for example, the optical disk as a specified medium (step S312).

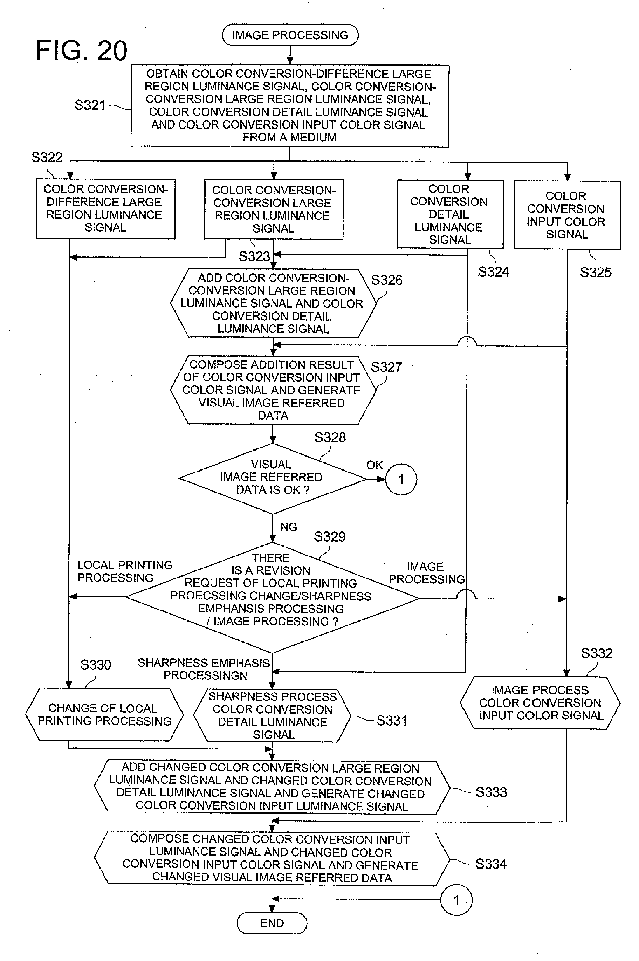

Next, Fig. 20 is a flowchart showing the image processing correspond to the image processing method written in the aspect 143.

In Fig. 20, initially, the image adjustment processing section 70b obtains the color-converted converted-large region luminance signal, color-converted- difference-large region luminance signal, color-converted detail luminance signal, and color-converted input color signal (steps S321 to 325), adds the color-converted converted-large region signal and color-converted detail signal (step S326), and generates the visual image-referred data by composition-processing this and the color-converted input color signal (step S327).

Next, the image adjustment processing section 70b judges whether the generated visual image-referred data coincides with user's taste (step S328), and when it does not coincide (step S328: NG), it changes degree of the local printing processing and generates the changed color-converted large region luminance signal by using the color-converted converted-large region luminance signal and color-converted difference-large region luminance signal (step S330), corresponding to the revision request of the local printing processing by the user (step S329: local printing processing), revision request of the sharpness emphasis processing (step S329: sharpness emphasis processing), or image processing request (step S329: image processing), and when it is desired to conduct the sharpness emphasis processing, the section 70b generates the changed color-converted detail luminance signal by multiplying the color-converted detail luminance signal by a predetermined coefficient (b > 1) (step S331), and when the color does not coincide with the taste, it conducts a predetermined color-converted processing (for example, chroma emphasis) on the color-converted input color signal, and generates the changed color-converted input luminance signal (step S332).

Then, the image adjustment processing section 70b adds the changed color-converted large region luminance signal and the changed color-converted detail luminance signal, and generates the color-converted input luminance signal (step S333), and composing the color-converted input luminance signal with the changed color-converted input color signal, and generates the revised-visual image-referred data (step S334).

When thus obtained revised-visual image-referred data does not coincide with user's taste, the sequence returns to the step S330, and/or step S331, and/or step S332, and conducts the processing again.

In the present sixth embodiment, because the color space in which the input image data and the viewing reference image data can exist, is different, the conversion processing of the color space is necessary, but when the conversion processing of the color space is arranged in the top of the recording processing along the present invention, an advantage is realized in which the correction processing to make coincide with user's taste, succeeding to that, can be smoothly conducted.

Further, when the local printing processing or the sharpness processing is conducted by using the signal appropriate for respective processing, and particularly, the signal from which the luminance component is extracted, the very effective local printing is conducted on the input image data, and the brightness of the person and the background becomes a natural atmosphere, and it is very preferable, and the eyes or hair of the person and the pattern of the wall of the background become fairly clear.

Further, when the result of processing does not coincide with user's taste, the correction of the degree of the local printing processing is conducted by using the color-converted difference-large region luminance signal, but because the signal is a signal meaning the largeness of effect itself of the local printing processing affected on the image which is an object of the processing, also for the sensitive request in which the effect of 1/2 of the one time-preceding effect is desired to be given, because it can cope with the request in such a manner that the difference-large region signal is multiplied by 1/2 and subtracted from the converted-large region signal, the processing load is very lightened and the processing operation becomes greatly simple.

As described above, in the present embodiment, it is easily possible that the degree of the conversion processing conducted on the color-converted large region luminance signal is changed by using the color-converted difference-large region luminance signal. Specific method is, other than the above-described method, a method is also preferable by which the color-converted difference-large region luminance signal multiplied by a predetermined coefficient is added to the visual image-referred data, in either case, this simplicity is a large advantage of the present invention in which, also when the user conducts again the repeated processing until the image data coincides with the taste, every time of re-doing, the degree of the processing can be changed without any trouble to newly separate the signal.

Further, because previously separated signal is used for the difference signal, or the effect of the image processing prominently appears because each signal is generated by extracting the luminance component, the visual image-referred data can be very simply generated. Further, also when the result of the processing does not coincide with user's taste, because it is not necessary that the processing is conducted again from the input image data, but by using each of the separated signals, the processing can be conducted, it is confirmed that an effect that the processing load is lightened, is realized.

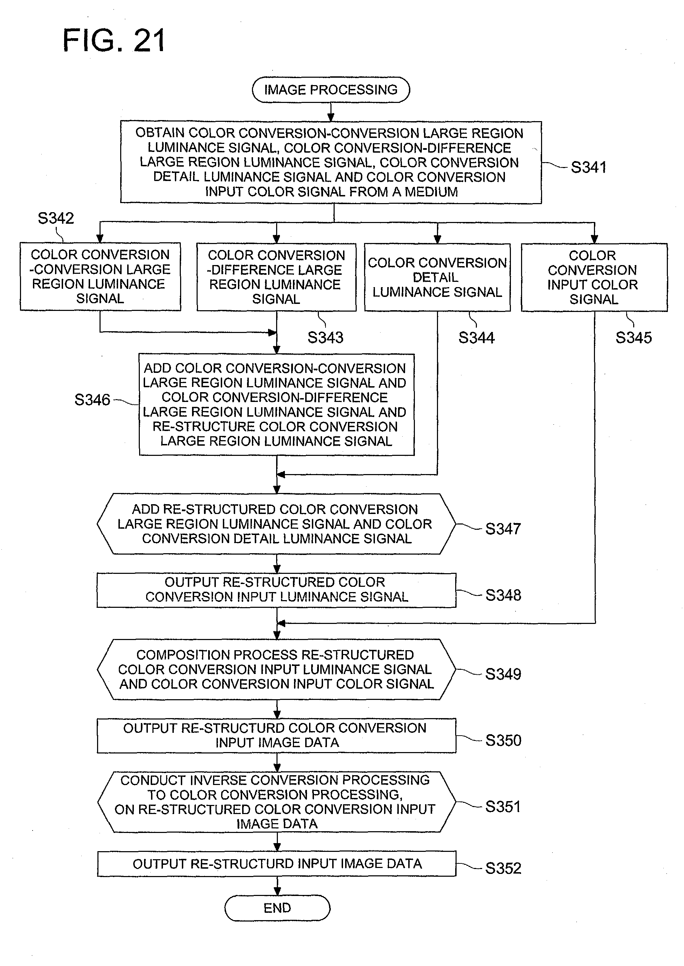

Further, when the visual image-referred data obtained from the medium, or the visual image-referred data generated by the above-described method, does not coincide with user's taste, as shown in Fig. 21, it is possible that the image adjustment processing section 70b obtains the color-converted converted-large region luminance signal, color-converted difference-large region luminance signal, color-converted detail luminance signal and color-converted input color signal from the recording medium (steps S341 to S345), adds the color-converted converted-large region luminance signal and color-converted difference-large region luminance signal, and re-structures the color-converted large region luminance signal (step S346), and adds the re-structured color-converted large region luminance signal and color-converted detail luminance signal and re-structures the color-converted input luminance signal (steps S347, S348), and composes the re-structured color-converted input luminance signal and color-converted input color signal (step S249), and generates the re-structured color-converted input image data (step S350), and can generate the re-structured input image data by conducting the inverse conversion processing of the color-converted processing on the re-structured color-converted input image data.

Further, when the method of the conversion processing conducted on the large region luminance signal in order to generate the color-converted converted-large region luminance signal, does not coincide with user's intention, it is also possible that, as described above, without re-structuring even the input image data, the obtained color-converted converted-large region luminance signal and color-converted difference-large region luminance signal are added, and the color-converted large region luminance signal is re-structured, and the method of the different conversion processing is selected and conducted.

Further, when the separation condition of the obtained color-converted large region luminance signal and color-converted detail luminance signal does not coincide with user's intention, it is also possible that the obtained color-converted large region luminance signal and the color-converted detail luminance signal are added and the color-converted input luminance signal is re-structured. Further, when the separation condition of the color-converted input luminance signal and the color-converted input color signal does not coincide with user's intention, it is also possible that the obtained color-converted input color signal and the above-described re-structured color-converted input luminance signal are composed and the color-converted input image data is re-structured, and the different method is selected, and signals are separated.

Further, in the generation of the above visual image-referred data, also in the present sixth invention group, in the same manner as the third invention group, a mode is also preferable in which, instead of the color-converted detail luminance signal, the color-converted converted-detail luminance signal and color-converted difference-detail luminance signal are obtained, and the visual image-referred data is generated.

Further, in the generation of the above visual image-referred data, also in the present sixth invention group, in the same manner as the third invention group, a mode is also preferable in which, instead of the color-converted input color signal, the color-converted converted-input color signal and color-converted difference-input signal are obtained, and the visual image-referred data is generated.

[The seventh embodiment]

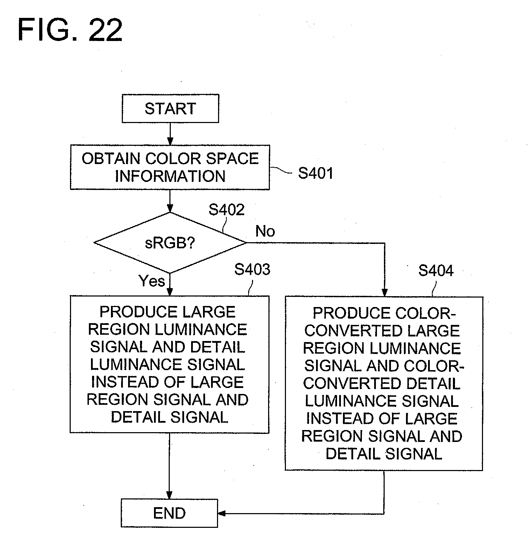

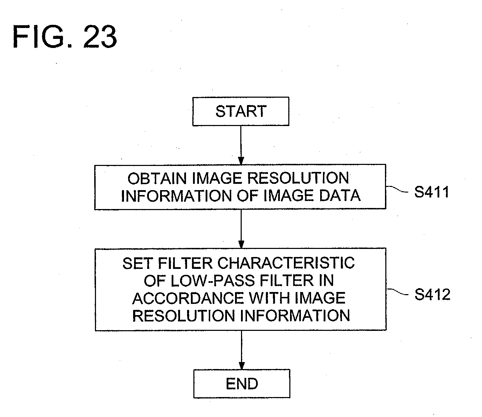

Figs. 22 and 23 are flowcharts showing a procedure to utilize additional information accompanying inputted-image data.

Concrete examples will be explained as follows. In Fig. 22, the conditions for generating large region signals and detail signals are determined based on additional information. For example, when it is assumed that processed-image data are expressed with sRGB standard color space finally, if it is judged from color space information of additional information accompanied with the inputted image data that the inputted image data to be processed are expressed by the color space other than sRGB, color-converted large region luminance signals and color-converted detail luminance signals can be selected as large region and detail signals, in place of large region luminance signals and detail luminance signals. As a result, this embodiment makes it possible to realize objects and effects of the third group of inventions effectively. In contrast to this, if it is judged from the color space information of the additional information that the input image data are expressed by sRGB standard color spaces, when color-converted large region luminance signals and color-converted detail luminance signals are employed, its effects are the same as those in the occasion where large region luminance signals and detail luminance signals are employed, despite of high load of processing for color conversion. Therefore, in the latter case, if it is judged from the color space information of the additional information that the input image data are expressed by sRGB standard color spaces, it may be preferred that large region luminance signals and detail luminance signals are selected in place of color-converted large region luminance signals and color-converted detail luminance signals as large region signals and detail signals, thus, it is possible to realize main effects of the present invention effectively.

In Fig. 23, the characteristic of a low-pass filter to be applied for the inputted-image data is determined based on additional information. That is, as one of methods to generate large region luminance signals and detail luminance signals from input luminance signals, there is a method wherein a lowpass filter is applied on the input luminance signals, and low frequency band components thus extracted are made to be large region luminance signals, and high frequency band components obtained by subtracting the low frequency band components from the input luminance signals are made to be detail luminance signals, and in this case, resolution information of input image data is obtained as additional information, for example, and low-pass filter characteristics, namely, frequency bands for low frequency band components and high frequency band components may be established. The reason for this is that the same texture included in a subject has a different frequency characteristic depending on the resolution.

In the same way, various pieces of additional information illustrated earlier are obtained, and conditions for generating large region and detail signals are established in accordance with the obtained additional information, which makes it possible to realize effects of the invention effectively.

The present invention is devised faced with the background in which the recent image display, diversification of the print method, development of the image processing method, and further, a culture in which the general users process the image and enjoy it, is developed, and when the user repeatedly conducts the image processing until it coincides with his taste, the processing load is reduced, and the content of processing can be simply selected sensitively even when the technological knowledge is insufficient, and there is a effect that also the effect of the processing can be sufficiently obtained.

**Claims**

**1.** An image processing method of producing visual image-referred data, comprising:

a large region and detail signal producing step of producing large region signals and detail signals by processing inputted-image data;

a storing step of storing at least the large region signals and the detail signals in a memory medium; and an image processing step of obtaining the large region signals and the detail signals from the memory medium and producing visual image-referred data by applying an image processing process for the obtained large region and detail signals in order to optimize an visual image formation on an output medium.

2. The image processing method of claim 1, wherein the image processing step obtains the large region signals and the detail signals and produces revised-visual image-referred data by applying another image processing process for the obtained large region and detail signals.

3. The image processing method of claim 2, wherein the image processing step obtains the large region signals and the detail signals, produces another large region signals and another detail signals from the obtained large region and detail signals and produces revised-visual image-referred data from the another large region signals and the another detail signals.

4. The image processing method of claim 1, further comprising:

a converting process of applying a detail converting process for the detail signals to convert the detail signals into converted-detail signals and producing difference detail signal by using the detail signals and the converted-detail signals,

wherein the image processing step produces visual image-referred data from the large region signals and the converted-detail signals and the storing step stores the converted-detail signals, the difference detail signal and the visual image-referred data in the memory medium.

5. The image processing method of claim 1, wherein the large region and detail signal producing step produces input luminance signals and input color signals by processing the inputted-image data and produces large region luminance signals and detail luminance signals instead of the large region signals and the detail signals, the storing step stores at least the large region luminance signals, the detail luminance signals and the input color signals in the memory medium, and the image processing step obtains the large region luminance signals, the detail luminance signals and the input color signals from the memory medium and produces visual image-referred data from the large region luminance signals, the detail luminance signals and the input color signals.

6. The image processing method of claim 5, further comprising:

a converting process of applying a detail converting process for the detail luminance signals to convert the detail luminance signals into converted-detail luminance signals and producing difference detail luminance signal by using the detail luminance signals and the converted-detail luminance signals,

wherein the image processing step produces visual image-referred data from the large region luminance signals, the converted-detail luminance signals and the input color signals and the storing step stores the converted-detail luminance signals, the difference detail luminance signal and the visual image-referred data in the memory medium.

7. The image processing method of claim 5, further comprising:

a converting process of applying a color converting process for the input color signals to convert the input color signals into converted-input color signals and producing difference input color signal by using the input color signals and the converted-input color signals,

wherein the image processing step produces visual image-referred data from the large region luminance signals, the detail luminance signals and the converted-input color signals and the storing step stores the visual image-referred data, the converted-input color signals and the difference input color signal in the memory medium.

8. The image processing method of claim 1, wherein the large region and detail signal producing step produces color-converted input luminance signals and color-converted input color signals by conducting a color gamut converting process for the inputted-image data and produces color-converted large region luminance signals and color-converted detail luminance signals instead of the large region signals and the detail signals, the storing step stores at least the color-converted large region luminance signals, the color-converted detail luminance signals and the color-converted input color signals in the memory medium, and the image processing step obtains the color-converted large region luminance signals, the color-converted detail luminance signals and the color-converted input color signals from the memory medium and produces visual image-referred data from the color-converted large region luminance signals, the color-converted detail luminance signals and the color-converted input color signals.

9. The image processing method of claim 8, further comprising:

a converting process of applying a converting process for the color-converted detail luminance signals to convert the color-converted detail luminance signals into color-converted converted-detail luminance signals and producing color-converted difference detail luminance signal by using the color-converted detail luminance signals and the color-converted converted-detail luminance signals,

wherein the image processing step produces visual image-referred data from the color-converted large region luminance signals, the color-converted converted-detail luminance signals and the color-converted input color signals and the storing step stores the color-converted converted-detail luminance signals, the color-converted difference detail luminance signal and the visual image-referred data in the memory medium.

10. The image processing method of claim 8, further comprising:

a converting process of applying a converting process for the color-converted input color signals to convert the color-converted input color signals into color-converted converted-input color signals and producing color-converted difference input color signal by using the color-converted input color signals and the color-converted converted-input color signals,

wherein the image processing step produces visual image-referred data from the color-converted large region luminance signals, the color-converted detail luminance signals and the color-converted converted-input color signals and the storing step stores the visual image-referred data, the color-converted converted-input color signals and the color-converted difference input color signal in the memory medium.

11. The image processing method of claim 1, further comprising:

a converting process of applying a converting process for the large region signals to convert the large region signals into converted-large region signals and producing difference large region signal by using the large region signals and the converted-large region signals,

wherein the image processing step produces visual image-referred data from the converted-large region signals and the detail signals and the storing step stores the converted-large region signals, the difference large region signal and the visual image-referred data in the memory medium.

12. The image processing method of claim 1, further comprising:

a converting process of applying a converting process for the large region signals to convert the large region signals into converted-large region signals and producing difference large region signal by using the large region signals and the converted- large region signals, and
a converting process of applying a converting process for the detail signals to convert the detail signals into converted-detail signals and producing difference detail signal by using the detail signals and the converted-detail signals,

wherein the image processing step produces visual image-referred data from the converted-large region signals and the converted-detail signals and the storing step stores the converted-large region signals, the difference large region signal, the converted-detail signals, the difference detail signal and the visual image-referred data in the memory medium.

13. The image processing method of claim 5, further comprising:

a converting process of applying a converting process for the large region luminance signals to convert the large region luminance signals into converted-large region luminance signals and producing difference large region luminance signal by using the large region luminance signals and the converted-large region luminance signals,

wherein the image processing step produces visual image-referred data from the converted-large region luminance signals, the detail luminance signals and the input color signals and the storing step stores the converted-large region luminance signals, the difference large region luminance signal and the visual image-referred data in the memory medium.

**14.** The image processing method of claim 5, further comprising:

a converting process of applying a converting process for the large region luminance signals to convert the large region signals into converted-large region luminance signals and producing difference large region luminance signal by using the large region luminance signals and the converted-large region luminance signals, and

a converting process of applying a converting process for the detail luminance signals to convert the detail luminance signals into converted-detail luminance signals and producing difference detail luminance signal by using the detail luminance signals and the converted-detail luminance signals,

wherein the image processing step produces visual image-referred data from the converted-large region luminance signals, the converted-detail luminance signals and the input color signals and the storing step stores the converted-large region luminance signals, the difference large region luminance signal, the converted-detail luminance signals, the difference detail luminance signal and the visual image-referred data in the memory medium.

**15.** The image processing method of claim 5, further comprising:

a converting process of applying a converting process for the large region luminance signals to convert the large region signals into converted-large region luminance signals and producing difference large region luminance signal by using the large region luminance signals and the converted-large region luminance signals, and

a converting process of applying a converting process for the input color signals to convert the input color signals into converted-input color signals and producing difference input color signal by using the input color signals and the converted-input color signals,

wherein the image processing step produces visual image-referred data from the converted-large region luminance signals, the detail luminance signals and the converted-input color signals and the storing step stores the converted-large region luminance signals, the difference large region luminance signal, the converted-input color signals, the difference input color signal and the visual image-referred data in the memory medium.

**16.** The image processing method of claim 8, further comprising:

a converting process of applying a converting process for the color-converted large region luminance signals to convert the color-converted large region luminance signals into color-converted converted-large region luminance signals and producing color-converted difference large region luminance signal by using the color-converted large region luminance signals and the color-converted converted-large region luminance signals,

wherein the image processing step produces visual image-referred data from the color-converted converted-large region luminance signals, the color-converted detail luminance signals and the color-converted input color signals and the storing step stores the color-converted converted-large region luminance signals, the color-converted difference large region luminance signal and the visual image-referred data in the memory medium.

**17.** The image processing method of claim 8, further comprising:

a converting process of applying a converting process for the color-converted large region luminance signals to convert the color-converted large region signals into color-converted converted-large region luminance signals and producing color-converted difference large region luminance signal by using the color-converted large region luminance signals and the color-converted converted- large region luminance signals, and

a converting process of applying a converting process for the color-converted detail luminance signals to convert the color-converted detail luminance signals into color-converted converted-detail luminance signals and producing color-converted difference detail luminance signal by using the color-converted detail luminance signals and the color-converted converted-detail luminance signals,

wherein the image processing step produces visual image-referred data from the color-converted converted-large region luminance signals, the color-converted converted-detail luminance signals and the color-converted input color signals and the storing step stores the color-converted converted-large region luminance signals, the color-converted difference large region luminance signal, the color-converted converted-detail luminance signals, the color-converted difference detail luminance signal and the visual image-referred data in the memory medium.

**18.** The image processing method of claim 8, further comprising:

a converting process of applying a converting process for the color-converted large region luminance signals to convert the color-converted large region signals into color-converted converted-large region luminance signals and producing color-converted difference large region luminance signal by using the color-converted large region luminance signals and the color-converted converted-large region luminance signals, and

a converting process of applying a converting process for the color-converted input color signals to convert the color-converted input color signals into color-converted converted-input color signals and producing color-converted difference input color signal by using the color-converted input color signals and the color-converted converted-input color signals,

wherein the image processing step produces visual image-referred data from the color-converted converted-large region luminance signals, the color-converted detail luminance signals and the color-converted converted-input color signals and the storing step stores the color-converted converted-large region luminance signals, the color-converted difference large region luminance signal, the color-converted converted-input color signals, the color-converted difference input color signal and the visual image-referred data in the memory medium.

**19.** The image processing method of claim 1, wherein the large region signals are composed of a low frequency component of the inputted image data and the detail signals are composed of a high frequency component of the inputted image data.

**20.** The image processing method of claim 1, wherein the large region signals are composed on a low frequency component and an edge component of the inputted image data and the detail signals are composed of a component of a high frequency component of the inputted image data from which an edge component is deducted.

**21.** The image processing method of claim 1, wherein the large region signals and/or the detail signals are produced by applying a frequency band separating process for the inputted image data.

**22.** The image processing method of claim 1, wherein the large region signals and/or the detail signals are produced by applying a wavelet conversion processing for the inputted image data.

**23.** The image processing method of claim 11, wherein the converting process applied to the large region signals is a gradation converting process.

**24.** The image processing method of claim 23, wherein the gradation converting process is a nonlinear conversion process.

**25.** The image processing method of claim 5, wherein the large region luminance signals are composed of a low frequency component of the input luminance data and the detail signals are composed of a high frequency component of the input luminance data.

**26.** The image processing method of claim 5, wherein the large region luminance signals are composed of a low frequency component and an edge component of the input luminance data and the detail luminance signals are composed of a component of a high frequency component of the input luminance data from which an edge component is deducted.

**27.** The image processing method of claim 5, wherein the large region luminance signals and/or the detail luminance signals are produced by applying a frequency band separating process for the inputted image data.

**28.** The image processing method of claim 5, wherein the large region luminance signals and/or the detail luminance signals are produced by applying a wavelet conversion processing for the inputted image data.

29. The image processing method of claim 13, wherein the converting process applied to the large region luminance signals is a gradation converting process.

30. The image processing method of claim 29, wherein the gradation converting process is a nonlinear conversion process.

31. The image processing method of claim 8, wherein the color-converted large region luminance signals are composed of a low frequency component of the color-converted input luminance data and the color-converted detail signals are composed of a high frequency component of the color-converted input luminance data.

32. The image processing method of claim 8, wherein the color-converted large region luminance signals are composed of a low frequency component and an edge component of the color-converted input luminance data and the color-converted detail luminance signals are composed of a component of a high frequency component of the color-converted input luminance data from which an edge component is deducted.

33. The image processing method of claim 8, wherein the color-converted large region luminance signals and/or the color-converted detail luminance signals are produced by applying a frequency band separating process for the color-converted input luminance signals.

34. The image processing method of claim 8, wherein the color-converted large region luminance signals and/or the color-converted detail luminance signals are produced by applying a wavelet conversion processing for the color-converted input luminance signals.

35. The image processing method of claim 16, wherein the converting process applied to the color-converted large region luminance signals is a gradation converting process.

36. The image processing method of claim 29, wherein the gradation converting process is a nonlinear conversion process.

37. The image processing method of claim 1, wherein the visual image-referred data has a dependence to the characteristic of an output device.

38. The image processing method of claim 1, wherein the signals and data are stored in a separate file in the memory medium.

39. The image processing method of claim 1, wherein the signals and data are stored in the same file in the memory medium.

40. The image processing method of claim 1, wherein at least one of the signals and data is stored as meta data in the same file in the memory medium.

41. The image processing method of claim 1, wherein a plurality of signals and data are stored in the same memory medium.

42. The image processing method of claim 1, wherein a plurality of signals and data are stored in different memory mediums.

43. The image processing method of claim 1, wherein at least one of a plurality of signals and data are stored together with an application capable of compiling image in the same memory medium.

44. The image processing method of claim 1, wherein at least one of a plurality of signals and data are stored together with a file to supplement an application capable of compiling image in the same memory medium.

45. The image processing method of claim 1, further comprising:

an additional information processing step of processing additional information provided with the inputted-image data,

wherein the large region and detail signal producing step determines a condition to produce the large region signals and the detail signals based on the additional information.

46. The image processing method of claim 45, wherein the large region and detail signal producing step produces large region luminance signals and detail luminance signals instead of the large region signals and the detail signals based on the additional information.

47. The image processing method of claim 46, wherein the additional information processing step judges the kind of color space of the inputted-image data from the additional information and the large region and detail signal producing step produces color-converted large region luminance signals and color-converted detail luminance signals instead of the large region signals and the detail signals based on the kind of color space.

48. The image processing method of claim 45, wherein the large region and detail signal producing step changes the characteristic of low-pass filter based on the additional information.

49. An image processing device for producing visual image-referred data, comprising:

a large region and detail signal producing section for producing large region signals and detail signals by processing inputted-image data;
a storing section for storing at least the large region signals and the detail signals in a memory medium; and
an image processing section for obtaining the large region signals and the detail signals from the memory medium and producing visual image-referred data by applying an image processing process for the obtained large region and detail signals in order to optimize an visual image formation on an output medium.

50. A program to conduct an image processing method of producing visual image-referred data, the image processing method comprising:

a large region and detail signal producing step of producing large region signals and detail signals by processing inputted-image data;
a storing step of storing at least the large region signals and the detail signals in a memory medium; and
an image processing step of obtaining the large region signals and the detail signals from the memory medium and producing visual image-referred data by applying an image processing process for the obtained large region and detail signals in order to optimize an visual image formation on an output medium.

FIG. 1

# FIG. 2

SAMPLE DISCRIMINATING INFORMATION D1,D2,D3

# FIG. 3

OPERATION SECTION 11

CONTROL SECTION 7

IMAGE PROCESSING SECTION 70

FILM SCANNER SECTION 9

REFLECTION DOCUMENT INPUT APPARATUS 10

IMAGE TRANSFER MEANS 30

RECEIVING-USE COMMUNICATION MEANS 32

FILM SCAN DATA PROCESSING SECTION 70a

REFLECTION DOCUMENT SCAN DATA PROCESSING SECTION 70c

IMAGE DATA FORMAT DECODING PROCESSING SECTION 70d

IMAGE ADJUSTMENT PROCESSING SECTION 70b

TEMPLATE PROCESSING SECTION 70e

CRT PROPER PROCESSING SECTION 70f

PRINTER PROPER PROCESSING SECTION 70g

PRINTER PROPER PROCESSING SECTION 70g

IMAGE DATA FORMAT PRODUCTION PROCESSING SECTION 70h

CRT 8

EXPOSURE PROCESSING SECTION 4

EXTERNAL PRINTER 34

IMAGE CONVEYING SECTION 31

TRANSMISSON-USE COMMUNICATION MEANS 33

TEMPLATE STORAGE MEANS 72

DATA ACCUMULATION MEANS 71

EP 1 398 952 A2

# FIG. 4

```
        ╭──────────────────────╮
        │   IMAGE RECORDING     │
        │     PROCESSING        │
        ╰──────────────────────╯
                   │
                   ▼
        ┌──────────────────────┐
        │    OBTAIN INPUT       │─── S1
        │    IMAGE DATA         │
        └──────────────────────┘
                   │
                   ▼
         ╱────────────────────╲
        ╱   GENERATE LARGE      ╲
        │   REGION SIGNAL        │─── S2
        │  AND DETAIL SIGNAL     │
        │   FROM INPUT           │
        ╲    IMAGE DATA         ╱
         ╲────────────────────╱
                   │
                   ▼
        ┌──────────────────────┐
        │  RECORD THE LARGE     │
        │  REGION SIGNAL AND    │─── S3
        │  DETAIL SIGNAL IN     │
        │  SPECIFIED MEDIUM     │
        └──────────────────────┘
                   │
                   ▼
        ╭──────────────────────╮
        │         END          │
        ╰──────────────────────╯
```

# FIG. 5

```
         ┌─────────────────────┐
         │  IMAGE PROCESSING   │
         └─────────────────────┘
                    │
                    ▼
         ┌─────────────────────┐
         │ OBTAIN LARGE REGION │
         │ SIGNAL AND DETAIL   │
         │ SIGNAL FROM         │ ─── S11
         │ ECORDING MEDIUM     │
         └─────────────────────┘
```

S12

CONDUCT LOCAL PRINTING PROCESSING ON LARGE REGION SIGNAL

CONDUCT SHARPNESS EMPHASIS PROCESSING ON DETAIL SIGNAL ─── S13

GENERATE VISUAL IMAGE REFERRED DATA BY ADDING LARGE REGION SIGNAL AND DETAIL SIGNAL AFTER PROCESSING ─── S14

S15

VISUAL IMAGE REFERRED DATA IS OK ?    NG

OK

RECORD LARGE REGION SIGNAL AND DETAIL SIGNAL IN SPECIFIED MEDIUM ─── S16

S17

THERE IS A REVISON REQUEST OF LOCAL PRINTING /SHARPNESS EMPHASIS PROCESSING ?

SHRPNESS EMPHASIS PROCESSING

LOCAL PRINTING PROCESSING

END

# FIG. 6

IMAGE PROCESSING

OBTAIN LARGE REGION
SIGNAL AND DETAIL
SIGNAL FROM
RECORDING MEDIUM — S21

RE-STRUCTURE INPUT
IMAGE DATA BY ADDING
LARGE REGION SIGNAL
AND DETAIL SIGNAL — S22

OUTPUT THE RE-
STRUCTURED
INPUT IMAGE DATA — S23

END

# FIG. 7

```
        ┌─────────────────────────┐
        │    IMAGE RECORDING      │
        │      PROCESSING         │
        └─────────────────────────┘
                    │
                    ▼
        ┌─────────────────────────┐
        │ OBTAIN INPUT IMAGE DATA │──── S31
        └─────────────────────────┘
                    │
                    ▼
```

|                                    | S32 |                                 | S33 |
|------------------------------------|-----|---------------------------------|-----|
| GENERATE INPUT LUMINANCE SIGNAL FROM INPUT IMAGE DATA | | GENERATE INPUT COLOR SIGNAL FROM INPUT IMAGE DATA | |

S34 — GENERATE LARGE REGION LUMINANCE SIGNAL AND DETAILED LUMINANCE SIGNAL FROM INPUT LUMINANCE SIGNAL

S35 — RECORD THE LARGE REGION LUMINANCE SIGNAL, DETAILED LUMINANCE SIGNAL AND INPUT COLOR SIGNAL IN SPECIFIED MEDIUM

END

88

# FIG. 8

IMAGE PROCESSING

OBTAIN LARGE REGION LUMINANCE SIGNAL, DETAIL LUMINANCE SIGNAL AND INPUT COLOR SIGNAL FROM RECORDING MEDIUM — S41

S42 — LOCAL PRINTING PROCESS LARGE REGION LUMINANCE SIGNAL

1

S43 — SHARPNESS EMPHASIS PROCESS DETAIL LUMINANCE SIGNAL

S44 — CONDUCT IMAGE PROCESSING ON INPUT COLOR SIGNAL

GENERAATE INPUT LUMINANCE SIGNAL AFTER PROCESSING BY ADDING LARGE REGION LUMINANCE SIGNAL AND DETAIL LUMINANCE SIGNAL AFTER PROCESSING — S45

GENERATE VISUAL IMAGE REFERRED DATA BY COMPOSING INPUT LUMINANCE SIGNAL AFTER PROCESSING WITH INPUT COLOR SIGNAL AFTER PROCESSING — S46

S47 — VISUAL IMAGE REFERRED DATA IS OK ?

NG

OK

END

S48 — THERE IS A REVISION REQUEST OF LOCAL PRINTING/SHARPNESS PROCESSING ?

SHARPNESS EMPHASIS PROCESSING

1

LOCAL PRINTING PROCESSING

# FIG. 9

IMAGE PROCESSING

OBTAIN LARGE REGION
LUMINANCE SIGNAL,
DETAIL LUMINANCE
SIGNAL AND INPUT
COLOR SIGNAL FROM
RECORDING MEDIUM — S51

S52

| LARGE REGION LUMINANCE SIGNAL | DETAIL LUMINANCE SIGNAL | INPUT COLOR SIGNAL |

S54

S53

RE-STRUCTURE INPUT
LUMINANCE SIGNAL BY
ADDING LARGE REGION
LUMINANCE SIGNAL AND — S55
DETAIL LUMINANCE
SIGNAL

COMPOSITION-PROCESS
RE-STRUCTURED INPUT
LUMINANCE SIGNAL AND — S56
INPUT COLOR SIGNAL

OUTPUT RE-STRUCTURED
INPUT IMAGE DATA — S57

END

# FIG. 10

IMAGE RECORDING
PROCESSING

OBTAIN INPUT IMAGE DATA — S61

GENERATE COLOE CONVERSION
INPUT IMAGE DATA BY COLOR-
CONVERSION PROCESSING
INPUT IMAGE DATA — S62

GENERATE COLOR CONVERSION
INPUT LUMINANCE SIGNAL AND
COLOR CONVERSION INPUT
COLOR SIGNAL FROM COLOR
CONVERSION INPUT IMAGE DATA — S63

S64 — COLOR CONVERSION INPUT
LUMINANCE SIGNAL

COLOR CONVERSION
INPUT COLOR SIGNAL — S65

GENERATE COLOR CONVERSION
LARGE REGION LUMINANCE
SIGNAL AND COLOR CONVERSION
DETAIL LUMINANCE SIGNAL
FROM COLOR CONVERSION
INPUT LUMINANCE SIGNAL — S66

RECORD COLOR CONVERSION
LARGE REGION LUMINANCE
SIGNAL, COLOR CONVERSION
DETAIL LUMINANCE SIGNAL
AND COLOR CONVERSION
INPUT COLOR SIGNAL IN
A SPECIFIED MEDIUM — S67

END

**FIG. 11**

IMAGE PROCESSING

OBTAIN COLOR CONVERSION
LARGE REGION LUMINANCE
SIGNAL, COLOR CONVERSION
DETAIL LUMINANCE SIGNAL
AND COLOR CONVERSION
INPUT COLOR SIGNAL FROM
A RECORDING MEDIUM — S71

1

LOCAL PRINTING
PROCESS COLOR
CONVERSION LARGE
REGION LUMINANCE
SIGNAL — S72

SHRPNESS EMPHASIS
PROCESS COLOR
CONVERSION DETAIL
LUMINANCE SIGNAL — S73

COLOR
CONVERSION
INPUT COLOR
SIGNAL — S74

ADD PROCESSED COLOR
CONVERSION LARGE REGION
LUMINANCE SIGNAL AND COLOR
CONVERSION DETAIL
LUMINANCE SIGNAL — S75

OUTPUT REVISED COLOR
CONVERSION INPUT
LUMINANCE SIGNAL — S76

COMPOSITION-PROCESS
REVISED COLOR CONVERSION
INPUT LUMINANCE SIGNAL
AND COLOR CONVERION
INPUT COLOR SIGNAL — S77

GENERATE VISUAL
IMAGE REFERRED DATA — S78

S79
VISUAL
IMAGE REFERRED
DATA IS OK ?

NG

OK

S80
THERE IS
A REVISION REQUEST
OF LOCAL PRINTING
/SHARPNESS
PROCESSING ?

LOCAL
PRINTING
PROCESSING

SHARPNESS EMPHASIS
PROCESSING

1

END

# FIG. 12

IMAGE PROCESSING

OBTAIN COLOR CONVERSION
LARGE REGION LUMINANCE
SIGNAL, COLOR CONVERSION
DETAIL LUMINANCE SIGNAL
AND COLOR CONVERSION
INPUT COLOR SIGNAL FROM
A RECORDING MEDIUM — S81

S82

COLOR CONVERSION LARGE
REGION LUMINANCE SIGNAL

COLOR CONVERSION
DETAIL LUMINANCE SIGNAL

S84

COLOR CONVERSION
INPUT COLOR SIGNAL

S83

RE-STRUCTURE COLOR
CONVERSION INPUT LUMINANCE
SIGNAL BY ADDING COLOR
CONVERSION LARGE REGION
LUMINANCE SIGNAL AND COLOR
CONVERSION DETAIL
LUMINANCE SIGNAL — S85

COMPOSITION-PROCESS RE-
STRUCTURED COLOR CONVERSION
INPUT LUMINANCE SIGNAL AND
COLOR CONVERSION INPUT
COLOR SIGNAL — S86

OUTPUT RE-STRUCTURED COLOR
CONVERSION PROCESSED
INPUT IMAGE DATA — S87

INVERSE CONVERSION
PROCCESS TO COLOR REGION
CONVERSION PROCESSING,
COLOR CONVERSION PROCESSED
INPUT IMAGE DATA — S88

OUTPUT RE-STRUCTURED
INPUT IMAGE DATA — S89

END

## FIG. 13

```
      ┌─────────────────────┐
      │  IMAGE□RECORDING     │
      │     PROCESSING       │
      └─────────────────────┘
               │
               ▼
  ┌──────────────────────────┐
  │  OBTAIN INPUT IMAGE DATA  │──── S91
  └──────────────────────────┘
               │
   ┌───────────────────────────┐          ┌──────────────────────────┐
   │ GENERATE LARGE REGION      │          │  GENERATE DETAIL SIGNAL  │
   │ SIGNAL FROM INPUT IMAGE    │── S92    │  FROM INPUT IMAGE DATA    │── S93
   │ DATA                       │          └──────────────────────────┘
   └───────────────────────────┘
               │
               ▼
   ┌───────────────────────────┐
   │ LOCAL PRINTING PROCESS     │── S94
   │ LARGE REGION SIGNAL        │
   └───────────────────────────┘
               │
               ▼
   ┌───────────────────────────┐
   │ CONVERSION LARGE           │── S95
   │ REGION SIGNAL              │
   └───────────────────────────┘
               │
               ▼
        ┌──────────────────────────┐
        │ GENERATE DIFFERENCE      │
        │ LARGE REGION SIGNAL FROM │
        │ LARGE REGION SIGNAL AND  │── S96
        │ CONVERSION LARGE         │
        │ REGION SIGNAL            │
        └──────────────────────────┘
               │
               ▼
        ┌──────────────────────────┐
        │ DIFFERENCE LARGE         │── S97
        │ REGION SIGNAL            │
        └──────────────────────────┘
               │
               ▼
   ┌──────────────────────────────┐
   │ RECORD CONVERSION LARGE       │
   │ REGION SIGNAL, DIFFERENCE     │
   │ LARGE REGION SIGNAL AND       │── S98
   │ DETAIL SIGNAL IN A SPECIFIED  │
   │ MEDIUM                        │
   └──────────────────────────────┘
               │
               ▼
          ┌─────────┐
          │   END   │
          └─────────┘
```

94

FIG. 14

IMAGE PROCESSING

OBTAIN CONVERSION LARGE REGION SIGNAL, DIFFERENCE LARGE REGION SIGNAL AND DETAIL SIGNAL FROM A RECORDING MEDIUM — S101

S102

DIFFERENCE LARGE REGION SIGNAL

CONVERSION LARGE REGION SIGNAL

S104

DETAIL SIGNAL

S103

GENERATE VISUAL IMAGE REFERRED DATA BY ADDING CONVERSION LARGE REGION SIGNAL AND DETAIL SIGNAL — S105

VISUAL IMAGE REFERRED DATA — S106

S107

VISUAL IMAGE REFERRED DATA IS OK ? — OK — 1

NG

S108

THERE IS A REVISION REQUEST OF LOCAL PRINTING PROCESSING /SHARPNESS EMPHASIS PROCESSING ?

SHARPNESS EMPHASIS PROCESSING

LOCAL PRINTING PROCESSING

CHANGE DEGREE OF SHARPNESS EMPHASIS PROCESSING

CHANGE DEGREE OF LOCAL PRINTING PROCESSING — S109

S110

GENERATE CHANGED VISUAL IMAGE REFERRED DATA — S111

S112

VISUAL IMAGE REFERRED DATA IS OK ? — NG

1 — OK

S113

THERE IS A REVISION REQUEST OF LOCAL PRINTING /SHARPNESS EMPHASIS PROCESSING ?

SHARPNESS EMPHASIS PROCESSING

END

LOCAL PRINTING PROCESSING

# FIG. 15

```
            ┌─────────────────────┐
            │  IMAGE PROCESSING   │
            └─────────────────────┘
                       │
                       ▼
        ┌────────────────────────────────┐
        │ OBTAIN CONVERSION LARGE        │
        │ REGION SIGNAL,DIFFERENCE       │
        │ LARGE REGION SIGNAL AND        │── S121
        │ DETAIL SIGNAL FROM A           │
        │ RECORDING MDEDIUM              │
        └────────────────────────────────┘
```

S122                                      S124

```
┌────────────────┐  ┌────────────────┐  ┌────────────────┐
│ CONVERSION LARGE│  │ DIFFERENCE LARGE│  │  DETAIL SIGNAL │
│  REGION SIGNAL  │  │  REGION SIGNAL  │  │                │
└────────────────┘  └────────────────┘  └────────────────┘
                            │
                          S123
```

```
        ┌────────────────────────────────┐
        │   RE-STRUCTURE LARGE           │
        │ REGION SIGNAL BY ADDING        │
        │ CONVERSION LARGE REGION        │── S125
        │ SIGNAL AND DIFFERENCE          │
        │ LARGE REGION SIGNAL            │
        └────────────────────────────────┘
                       │
                       ▼
        ╱──────────────────────────╲
        │   ADD RE-STRUCTURED       │
        │ LARGE REGION SIGNAL       │── S126
        │  AND DETAIL SIGNAL        │
        ╲──────────────────────────╱
                       │
                       ▼
        ┌──────────────────────────┐
        │  OUTPUT RE-STRUCTURED    │── S127
        │   INPUT IMAGE DATA       │
        └──────────────────────────┘
                       │
                       ▼
                 ┌──────────┐
                 │   END    │
                 └──────────┘
```

## FIG. 16

IMAGE RECORDING PROCESSING

↓

OBTAIN INPUT IMAGE DATA — S201

↓

GENERATE INPUT LUMINANCE SIGNAL AND INPUT COLOR SIGNAL FROM IMPUT IMAGE DATA — S202

↓

INPUT LUMINANCE SIGNAL — S203

INPUT COLOR SIGNAL — S204

↓

GENERATE LARGE REGION LUMINANCE SIGNL AND DETAIL LUMINANCE SIGNAL FROM INPUT LUMINANCE SIGNAL — S205

↓

LARGE REGION LUMINANCE SIGNL — S206

DETAIL LUMINANCE SIGNAL — S207

↓

GENERATE CONVERSION LARGE REGION LUMINANCE SIGNAL BY CONVERSION PROCESSING LARGE REGION LUMINANCE SIGNAL — S208

↓

CONVERSION LARGE REGION LUMINANCE SIGNAL — S209

↓

GENERATE DIFFERENCE LARGE REGION LUMINANCE SIGNAL FROM LARGE REGION LUMINANCE SIGNAL AND CONVERSION LARGE REGION LUMINANCE SIGNAL — S210

↓

RECORD CONVERSION LARGE REGION LUMINANCE SIGNAL, DIFFERENCE LARGE REGION LUMINANCE SIGNAL, DETAIL LUMINANCE SIGNAL AND INPUT COLOR SIGNAL IN A SPECIFIED MEDIUM — S211

↓

END

## FIG. 17

IMAGE PROCESSING

OBTAIN DIFFERENCE LARGE REGION LUMINANCE SIGNAL, CONVERSION LARGE REGION LUMINANCE SIGNAL, DETAIL LUMINANCE SIGNAL AND INPUT COLOR SIGNAL FROM A MEDIUM — S221

S222

| DIFFERENCE LARGE REGION LUMINANCE SIGNAL | CONVERSION LARGE REGION LUMINANCE SIGNAL | DETAIL LUMINANCE SIGNAL | INPUT COLOR SIGNAL |

S223    S224    S225

ADD CONVERSION LARGE REGION LUMINANCE SIGNAL AND DETAIL LUMINANCE SIGNAL — S226

COMPOSE ADDITION RESULT OF LUMINANCE SIGNAL AND INPUT COLOR SIGNAL AND GENERATE VISUAL IMAGE REFERRED DATA — S227

S228

VISUAL IMAGE REFERRED DATA IS OK ?  OK → (1)

S233

OLOR CONVERSION PROCESS INPUT COLOR SIGNAL

NG  S229

LOCAL PRINTING PROCESSING

SHARPNESS EMPHASIS PROCESSING

THERE IS REVISION REQUEST OF CHANGE OF DEGREE OF LOCAL PRINTING PROCESSING/SHARPNESS EMPHASIS PROCESSING OF DETAIL LUMINANCE SIGNAL ?

S230

CHANGE DEGREE OF LOCAL PRINTING PROCESSING

S231

SHARPNESS EMPHASIS PROCESS DETAIL SIGNAL

GENERATE CHANGED INPUT LUMINANCE SIGNAL BY ADDING CHANGED LARGE REGION LUMINANCE SIGNAL AND CHANGED DETAILED LUMINANCE SIGNAL — S232

COMPOSE CHANGED INPUT LUMINANCE SIGNAL AND CHANGED INPUT COLOR SIGNAL AND GENERATE VISUAL IMAGE REFERRED DATA — S234

(1)

END

# FIG. 18

```
( IMAGE PROCESSING )
            |
            v
OBTAIN CONVERSION LARGE REGION LUMINANCE
SIGNAL, DIFFERENCE LARGE REGION LUMINANCE      — S241
SIGNAL, DETAIL LUMINANCE SIGNAL AND
INPUT COLOR SIGNAL FROM A MEDIUM
```

S242

| CONVERSION LARGE REGION LUMINANCE SIGNAL | DIFFERENCE LARGE REGION LUMINANCE SIGNAL | DETAIL LUMINANCE SIGNAL | INPUT COLOR SIGNAL |

S243   S244   S245

```
RE-STRUCTURE LARGE REGION
LUMINANCE SIGNAL BY ADDING
S246 — CONVERSION LARGE REGION
LUMINANCE SIGNAL AND
DIFFERENCE LARGE REGION
LUMINANCE SIGNAL
            |
            v
RE-STRUCTURE INPUT
LUMINANCE SIGNAL BY ADDING
RE-STRUCTURED LARGE REGION    — S247
LUMINANCE SIGNAL AND
DETAIL LUMINANCE SIGNAL
            |
            v
OUTPUT RE-STRUCTURED
INPUT LUMINANCE SIGNAL        — S248
            |
            v
COMPOSITION-PROCESS RE-
STRUCTURED INPUT
LUMINANCE SIGNAL AND         — S249
INPUT COLOR SIGNAL
            |
            v
OUTPUT RE-STRUCTURED
INPUT IMAGE DATA             — S250
            |
            v
         ( END )
```

FIG. 19

```
        ┌─────────────────────┐
        │   IMAGE RECORDING    │
        │     PROCESSING       │
        └──────────┬──────────┘
                   │
        ┌──────────▼──────────┐
        │ OBTAIN INPUT IMAGE DATA │──── S301
        └──────────┬──────────┘
                   │
        ┌──────────▼──────────┐
        │  COLOR CONVERSION   │
        │ PROCESS INPUT IMAGE │
        │  DATA AND GENERATE  │──── S302
        │  COLOR CONVERSION   │
        │  INPUT IMAGE DATA   │
        └──────────┬──────────┘
                   │
        ┌──────────▼──────────┐
        │ GENERATE COLOR CONVERSION │
        │ INPUT LUMINANCE SIGNAL AND │──── S303
        │ COLOR CONVERSION INPUT │
        │  COLOR SIGNAL FROM COLOR │
        │ CONVERSION INPUT IMAGE DATA │
        └──────────┬──────────┘
```

OBTAIN INPUT IMAGE DATA — S301

COLOR CONVERSION PROCESS INPUT IMAGE DATA AND GENERATE COLOR CONVERSION INPUT IMAGE DATA — S302

GENERATE COLOR CONVERSION INPUT LUMINANCE SIGNAL AND COLOR CONVERSION INPUT COLOR SIGNAL FROM COLOR CONVERSION INPUT IMAGE DATA — S303

COLOR CONVERSION INPUT LUMINANCE SIGNAL — S304

COLOR CONVERSION INPUT COLOR SIGNAL — S305

GENERATE COLOR CONVERSION LARGE REGION LUMINANCE SIGNAL AND COLOR CONVERSION DETAIL LUMINANCE SIGNAL FROM COLOR CONVERSION INPUT LUMINANCE SIGNAL — S306

COLOR CONVERSION LARGE REGION LUMINANCE SIGNAL — S307

COLOR CONVERSION DETAIL LUMINANCE SIGNAL — S308

LOCAL PRINTING PROCESS COLOR CONVERSION LARGE REGION LUMINANCE SIGNAL AND GENERATE COLOR CONVERSION -CONVERSION LARGE REGION LUMINANCE SIGNAL — S309

COLOR CONVERSION-CONVERSION LARGE REGION LUMINANCE SIGNAL — S310

GENERATE COLOR CONVERSION- DIFFERENCE LARGE REGION LUMINANCE SIGNAL FROM COLOR CONVERSION LARGE REGION LUMINANCE SIGNAL AND COLOR CONVERSION-CONVERSION LARGE REGION LUMINANCE SIGNAL — S311

RECORD COLOR CONVERSION-CONVERSION LARGE REGION LUMINANCE SIGNAL, COLOR CONVERSION-DIFFERENCE LARGE REGION LUMINANCE SIGNAL, COLOR CONVERSION DETAIL LUMINANCE SIGNAL AND COLOR CONVERSION INPUT COLOR SIGNAL IN A SPECIFIED MEDIUM — S312

END

FIG. 20

IMAGE PROCESSING

S321 — OBTAIN COLOR CONVERSION-DIFFERENCE LARGE REGION LUMINANCE SIGNAL, COLOR CONVERSION-CONVERSION LARGE REGION LUMINANCE SIGNAL, COLOR CONVERSION DETAIL LUMINANCE SIGNAL AND COLOR CONVERSION INPUT COLOR SIGNAL FROM A MEDIUM

S322

COLOR CONVERSION-DIFFERENCE LARGE REGION LUMINANCE SIGNAL

COLOR CONVERSION-CONVERSION LARGE REGION LUMINANCE SIGNAL

COLOR CONVERSION DETAIL LUMINANCE SIGNAL

COLOR CONVERSION INPUT COLOR SIGNAL

S323    S324    S325

S326 — ADD COLOR CONVERSION-CONVERSION LARGE REGION LUMINANCE SIGNAL AND COLOR CONVERSION DETAIL LUMINANCE SIGNAL

S327 — COMPOSE ADDITION RESULT OF COLOR CONVERSION INPUT COLOR SIGNAL AND GENERATE VISUAL IMAGE REFERRED DATA

S328 VISUAL IMAGE REFERRED DATA IS OK ?  OK → 1

NG

S329 THERE IS A REVISION REQUEST OF LOCAL PRINTING PROECSSING CHANGE/SHARPNESS EMPHANSIS PROCESSING / IMAGE PROCESSING ?

LOCAL PRINTING PROCESSING

IMAGE PROCESSING

SHARPNESS EMPHASIS PROCESSINGN

S330 — CHANGE OF LOCAL PRINTING PROCESSING

S331 — SHARPNESS PROCESS COLOR CONVERSION DETAIL LUMINANCE SIGNAL

S332 — IMAGE PROCESS COLOR CONVERSION INPUT COLOR SIGNAL

S333 — ADD CHANGED COLOR CONVERSION LARGE REGION LUMINANCE SIGNAL AND CHANGED COLOR CONVERSION DETAIL LUMINANCE SIGNAL AND GENERATE CHANGED COLOR CONVERSION INPUT LUMINANCE SIGNAL

S334 — COMPOSE CHANGED COLOR CONVERSION INPUT LUMINANCE SIGNAL AND CHANGED COLOR CONVERSION INPUT COLOR SIGNAL AND GENERATE CHANGED VISUAL IMAGE REFERRED DATA

1

END

# FIG. 21

```
        ( IMAGE PROCESSING )
                 │
                 ▼
┌─────────────────────────────────────────┐
│ OBTAIN COLOR CONVERSION-CONVERSION LARGE │
│ REGION LUMINANCE SIGNAL, COLOR           │
│ CONVERSION-DIFFERENCE LARGE REGION       │──── S341
│ LUMINANCE SIGNAL, COLOR CONVERSION       │
│ DETAIL LUMINANCE SIGNAL AND COLOR        │
│ CONVERSION INPUT COLOR SIGNAL FROM A MEDIUM │
└─────────────────────────────────────────┘
```

S342

| COLOR CONVERSION -CONVERSION LARGE REGION LUMINANCE SIGNAL | COLOR CONVERSION -DIFFERENCE LARGE REGION LUMINANCE SIGNAL | COLOR CONVERSION DETAIL LUMINANCE SIGNAL | COLOR CONVERSION INPUT COLOR SIGNAL |
|---|---|---|---|

S343   S344   S345

S346 — ADD COLOR CONVERSION-CONVERSION LARGE REGION LUMINANCE SIGNAL AND COLOR CONVERSION-DIFFERENCE LARGE REGION LUMINANCE SIGNAL AND RE-STRUCTURE COLOR CONVERSION LARGE REGION LUMINANCE SIGNAL

ADD RE-STRUCTURED COLOR CONVERSION LARGE REGION LUMINANCE SIGNAL AND COLOR CONVERSION DETAIL LUMINANCE SIGNAL — S347

OUTPUT RE-STRUCTURED COLOR CONVERSION INPUT LUMINANCE SIGNAL — S348

COMPOSITION PROCESS RE-STRUCTURED COLOR CONVERSION INPUT LUMINANCE SIGNAL AND COLOR CONVERSION INPUT COLOR SIGNAL — S349

OUTPUT RE-STRUCTURD COLOR CONVERSION INPUT IMAGE DATA — S350

CONDUCT INVERSE CONVERSION PROCESSING TO COLOR CONVERSION PROCESSING, ON RE-STRUCTURED COLOR CONVERSION INPUT IMAGE DATA — S351

OUTPUT RE-STRUCTURD INPUT IMAGE DATA — S352

( END )

# FIG. 22

```
              ┌─────────────┐
              │    START    │
              └─────────────┘
                     │
                     ▼
        ┌────────────────────────┐
        │  OBTAIN COLOR SPACE     │──── S401
        │     INFORMATION         │
        └────────────────────────┘
                     │
                     ▼          S402
                  ╱──────╲
                 ╱        ╲         No
                ╱  sRGB?   ╲──────────────────────┐
                ╲          ╱                        │
                 ╲        ╱                         │
                  ╲──────╱  S403          S404      │
              Yes │                                 │
                  ▼                                 ▼
     ┌──────────────────────┐        ┌──────────────────────┐
     │   PRODUCE LARGE      │        │   PRODUCE COLOR-     │
     │  REGION LUMINANCE    │        │  CONVERTED LARGE     │
     │  SIGNAL AND DETAIL   │        │  REGION LUMINANCE    │
     │  LUMINANCE SIGNAL    │        │  SIGNAL AND COLOR-   │
     │  INSTEAD OF LARGE    │        │  CONVERTED DETAIL    │
     │  REGION SIGNAL AND   │        │  LUMINANCE SIGNAL    │
     │   DETAIL SIGNAL      │        │  INSTEAD OF LARGE    │
     └──────────────────────┘        │  REGION SIGNAL AND   │
                  │                   │   DETAIL SIGNAL      │
                  │                   └──────────────────────┘
                  ▼                              │
           ┌─────────────┐                       │
           │     END     │◄──────────────────────┘
           └─────────────┘
```

# FIG. 23

```
        ┌─────────────┐
        │    START    │
        └──────┬──────┘
               │
               ▼
   ┌───────────────────────────┐
   │  OBTAIN IMAGE RESOLUTION   │ ~ S411
   │  INFORMATION OF IMAGE DATA │
   └───────────┬───────────────┘
               │
               ▼
   ┌───────────────────────────┐
   │  SET FILTER CHARACTERISTIC │
   │  OF LOW-PASS FILTER IN     │ ~ S412
   │  ACCORDANCE WITH IMAGE     │
   │  RESOLUTION INFORMATION    │
   └───────────┬───────────────┘
               │
               ▼
        ┌─────────────┐
        │     END     │
        └─────────────┘
```